(19) Europäisches Patentamt
European Patent Office
Office européen des brevets

(11) EP 2 006 071 B1

(12) **EUROPEAN PATENT SPECIFICATION**

(45) Date of publication and mention of the grant of the patent:
**22.02.2012 Bulletin 2012/08**

(21) Application number: **07739456.7**

(22) Date of filing: **23.03.2007**

(51) Int Cl.:
***B29C 47/14*** *(2006.01)* ***C08J 5/18*** *(2006.01)*
***C08L 23/04*** *(2006.01)* ***B29K 23/00*** *(2006.01)*
***B29L 7/00*** *(2006.01)*

(86) International application number:
**PCT/JP2007/056015**

(87) International publication number:
**WO 2007/111249 (04.10.2007 Gazette 2007/40)**

# (54) PROCESS FOR PRODUCING SHAPED ARTICLE BY T-DIE MOLDING

VERFAHREN ZUR HERSTELLUNG EINES FORMKÖRPERS DURCH BREITSCHLITZDÜSENFORMEN

processus pour produire un article profilé par un moulage à matrice en T

(84) Designated Contracting States:
**DE**

(30) Priority: **27.03.2006 JP 2006085693**
**28.03.2006 JP 2006088201**
**29.03.2006 JP 2006092139**
**31.03.2006 JP 2006099463**

(43) Date of publication of application:
**24.12.2008 Bulletin 2008/52**

(73) Proprietor: **Mitsui Chemicals, Inc.**
**Tokyo 105-7117 (JP)**

(72) Inventors:
- **UOSAKI, Hirotaka**
**Sodegaura-shi, Chiba 299-0265 (JP)**
- **KAWABE, Kuniaki**
**Sodegaura-shi, Chiba 299-0265 (JP)**
- **YASUI, Motoyasu**
**Sodegaura-shi, Chiba 299-0265 (JP)**
- **KUROKI, Hideki**
**Sodegaura-shi, Chiba 299-0265 (JP)**
- **SUZUKI, Terufumi**
**Sodegaura-shi, Chiba 299-0265 (JP)**
- **NAKAMURA, Hideo**
**Koga City, Ibaraki 306-0213 (JP)**
- **AMADA, Yasushi**
**Tokyo 104-0031 (JP)**

(74) Representative: **HOFFMANN EITLE**
**Patent- und Rechtsanwälte**
**Arabellastraße 4**
**81925 München (DE)**

(56) References cited:
**EP-A2- 1 179 562** **JP-A- 2002 234 125**
**JP-A- 2003 335 869** **JP-A- 2003 528 948**
**JP-A- 2004 059 867** **JP-A- 2004 059 868**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 006 071 B1

## Description

The present invention relates to a process for producing a molded article by T-die molding and a process for producing a secondary molded article by further fabricating a molded article obtained by the production process. More specifically, the present invention relates to a process for producing a molded article by T-die molding using polyethylene or polypropylene which has a specific density range, or a polypropylene resin mixture in which an olefinic elastomer is added to polypropylene and a specific polyethylene wax as raw materials. The present invention also relates to a process for producing a secondary molded article by vacuum molding a molded article obtained by the production process.

[BACKGROUND ART]

A thermoplastic resin such as polyethylene, polypropylene or the like has been conventionally molded, by T-die molding, into a molded article such as a film, a sheet or the like, which has been used for various applications. In addition, a polypropylene resin mixture in which an olefinic elastomer is added to polypropylene has also been molded, by T-die molding, into a molded article such as a film, a sheet and the like, which has been used for various applications. Recently, in such a process for producing a molded article by T-die molding, the improvement in productivity has been further strongly demanded.

As a general process for improving the productivity in molding such as T-die molding and the like, there is a known process in which a molding auxiliary agent is added and molding is then performed. For example, a process of molding in which a molding auxiliary agent such as an oil, a polyethylene wax and the like is added to a thermoplastic resin to be molded, and the mixture is then molded (for example, Patent Documents 1 and 2) has been studied.

When polyethylene, polypropylene or a polypropylene resin mixture and the like are subjected to T-die molding using a conventional molding auxiliary agent, the moldability itself tends to be improved. However, the resulting molded article is often deteriorated in properties, such as mechanical properties, optical properties such as transparency, gloss and the like, and bleeding out often occurs. Therefore, application of the process to a molded article such as a film, a sheet and the like has a problem depending on the application.

In addition, a molded article such as a film, a sheet and the like of polyethylene, polypropylene or a polypropylene resin mixture or the like, which is obtained by the T-die molding, is further subjected to fabrication such as vacuum molding and the like, and the resulting molded article may be used for various applications as a secondary molded article. However, if a conventional molding auxiliary agent as mentioned above is added, the mechanical properties of the resulting secondary molded article often deteriorate. In addition, for example, the formability at the time of vacuum molding sometimes became a problem.

[Patent Document 1] Japanese Patent Application Publication No. H05(1993)-80492

[Patent Document 2] Japanese Patent Publication Laid-Open No. 2003-528948

[DISCLOSURE OF THE INVENTION]

[PROBLEMS TO BE SOLVED BY THE INVENTION]

An object of the present invention is to solve the problems in the conventional technique. Specifically, an object of the invention is to provide a process for producing a molded article of polyethylene, polypropylene, or a polypropylene resin mixture in which an olefinic elastomer is added to polypropylene, without impairing properties such as transparency, optical properties, mechanical properties and the like of the resulting molded article, while improving the productivity in the T-die molding of a polyolefinic resin. Another object of the present invention is to provide a process for producing a secondary molded article by vacuum molding the molded article with high formability.

[MEANS TO SOLVE THE PROBLEMS]

The present inventors have studied the problems and have found that when a molded article is produced by T-die molding using a specific polyethylene wax, and polyethylene or polypropylene which has a specific density range, or a polypropylene resin mixture in which an olefinic elastomer is added to polypropylene as raw materials, the productivity is improved. The inventors have also found that in addition to the improvement of the productivity, the resulting molded article is excellent in properties such as transparency, optical properties, mechanical properties and the like, and further, the resulting molded article may be vacuum molded with high formability. The present inventers have thus completed the present invention.

That is, processes for producing a molded article of the present invention include the following production methods (1) to (8).

[1] A process for producing a molded article by T-die molding a mixture comprising a polyolefinic resin and a polyethylene wax, the polyethylene wax having a density of 880 to 980 (kg/$m^3$) as measured by a density gradient tube method in accordance with JIS K7112 and a number average molecular weight (Mn) of 500 to 4,000 in terms of polyethylene as determined by gel permeation chromatography (GPC) and satisfying the relationship shown by the following expression (I):

$$B \leq 0.0075 \times K \ldots (I)$$

(In the above expression (I), B is a content ratio (% by weight) of components having a molecular weight of 20,000 or more in terms of polyethylene in the polyethylene wax as determined by gel permeation chromatography and K is a melt viscosity (mPa·s) of the polyethylene wax at 140°C).

[2] The process for producing a molded article by T-die molding described in [1], wherein the polyethylene wax further satisfies the relationship shown by the following expression (II):

$$A \leq 230 \times K^{(-0.537)} \ldots (II)$$

(In the expression (II), A is a content ratio (% by weight) of the components having a molecular weight of 1,000 or less in terms of polyethylene in the polyethylene wax as determined by gel permeation chromatography and K is a melt viscosity (mPa·s) of the polyethylene wax at 140°C).

[3] The process for producing a molded article by T-die molding described in [1] or [2], wherein the polyolefinic resin is polyethylene (1) having a density of 900 (kg/$m^3$) or more to less than 940 (kg/$m^3$) as measured by a density gradient tube method in accordance with JIS K7112 and an MI of 0.01 to 100 g/10 min as measured at 190°C under a test load of 21.18 N in accordance with JIS K7210.

[4] The process for producing a molded article by T-die molding described in [1] or [2], wherein the polyolefinic resin is polyethylene (2) having a density of 940 to 980 (kg/$m^3$) as measured by the density gradient tube method in accordance with JIS K7112 and an MI of 0.01 to 100 g/10 min as measured at 190°C under a test load of 21.18 N in accordance with JIS K7210, and the polyethylene wax has a number average molecular weight (Mn) of 500 to 3,000 in terms of polyethylene as determined by gel permeation chromatography (GPC).

[5] The process for producing a molded article by T-die molding described in [1] or [2], wherein the polyolefinic resin is polypropylene (1) having an MI of 0.01 to 100 g/10 min as measured at 230°C under a test load of 21.18 N in accordance with JIS K7210, and the polyethylene wax has a density of 890 to 950 (kg/$m^3$) as measured by a density gradient tube method in accordance with JIS K7112 and a number average molecular weight (Mn) of 700 to 4,000 in terms of polyethylene as determined by gel permeation chromatography (GPC).

[6] The process for producing a molded article by T-die molding described in [1] or [2], wherein the polyolefinic resin is a resin mixture comprising 55 to 95% by weight of polypropylene (2) and 5 to 45% by weight of an olefinic elastomer based on the total 100% by weight of the polypropylene (2) and the olefinic elastomer and the polyethylene wax has a density of 880 to 920 (kg/$m^3$) as measured by a density gradient tube method in accordance with JIS K7112.

[7] The process for producing a molded article by T-die molding described in any of [1] to [6], wherein a mixture comprising 0.01 to 10 parts by weight of the polyethylene wax per 100 parts by weight of the polyolefinic resin is used.

[8] A process for producing a secondary molded article by vacuum molding using a molded article obtained from the production process described in any of [1] to [7].

A secondary molded article may be produced by vacuum molding using a molded article obtained from the production processes.

[EFFECTS OF THE INVENTION]

According to the process for producing a molded article of the present invention, in the case of using the polyethylene (1) as a raw material, the productivity of polyethylene is excellent at the time of T-die molding. Further, when the polyethylene (1) is subjected to T-die molding, a molded article of the polypropylene (1) is obtained without impairing the optical properties such as transparency, gloss and the like which are inherent in the polyethylene (1) itself as well as the mechanical properties.

In the case of using the polyethylene (2) as a raw material, the productivity of polyethylene is excellent at the time of T-die molding, and a molded article of the polyethylene (2) obtained by the T-die molding is excellent in mechanical

properties. In addition, high formability of the molded article enables the molded article to be suitably used for vacuum molding.

In the case of using the polypropylene (1) as a raw material, the productivity of polypropylene is excellent at the time of T-die molding. In addition, when the polypropylene (1) is subjected to T-die molding, a molded article of the polypropylene (1) is obtained without impairing the mechanical properties and optical properties. Further, high formability of the molded article enables the molded article to be suitably used for vacuum molding.

In the case of using a resin mixture of the polypropylene (2) and an olefinic elastomer as a raw material, the productivity of a polypropylene resin composition is excellent at the time of T-die molding. Further, when the resin mixture is subjected to T-die molding, a molded article of the resin composition is obtained with mechanical properties and optical properties, which are not substantially inferior to those of a molded article obtained by performing molding without adding a wax. In addition, excellent formability of the molded article enables the molded article to be suitably used for vacuum molding.

[BEST MODE FOR CARRYING OUT THE INVENTION]

Hereinafter, the present invention is explained in detail.

Firstly, the raw materials used for T-die molding of the present invention are explained.

[Polyethylene]

In the present invention, the term "polyethylene" refers to a homopolymer of ethylene or a copolymer of ethylene and an α-olefin, or a blended product thereof. The polyethylene has a density of 900 to 980 (kg/$m^3$) as measured by the density gradient tube method in accordance with JIS K7112 and an MI of 0.01 to 100 g/10 min as measured at 190°C under a test load of 21.18 N in accordance with JIS K7210.

The term "polyethylene (1)" refers to a homopolymer of ethylene or a copolymer of the ethylene and an α-olefin, or a blended product thereof. The polyethylene (1) has a density of 900 (kg/$m^3$) or more to less than 940 (kg/$m^3$), and an MI of 0.01 to 100 g/10 min as measured at 190°C under a test load of 21.18 N in accordance with JIS K7210.

In addition, the polyethylene (1) is not particularly limited as long as it has a density of 900 (kg/$m^3$) or more to less than 940 (kg/$m^3$). However, there may be specifically mentioned low density polyethylene, medium density polyethylene, linear low density polyethylene, ultra low density polyethylene, or a blended product thereof.

The above term "polyethylene (2)" refers to a homopolymer of ethylene or a copolymer of the ethylene and an α-olefin, or a blended product thereof. The polyethylene (2) has a density of 940 to 980 (kg/$m^3$) and an MI of 0.01 to 100 g/10 min as measured at 190°C under a test load of 21.18 N in accordance with JIS K7210.

In addition, the polyethylene (2) is not particularly limited as long as it has a density of 940 to 980 (kg/$m^3$). However, there may be specifically mentioned high density polyethylene or a blended product thereof.

In the present invention, the measurement conditions of the MI and the density of polyethylene are as follows.

(MI)

The MI is measured at 190°C under a test load of 21.18 N in accordance with JIS K7210.

The above polyethylene (1) preferably has an MI (JIS K7210: 190°C) of from 0.1 to 20.0 g/10 min and more preferably from 0.5 to 15.0 g/10 min. The polyethylene (1) with an MI within the range gives a molded article which is excellent in balance between moldability and mechanical.

The above polyethylene (2) preferably has an MI (190°C) of from 0.01 to 2.0 g/10 min and more preferably from 0.01 to 1.5 g/10 min. The polyethylene (2) with an MI within the range gives a molded article which is excellent in balance between moldability and mechanical strength.

(Density)

The density is measured by the density gradient tube method in accordance with JIS K7112.

The polyethylene (1) used in the present invention has a density of 900 (kg/$m^3$) or more to less than 940 (kg/$m^3$) and preferably from 900 to 930 (kg/$m^3$). If the polyethylene (1) has a density within the range, the obtainable molded article is excellent in balance among heat-sealing property, rigidity, impact resistance and the like.

The polyethylene (2) used in the present invention has a density of 940 to 980 (kg/$m^3$) and preferably 950 to 980 (kg/$m^3$). If polyethylene (2) has a density within the range, the obtainable molded article is excellent in rigidity and impact resistance.

The form of the above polyethylene is not particularly limited, but is typically particles in the form of pellets or tablets.

[Polypropylene]

The polypropylene (1) used in the present invention specifically refers to a homopolymer of propylene, or a copolymer of propylene and an α-olefin (excluding propylene), or a blended product thereof,
which has an MI of 0.01 to 100 g/10 min as measured at 230°C under a test load of 21.18 N in accordance with JIS K7210 and a density of 900 to 910 (kg/$m^3$) as measured by the density gradient tube method in accordance with JIS K7112.
Specific examples of the polypropylene (1) include a propylene homopolymer, a polypropylene block copolymer or a polypropylene random copolymer obtained by copolymerizing propylene and an α-olefin (excluding propylene), or a blended product thereof.
In the present invention, the measurement condition of the MI of polypropylene (1) is as follows.

(MI)

The MI is measured at 230°C under a test load of 21.18 N in accordance with JIS K7210.
The form of the above polypropylene (1) is not particularly limited, but is typically particles in the form of pellets or tablets.
The polypropylene (2) specifically refers to a homopolymer of propylene, or a copolymer of propylene and a small amount of an α-olefin (excluding propylene), or a blended product thereof,
which has an MI of 0.01 to 100 g/10 min as measured at 230°C under a test load of 21.18 N in accordance with JIS K7210 and a density of 910 (kg/$m^3$) or higher as measured by the density gradient tube method in accordance with JIS K7112.
Specific examples of the polypropylene (2) include a propylene homopolymer, a polypropylene block copolymer or a polypropylene random copolymer obtained by copolymerizing propylene and an α-olefin (excluding propylene), or a blended product thereof.
In the present invention, the measurement condition of the MI of polypropylene (2) is as follows.

(MI)

The MI is measured at 230°C under a test load of 21.18 N in accordance with JIS K7210.
The form of the above polypropylene (2) is not particularly limited, but is typically particles in the form of pellets or tablets.

[Olefinic Elastomer]

The olefinic elastomer in the present invention refers to:

an ethylene-α-olefin random copolymer having an MI of 0.01 to 100 g/10 min as measured at 190°C under a test load of 21.18 N in accordance with JIS K7210 and a density of 850 (kg/$m^3$) or higher to less than 900 (kg/$m^3$) as measured by the density gradient tube method in accordance with JIS K7112;
a propylene-α-olefin random copolymer obtained by copolymerizing propylene and an α-olefin having 4 or more carbon atoms, which has an MI of 0.01 to 100 g/10 min as measured at 230°C under a test load of 21.18 N in accordance with JIS K7210 and a density of 850 (kg/$m^3$) or higher to less than 910 (kg/$m^3$) as measured by the density gradient tube method in accordance with JIS K7112;
an ethylene/α-olefin/non-conjugated polyene random copolymer having an MI of 0.01 to 100 g/10 min as measured at 190°C under a test load of 21.18 N in accordance with JIS K7210 and a density of 850 (kg/$m^3$) or higher to less than 900 (kg/$m^3$) as measured by the density gradient tube method in accordance with JIS K7112; or a mixture thereof.

The ethylene-α-olefin random copolymer is typically a random copolymer of ethylene and an α-olefin having 3 to 20 carbon atoms and is a rubber. The α-olefins having 3 to 20 carbon atoms include propylene, 1-butene, 1-pentene, 1-hexene, 4-methyl-1-pentene, 1-heptene, 1-octene, 1-decene, 1-dodecene, 1-tetradecene, 1-hexadecene, 1-eicosene, and the like. Among these α-olefins, propylene, 1-butene, 1-hexene and 1-octene are preferred. These α-olefins may be used alone or in combination of two or more kinds.
The ethylene-α-olefin copolymer is usually a polymer obtained by copolymerizing ethylene of in the range of 90 to 50 mol % and an α-olefin of in the range of 10 to 50 mol %.
In addition, the ethylene-α-olefin copolymer preferably has an MI (JIS K7210: 190°C, test load, 21.18 N) of 0.3 to 20 g/10 min. The ethylene-α-olefin copolymer with an MI within the range gives a molded article which is excellent in balance between moldability and mechanical strength.
The propylene-α-olefin random copolymer is usually a random copolymer of propylene and an α-olefin having

4 to 20 carbon atoms and is a rubber. The α-olefins having 4 to 20 carbon atoms include 1-butene, 1-pentene, 1-hexene, 4-methyl-1-pentene, 1-heptene, 1-octene, 1-decene, 1-dodecene, 1-tetradecene, 1-hexadecene, 1-eicosene, and the like. These α-olefins may be used alone or in combination of two or more kinds.

The propylene-α-olefin random copolymer is usually a polymer obtained by copolymerizing ethylene of in the range of 90 to 55 mol % and an α-olefin of in the range of 10 to 45 mol %.

In addition the propylene-α-olefin random copolymer preferably has an MI (JIS K7210: 230°C, test load, 21.18 N) of 0.3 to 20 g/10 min. The propylene-α-olefin random copolymer with an MI within the range gives a molded article which is excellent in balance between moldability and mechanical strength.

The ethylene/α-olefin/non-conjugated polyene random copolymer is usually a random copolymer of ethylene, an α-olefin having 3 to 20 carbon atoms and a non-conjugated polyene and is a rubber. The α-olefins include the same as in the case of the ethylene-α-olefin random copolymer.

The non-conjugated polyenes include a noncyclic diene such as 5-ethylidene-2-norbornene, 5-propylidene-5-norbornene, dicyclopentadiene, 5-vinyl-2-norbornene, 5-methylene-2-norbornene, 5-isopropylidene-2-norbornene, norbornadiene and the like;

a chain non-conjugated diene such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadiene, 7-methyl-1,6-octadiene and the like;

a triene such as 2,3-diisopropylidene-5-norbornene and the like; and others. Among these non-conjugated dienes, 1,4-hexadiene, dicyclopentadiene and 5-ethylidene-2-norbornene are preferably used.

If the non-conjugated polyene is the compound described above, a molded article excellent in impact resistance and mechanical strength is obtained.

The ethylene/α-olefin/non-conjugated polyene random copolymer is usually a copolymer obtained by copolymerizing ethylene of in the range of 90 to 30 mol %, an α-olefin of in the range of 5 to 45 mol % and a non-conjugated polyene of in the range of 5 to 25 mol %.

The ethylene/α-olefin/non-conjugated polyene random copolymer preferably has an MI (JIS K7210: 190°C, test load, 21.18 N) of from 0.05 to 100 g/10 min and more preferably from 0.1 1 to 10 g/10 min. The ethylene/α-olefin/non-conjugated polyene random copolymer with an MI within the range gives a molded article excellent in moldability and mechanical strength.

The ethylene/α-olefin/non-conjugated polyene random copolymers include an ethylene-propylene-diene three-dimensional copolymer (EPDM) and the like.

[Polyethylene Wax]

The polyethylene wax in the present invention refers to a homopolymer of ethylene, a copolymer of ethylene and an α-olefin, or a blended product thereof. The polyethylene wax has a number average molecular weight (Mn) of 500 to 4,000 in terms of polyethylene as determined by gel permeation chromatography (GPC).

The number average molecular weight (Mn) of the polyethylene wax in terms of polyethylene is determined by gel permeation chromatography (GPC) under the following conditions.

(Number Average Molecular Weight (Mn))

The number average molecular weight is determined by the GPC measurement. The measurement was performed under the following conditions. In addition, the number average molecular weight is determined based on the following conversion method by preparing a calibration curve using a commercially available monodisperse standard polystyrene.

Apparatus: Gel permeation Chromatograph Alliance GPC 2000 System (manufactured by Waters Corporation)
Solvent: o-dichlorobenzene
Column: TSK gel column (manufactured by Tosoh Corporation) × 4
Flow rate: 1.0 mL/min
Sample: 0.15 mg/mL o-dichlorobenzene solution
Temperature: 140°C
Molecular weight conversion: In terms of PE/universal calibration method

In addition, for the calculation of the universal calibration, the following coefficients of Mark-Houwink viscosity equations are used.

The coefficient of polystyrene (PS): KPS=1.38 x $10^{-4}$, aPS=0.70

The coefficient of polyethylene (PE): KPE=5.06 x $10^{-4}$, aPE=0.70

The polyethylene wax with the composition and molecular weight as described above tends to improve the

productivity at the time of molding.

If the polyolefinic resin of a raw material of the present invention is the polyethylene (1), the polyethylene wax employed is a homopolymer of ethylene, a copolymer of ethylene and an $\alpha$-olefin, or a blended product thereof, which has a number average molecular weight (Mn) of 500 to 4,000.

The polyethylene wax has a density of 890 to 980 (kg/m$^3$).

If the polyolefinic resin of a raw material of the present invention is the polyethylene (2), the polyethylene wax employed is a homopolymer of ethylene, a copolymer of ethylene and an $\alpha$-olefin, or a blended product thereof, which has a number average molecular weight (Mn) of 500 to 3,000.

The polyethylene wax has a density of 890 to 980 (kg/m$^3$).

If the polyolefinic resin of a raw material of the present invention is the polypropylene (1), the polyethylene wax employed is a homopolymer of ethylene, a copolymer of ethylene and an $\alpha$-olefin, or a blended product thereof, which has a number average molecular weight (Mn) of 700 to 4,000.

The polyethylene wax has a density of 890 to 950 (kg/m$^3$).

If the polyolefinic resin of a raw material of the present invention is a resin mixture of the polypropylene (2) and an olefinic elastomer, the polyethylene wax employed is a homopolymer of ethylene, a copolymer of ethylene and an $\alpha$-olefin, or a blended product thereof, which has a number average molecular weight (Mn) of 500 to 4,000.

The polyethylene wax has a density of 880 to 920 (kg/m$^3$).

If the density of the polyethylene wax is controlled within the range by using the polyolefinic resin that is a raw material, the productivity at the time of molding tends to be improved. The density of the polyethylene wax was a value measured by the density gradient tube method in accordance with JIS K7112.

The polyethylene wax of the present invention is characterized in that there is a specific relationship between the molecular weight and the melt viscosity, which is shown by the following expression (I).

$$B \leq 0.0075 \times K \ldots \text{(I)}$$

In the above expression (I), B is a content ratio on a weight basis (% by weight) of the components having a molecular weight of 20,000 or more in terms of polyethylene in the polyethylene wax as determined by gel permeation chromatography. Further, K is a melt viscosity (mPa·s) of the polyethylene wax at 140°C as measured by a Brookfield viscometer (B-type).

If the polyethylene wax satisfying the condition of the expression (I) is used for the polyethylene (1), a molded article tends to be obtained without impairing the optical properties such as transparency, gloss and the like, and the mechanical properties which are inherent in the polyethylene (1).

If the polyethylene wax satisfying the condition of the expression (I) is used for the polyethylene (2), the obtainable molded article is excellent in mechanical properties and tends to be also excellent in formability in vacuum molding.

If the polyethylene wax satisfying the condition of the expression (I) is used for the polypropylene (1), a molded article tends to be obtained without impairing the mechanical properties inherent in the polypropylene (1).

If the polyethylene wax satisfying the condition of the expression (I) is used for a resin mixture of the polypropylene (2) and an olefinic elastomer, a molded article tends to be obtained without impairing the optical properties and mechanical properties.

If a polyethylene wax having a low melt viscosity is mixed with a polyolefinic resin such as polyethylene, polypropylene or the like, and the mixture is then subjected to T-die molding, the viscosity of the whole mixture is generally decreased. Therefore, the productivity in molding tends to be improved.

However, even if the productivity is improved in this manner, when the polyolefinic resin is the polyethylene (1), the resulting molded article may be impaired in optical properties such as transparency, gloss and the like and mechanical properties which are inherent in polyethylene.

When the polyolefinic resin is the polyethylene (2), mechanical properties such as tensile strength at break, tensile elongation and the like may be insufficient in the resulting molded article and there may be a problem with formability in some cases when the resulting molded article is vacuum molded.

When the polyolefinic resin is the polypropylene (1), mechanical properties may be insufficient in the resulting molded article in some cases.

When the polyolefinic resin is a resin mixture of the polypropylene (2) and an olefinic elastomer, optical properties and mechanical properties may be deteriorated in the resulting molded article in some cases.

The present inventors have studied the above problems and found that the following is extremely important for the optical properties such as transparency, gloss and the like, and mechanical properties such as tensile strength at break, tensile elongation and the like of a molded article such as a sheet, a film and the like obtained by T-die molding. Namely, the ratio of the components having a molecular weight of 20,000 or more in the polyethylene waxes used is

extremely important in the relationship with the melt viscosity. Although the details are not clear, the mechanism is presumed as follows. In the case that a polyethylene wax is melt-kneaded with a polyolefinic resin such as polyethylene, polypropylene or a resin mixture in which an olefinic elastomer is added to polypropylene , the melting behavior of the components having a molecular weight of 20,000 or more is specific among the whole polyethylene wax. Considering the melt viscosity of the whole polyethylene wax, it is presumed that unless the content ratio of the components having a molecular weight of 20, 000 or more in the polyethylene wax is decreased to a certain ratio or lower, the polyethylene wax may not be well dispersed in the polyolefinic resin. This is presumed to exert an influence on the properties of the molded article and the molding properties in secondary molding, in each case that the following raw material is used.

Specifically, when the polyethylene (1) is used, it is presumed that the polyethylene wax may not be well dispersed in the polyethylene (1) and this exerts an influence on the optical properties, mechanical properties and heat fusion properties of a final molded article.

When the polyethylene (2) is used, it is presumed that the polyethylene wax may not be well dispersed to the polyethylene (2) and this exerts an influence on the mechanical properties of a final molded article and further the molding properties in secondary molding.

When the polypropylene (1) is used, it is presumed that the polyethylene wax may not be well dispersed in the polypropylene (1) and this exerts an influence on the mechanical properties of a final molded article.

When a resin mixture of the polypropylene (2) and an olefinic elastomer is used, it is presumed that the polyethylene wax may not be well dispersed in the polypropylene and this exerts an influence on the optical properties and mechanical properties of a final molded article.

A polyethylene wax having a B value within the range may be prepared by using a metallocene catalyst. Among the metallocene catalysts, a metallocene catalyst having a non-bridged ligand is preferred. Such metallocene catalyst may be exemplified by a metallocene compound represented by the general formula (1) described later.

Further, the B value may be controlled by the polymerization temperature. For example, when a polyethylene wax is produced using a metallocene catalyst described later, the polymerization temperature is typically of in the range of 100 to 200°C. However, from the viewpoint of producing a polyethylene wax with the above B value, the polymerization temperature is preferably of in the range of 100 to 180°C and more preferably of in the range of 100 to 170°C.

The polyethylene wax of the present invention further preferably has a specific relationship between the molecular weight and the melt viscosity shown by the following expression (II).

$$A \leq 230 \times K^{(-0.537)} \quad \ldots \text{ (II)}$$

Here, in the expression (II), A is a content ratio on a weight basis (% by weight) of the components having a molecular weight of 1,000 or less in terms of polyethylene in the polyethylene wax as determined by gel permeation chromatography. Further, K is a melt viscosity (mPa-s) of the polyethylene wax at 140°C.

If a polyethylene wax satisfying the condition of the expression (II) is used for the polyethylene (1), a molded article tends to be obtained without impairing the optical properties such as transparency, gloss and the like, mechanical properties, and heat fusion properties which are inherent in the polyethylene (1). Further, bleeding out from the surface of the molded article obtained tends to be decreased.

If a polyethylene wax satisfying the condition of the expression (II) is used for the polyethylene (2), the obtainable molded article is excellent in mechanical properties and tends to be excellent in formability in vacuum molding. In addition, bleeding out from the surface of the molded article tends to be decreased.

If a polyethylene wax satisfying the condition of the expression (II) is used for the polypropylene (1), a molded article tends to be obtained without impairing the mechanical properties inherent in the polypropylene (1). In addition, bleeding out from the surface of the molded article tends to be decreased.

If a polyethylene wax satisfying the condition of the above expression (II) is used for a resin mixture of the polypropylene (2) and an olefinic elastomer, a molded article tends to be obtained without impairing the mechanical properties and optical properties. In addition, bleeding out from the surface of the molded article tends to be decreased.

As mentioned above, if a polyethylene wax having a low melt viscosity is mixed with a polyolefinic resin and the mixture is then subjected to T-die molding, the viscosity of the whole mixture is generally deceased. Therefore, the productivity in molding tends to be improved.

However, even if the productivity is improved, when the polyolefinic resin is the polyethylene (1), the obtainable molded article may be impaired in optical properties such as transparency, gloss and the like, mechanical properties, and heat fusion properties which are inherent in polyethylene in some cases. In addition, the obtainable molded article may have a problem with bleeding out from the surface in some cases.

When the polyolefinic resin is polyethylene (2), mechanical properties such as tensile strength at break, tensile elongation and the like may be insufficient in the obtainable molded article in some cases. Further, formability may be

insufficient and a drawdown may be caused in some cases when the molded article obtained is subjected to secondary molding, for example, vacuum molding in some cases.

When the polyolefinic resin is polypropylene (1), mechanical properties inherent in polypropylene may be impaired in the obtainable molded article in some cases. Further, there may be a problem with bleeding out from the surface of the molded article in some cases.

When the polyolefinic resin is a resin mixture of the polypropylene (2) and an olefinic elastomer, mechanical properties and optical properties may be impaired in the obtainable molded article in some cases. Further, there may be a problem with bleeding out from the surface of the molded article in some cases.

The present inventors have studied the problems and found that the following is extremely important for the mechanical properties and the like of a molded article such as a sheet, a film and the like obtained by T-die molding. Namely, the ratio of the components having a molecular weight of 1,000 or less in the polyethylene waxes used is extremely important in the relationship with the melt viscosity. Although the details are not clear, the mechanism is presumed as follows. In the case that a polyethylene wax is melt-kneaded with a polyolefinic resin, the components having a molecular weight of 1,000 or less is readily melted and the melting behavior is specific among the whole polyethylene wax. Considering the melt viscosity of the whole polyethylene wax, it is presumed that unless the content ratio of the components having a molecular weight of 1,000 or less are decreased to a certain ratio or lower, the polyethylene wax exerts an influence on the properties of a final molded article and the molding properties in secondary molding, in each case that the following raw material is used.

Specifically, when the polyethylene (1) is used, it is presumed that, unless the content ratio of the components having a molecular weight of 1,000 or less are decreased to a certain ratio or lower, the polyethylene wax penetrates to the surface. Further, it is also presumed that the ethylene wax causes the deterioration and the like in some cases and exerts an influence on the optical properties, mechanical properties, bleeding out and thermal adhesiveness of a final molded article and also the formability of the resulting molded article.

When the polyethylene (2) is used, it is presumed that, unless the content ratio of the components having a molecular weight of 1, 000 or less are decreased to a certain ratio or lower, the polyethylene wax penetrates to the surface. Further, it is also presumed that the polyethylene wax causes the deterioration and the like in some cases and exerts an influence on the mechanical properties of a final molded article and the molding properties in secondary molding such as vacuum molding and the like.

When the polypropylene (1) is used, it is presumed that, unless the content ratio of the components having a molecular weight of 1,000 or less are decreased to a certain ratio or lower, the polyethylene wax penetrates to the surface. Further it is also presumed that the polyethylene wax causes the deterioration and the like in some cases and exerts an influence on the mechanical properties, optical properties and bleeding out of a final molded article.

When a resin mixture of the polypropylene (2) and an olefinic elastomer is used, it is presumed that, unless the content ratio of the components having a molecular weight of 1,000 or less are decreased to a certain ratio or lower, the polyethylene wax penetrates to the surface. Further it is also presumed that the polyethylene wax causes the deterioration in some cases and exerts an influence on the mechanical properties, optical properties and bleeding out of a final molded article.

A polyethylene wax having an A value within the range may be prepared by using a metallocene catalyst. Among the metallocene catalysts, a metallocene catalyst having a non-bridged ligand is preferred. Such metallocene catalyst may be exemplified by a metallocene compound represented by the general formula (1) described later.

Further, the above A value may be controlled by a polymerization temperature. For example, when a polyethylene wax is produced using a metallocene catalyst described later, the polymerization temperature is typically in the range of 100 to 200°C. However, from the viewpoint of producing a polyethylene wax with the above A value, the polymerization temperature is preferably in the range of 100 to 180°C and more preferably in the range of 100 to 170°C.

The above polyethylene wax has a number average molecular weight (Mn) of 500 to 4, 000. However, when the polyethylene (1) is used as the polyolefinic resin, the polyethylene wax has a number average molecular weight (Mn) from 500 to 4,000, preferably from 600 to 3, 800 and especially preferably from 700 to 3, 500. If the polyethylene wax has a number average molecular weight (Mn) within the range, the dispersion of the polyethylene wax to the polyethylene (1) tends to be more excellent in molding. In addition, since a tendency of increase in the extruder output and a tendency of decrease in the load in extrusion become more prominent, the productivity tends to more increase. Further, the obtainable molded article tends to have excellent transparency and surface characteristics, which are not inferior to those of a molded article obtained without adding the polyethylene wax.

In addition, if the polyethylene (2) is used as the polyolefinic resin, the polyethylene wax has a number average molecular weight (Mn) from 500 to 3,000, preferably from 700 to 3,000 and especially preferably from 800 to 3,000. If the polyethylene wax has a number average molecular weight (Mn) within the range, the dispersion of the polyethylene wax to the polyethylene (2) tends to be more excellent in molding. In addition, since a tendency of increase in the extruder output and a tendency of decrease in the load in extrusion become more prominent, the productivity tends to increase. Further, the obtainable molded article is more excellent in mechanical properties and tends to have surface characteristics,

which is not inferior to those of a molded article obtained without adding the polyethylene wax.

Further, if the polyethylene (1) is used as the polyolefinic resin, the polyethylene wax has a number average molecular weight (Mn) from 700 to 4,000. If the polyethylene wax has a number average molecular weight (Mn) within the range, the dispersion of the polyethylene wax to the polypropylene (1) tends to be excellent in molding. In addition, the extruder output tends to increase and the load in extrusion tends to decrease, and therefore the productivity tends to increase. Further, the obtainable molded article has a great tendency to have mechanical properties, which is not inferior to those of a molded article obtained without adding the polyethylene wax. In addition, the polyethylene wax preferably has a number average molecular weight (Mn) from 900 to 3,800. If the polyethylene wax has a number average molecular weight (Mn) within the preferable range, a molded article have a great tendency to be obtained without impairing the mechanical properties.

Further, if a resin mixture of polypropylene and an olefinic elastomer is used as the polyolefinic resin, the above polyethylene wax has a number average molecular weight (Mn) from 500 to 4,000.

The Mn of the polyethylene wax may be controlled by the polymerization temperature or the like. For example, when the polyethylene wax is produced using a metallocene catalyst described later, the polymerization temperature is typically in the range of 100 to 200°C. However, from the viewpoint of producing a polyethylene wax having an Mn within the suitable range, the polymerization temperature is preferably in the range of 100 to 180°C and more preferably in the range of 100 to 170°C.

In addition, the polyethylene wax has a density (D (kg/$m^3$)) from 880 to 980 (kg/$m^3$).

However, if the polyethylene (1) is used as a polyolefinic resin, the polyethylene wax has a density from 890 to 980 (kg/$m^3$), preferably from 895 to 960 (kg/$m^3$) and especially preferably from 895 to 945 (kg/$m^3$). If the polyethylene wax has a density (D) within the range, the dispersion of the polyethylene wax to the polyethylene (1) tends to be more excellent in molding. In addition, since a tendency of increase in the extruder output and a tendency of decrease in the load in extrusion become more prominent, the productivity tends to increase. Further, the obtainable molded article not only tends to have optical properties, which are not inferior to those of a molded article obtained without adding the polyethylene wax, but also have great tendency to have mechanical properties, which are not inferior to those of a molded article obtained without adding the polyethylene wax.

Further, if the polyethylene (2) is used as a polyolefinic resin, the polyethylene wax has a density (D(kg/$m^3$)) from 890 to 980 (kg/$m^3$), preferably from 900 to 960 (kg/$m^3$) and especially preferably from 910 to 950 (kg/$m^3$). If the polyethylene wax has a density (D) within the range, the dispersion of the polyethylene wax to the polyethylene (2) tends to be more excellent in molding. In addition, since a tendency of increase in the extruder output and a tendency of decrease in the load in extrusion become more prominent, the productivity tends to more increase. Further, the resulting molded article tends to be more excellent in mechanical properties, even compared to a molded article obtained without adding the polyethylene wax. Even when the molded article thus obtained is vacuum molded, it tends to be more excellent in formability.

In addition, if the polypropylene (1) is used as a polyolefinic resin, the polyethylene wax has a density (D (kg/$m^3$)) from 890 to 950 (kg/$m^3$). If the polyethylene wax has a density (D) within the range, the dispersion of the polyethylene wax to the polyethylene (1) tends to be excellent in molding. In addition, the extruder output tends to increase and the load in extrusion tends to decrease, and thus the productivity tends to increase. Further, the obtainable molded article tends to have mechanical properties, which are not inferior to those of a molded article obtained without adding the polyethylene wax. Further, when the polyethylene wax has a density exceeding the range, optical properties are likely to be deteriorated and bleeding out tends to occur, in the resulting molded article. Although the details are not clear, the mechanism is presumed as follows. When the polyethylene wax has a density exceeding the range, the density difference between the polyethylene wax and the polypropylene (1) becomes large. This causes deterioration of the compatibility of the polyethylene wax and the polypropylene (1). Therefore, the optical properties are likely to be deteriorated and bleeding out tends to occur, in the resulting molded article. In addition, the polyethylene wax preferably has a density (D) from 895 to 945 (kg/$m^3$). If the polyethylene wax has a density (D) within the suitable range, a molded article has a great tendency to be obtained without impairing optical properties. Further, when the polyethylene wax has a number average molecular weight (Mn) within the suitable range and a density (D) is within the suitable range, a molded article is obtained more without impairing the mechanical properties and optical properties.

In addition, if a resin mixture of polypropylene and an olefinic elastomer is used as a polyolefinic resin, the polyethylene wax has a density (D (kg/$m^3$)) from 880 to 920 (kg/$m^3$). If the polyethylene wax has a density (D) within the range and satisfies the above B value or the relationship between the A value and B value, the mechanical properties are not inferior to a polypropylene resin composition to which wax is not added. Further, the optical properties are likely to be not inferior to a polypropylene resin composition to which wax is not added, or improved even compared to a polypropylene resin composition to which wax is not added. In addition, if the polyethylene wax has a density within the range and satisfies the B value or the relationship between the A value and B value, the resulting molded article is also excellent in formability in vacuum molding.

When the polyethylene wax is a homopolymer of ethylene, the density of the polyethylene wax depends on

the number average molecular weight of the polyethylene wax. For example, if the molecular weight of the polyethylene wax is reduced, the density of the obtainable polymer may be controlled to be low. If the polyethylene wax is a copolymer of ethylene and an α-olefin, the density of the polyethylene wax depends on a measure of the number average molecular weight (Mn) and may be controlled by the amount of the α-olefin used to ethylene in polymerization and the kind of the α-olefin. For example, if the amount of the α-olefin used to ethylene is increased, the density of the obtainable polymer may be reduced.

From the viewpoint of the density of the polyethylene wax, preferred are an ethylene homopolymer, a copolymer of ethylene and an α-olefin having 3 to 20 carbon atoms, and a mixture thereof.

As the α-olefin used for producing a copolymer of the above ethylene and an α-olefin having 3 to 20 carbon atoms, preferred is an α-olefin having 3 to 10 carbon atoms, more preferred are propylene, 1-butene, 1-pentene, 1-hexene, 4-methyl-1-pentene and 1-octene, and especially preferred are propylene, 1-butene, 1-hexene and 4-methyl-1-pentene.

The amount of the α-olefin used for producing a copolymer of the ethylene and an α-olefin is preferably in the range of 0 to 20 mol %, more preferably in the range of 0.1 to 15 mol % and further more preferably in the range of 0.1 to 10 mol %, based on the total monomers to be used.

In addition, the density of the polyethylene wax may also be controlled by the polymerization temperature. For example, if a polyethylene wax is produced by using a metallocene catalyst described later, the polymerization temperature is typically 100 to 200°C. However, from the viewpoint of producing a polyethylene wax having a density in the preferable range, the polymerization temperature is preferably in the range of 100 to 180°C and more preferably in the range of 100 to 170°C.

Such polyethylene wax is solid at normal temperature and is a liquid having a low viscosity at 65 to 130°C.

In addition, the polyethylene wax has a crystallization temperature [Tc (°C)] measured by differential scanning calorimetry (DSC) and a density (D (kg/m$^3$ )) measured by the density gradient tube method, which preferably satisfy the relationship shown by the following expression (III):

$$0.501 \times D - 366 \geq Tc \ldots (III),$$

more preferably satisfy the relationship shown by the following expression (IIIa):

$$0.501 \times D - 366.5 \geq Tc \ldots (IIIa),$$

and further more preferably satisfy the relationship shown by the following expression (IIIb):

$$0.501 \times D - 367 \geq Tc \ldots (IIIb).$$

If the crystallization temperature (Tc) and the density (D) satisfy the relationship shown by the expressions in the polyethylene wax, the dispersibility of the polyethylene wax to the polyethylene tends to be improved.

A polyethylene wax satisfying the relationship shown by the expressions may be prepared by using a metallocene catalyst. Among the metallocene catalysts, a metallocene catalyst having a non-bridged ligand is preferred. Such metallocene catalyst may be exemplified by a metallocene compound represented by the general formula (1) described later.

Further, a polyethylene wax with the crystallization temperature and the density satisfying the relationship shown by the expression may be also prepared by controlling the polymerization temperature. For example, when a polyethylene wax is produced using a metallocene catalyst described later, the polymerization temperature is typically in the range of 100 to 200°C. However, from the viewpoint of producing a polyethylene wax with the B value described above, the polymerization temperature is preferably in the range of 100 to 180°C and more preferably in the range of 100 to 170°C.

As a suitable metallocene catalyst in the present invention, there may be mentioned, for example, an olefin polymerization catalyst composed of:

(A) a metallocene compound of a transition metal selected from Group 4 of the periodic table, and
(B) at least one or more kinds of compounds selected from

(b-1) an organoaluminum oxy-compound,
(b-2) a compound which reacts with the bridged metallocene compound (A) to form an ion pair, and
(b-3) an organoaluminum compound.

Hereinafter, these compounds are explained in detail.

<Metallocene Compound>

(A) Metallocene Compound of Transition Metal Selected from Group 4 of the Periodic Table

The metallocene compound forming a metallocene catalyst is a metallocene compound of a transition metal selected from Group 4 of the periodic table, and the specific examples of the metallocene compounds include a compound represented by the following general formula (1).

$$M^1Lx \qquad (1)$$

In the formula (1), $M^1$ is a transition metal selected from Group 4 of the periodic table, x is a valence of the transition metal $M^1$, and L is a ligand. Examples of the transition metals shown by $M^1$ include zirconium, titanium and hafnium. L is a ligand coordinated to the transition metal $M^1$, at least one of which is a ligand having a cyclopentadienyl skeleton. This ligand having a cyclopentadienyl skeleton may have a substituent. Examples of the ligands L having a cyclopentadienyl skeleton include an alkyl- or cycloalkyl-substituted cyclopentadienyl group such as a cyclopentadienyl group, a methylcyclopentadienyl group, an ethylcyclopentadienyl group, an n-, or i-propylcyclopentadienyl group, an n-, i-, sec-, or t-butylcyclopentadienyl group, a dimethylcyclopentadienyl group, a methylpropylcyclopentadienyl group, a methylbutylcyclopentadienyl group, and a methylbenzylcyclopentadienyl group and the like; an indenyl group; a 4,5,6,7-tetrahydroindenyl group; a fluorenyl group; and others. The hydrogen of the ligand having a cyclopentadienyl skeleton may be replaced by a halogen atom or a trialkylsilyl group, or the like.

When the metallocene compound has two or more ligands having a cyclopentadienyl skeleton as the ligand L, two of which having a cyclopentadienyl skeleton may be bonded to each other through an alkylene group such as ethylene, propylene and the like; a substituted alkylene group such as isopropylidene, diphenylmethylene and the like; a substituted silylene group such as a silylene group, a dimethylsilylene group, a diphenylsilylene group, a methylphenylsilylene group; or the others.

As the ligand L (ligand having no cyclopentadienyl skeleton) other than the ligand having a cyclopentadienyl skeleton, there may be mentioned a hydrocarbon group having 1 to 12 carbon atoms, an alkoxy group, an aryloxy group, a sulfonic acid-containing group ($-SO_3R^1$), a halogen atom, a hydrogen atom or the like (wherein, $R^1$ is an alkyl group, an alkyl group substituted with a halogen atom, an aryl group, an aryl group substituted with a halogen atom or an aryl group substituted with an alkyl group).

<Example of Metallocene Compound -1>

When the metallocene compound represented by the general formula (1) has a transition metal valence of, for example, 4, the metallocene compound (1) is more specifically represented by the following general formula (2):

$$R^2_kR^3_lR^4_mR^5_nM^1 \qquad (2).$$

In the formula (2), $M^1$ is a transition metal selected from Group 4 of the periodic table, $R^2$ is a group (ligand) having a cyclopentadienyl skeleton, and $R^3$, $R^4$ and $R^5$ are each independently a group (ligand) having or not having a cyclopentadienyl skeleton, k is an integer of 1 or more, and k+l+m+n=4.

As the examples of the metallocene compounds having zirconium as $M^1$ and having at least two ligands having a cyclopentadienyl skeleton, there may be mentioned bis(cyclopentadienyl)zirconium monochloride monohydride, bis (cyclopentadienyl)zirconium dichloride, bis(1-methyl-3-butylcyclopentadienyl)zirconium-bis(trifluor omethanesulfonate), bis(1,3-dimethylcyclopentadienyl)zirconium dichloride, and the like.

Among the compounds, a compound in which a 1,3-position substituted cyclopentadienyl group is replaced by a 1,2-position substituted cyclopentadienyl group may be used.

In addition, as another example of the metallocene compound, there may be used a bridged metallocene compound in which at least two of $R^2$, $R^3$, $R^4$ and $R^5$ in the formula (2), for example, $R^2$ and $R^3$ are groups (ligands) having a cyclopentadienyl skeleton and these two groups are bonded to each other through an alkylene group, a substituted alkylene group, a silylene group, a substituted silylene group, or the like. In this case, $R^4$ and $R^5$ are each independently the same as the ligand L other than the ligand having a cyclopentadienyl skeleton.

The bridged metallocene compounds include ethylenebis(indenyl)dimethylzirconium, ethylenebis(indenyl)zirconium dichloride, isopropylidene(cyclopentadienyl-fluorenyl)zirconium dichloride, diphenylsilylenebis (indenyl) zirconium dichloride, methylphenylsilylenebis(indenyl)zirconium dichloride, and the like.

<Example of Metallocene Compound -2>

Another example of the metallocene compound is a metallocene compound represented by the following general formula (3) that is described in Japanese Patent Laid-Open Publication No. H04-268307.

[Chemical Formula 1]

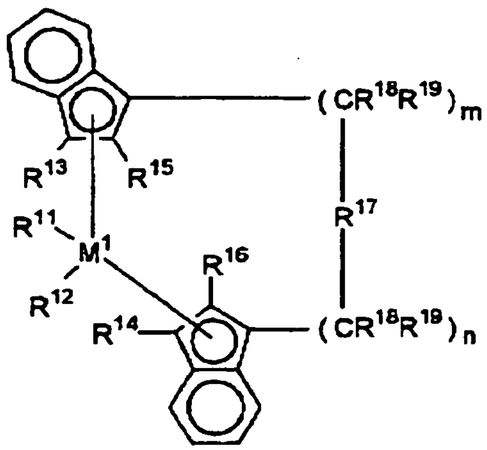

... (3)

In the formula (3), $M^1$ is a transition metal of Group 4 of the periodic table, specifically is titanium, zirconium, or hafnium.

$R^{11}$ and $R^{12}$ may be the same or different from each other and are a hydrogen atom; an alkyl group having 1 to 10 carbon atoms; an alkoxy group having 1 to 10 carbon atoms; an aryl group having 6 to 10 carbon atoms; an aryloxy group having 6 to 10 carbon atoms; an alkenyl group having 2 to 10 carbon atoms; an arylalkyl group having 7 to 40 carbon atoms; an alkylaryl group having 7 to 40 carbon atoms; an arylalkenyl group having 8 to 40 carbon atoms; or a halogen atom. $R^{11}$ and $R^{12}$ are preferably a chlorine atom.

$R^{13}$ and $R^{14}$ may be the same or different from each other and are a hydrogen atom; a halogen atom; an alkyl group having 1 to 10 carbon atoms which may be halogenated; an aryl group having 6 to 10 carbon atoms or a group of $-N(R^{20})_2$, $-SR^{20}$, $-OSi(R^{20})_3$, $-Si(R^{20})_3$, or $-P(R^{20})_2$. Here, $R^{20}$ is a halogen atom, preferably a chlorine atom; an alkyl group having 1 to 10 carbon atoms, preferably having 1 to 3 carbon atoms; or an aryl group having 6 to 10 carbon atoms, preferably 6 to 8 carbon atoms. $R^{13}$ and $R^{14}$ especially preferably are a hydrogen atom.

$R^{15}$ and $R^{16}$ are the same as $R^{13}$ and $R^{14}$ except that a hydrogen atom is not included and may be the same or different from each other, and are preferably the same. $R^{15}$ and $R^{16}$ are preferably an alkyl group having 1 to 4 carbon atoms which may be halogenated, specifically methyl, ethyl, propyl, isopropyl, butyl, isobutyl, trifluoromethyl or the like, and especially methyl is preferred.

In the above general formula (3), $R^{17}$ is selected from the following group.

[Chemical Formula 2]

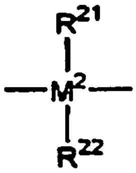 , 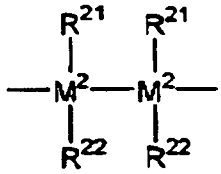 , 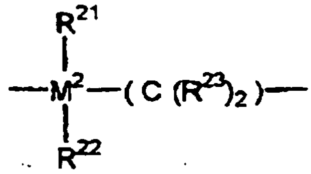 ,

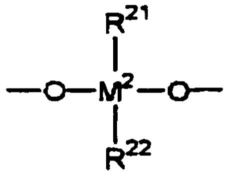 , 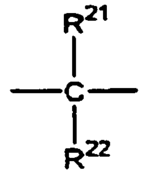 , 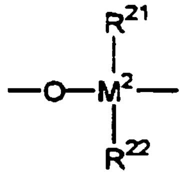 ,

$=BR^{21}$, $=AlR^{21}$, -Ge-, -Sn-, -O-, -S-, =SO, $=SO_2$, $=NR^{21}$, =CO, $=PR^{21}$, $=P(O)R^{21}$, and the like. $M^2$ is silicon, germanium or tin, preferably silicon or germanium. $R^{21}$, $R^{22}$ and $R^{23}$ may be the same or different from one another and are a hydrogen atom; a halogen atom; an alkyl group having 1 to 10 carbon atoms; a fluoroalkyl group having 1 to 10 carbon atoms; an aryl group having 6 to 10 carbon atoms; a fluoroaryl group having 6 to 10 carbon atoms; an alkoxy group having 1 to 10 carbon atoms; an alkenyl group having 2 to 10 carbon atoms; an arylalkyl group having 7 to 40 carbon atoms; an arylalkenyl group having 8 to 40 carbon atoms; or an alkylaryl group having 7 to 40 carbon atoms. "$R^{21}$ and $R^{22}$" or "$R^{21}$ and $R^{23}$" may form a ring together with atoms to which they are bonded. In addition, $R^{17}$ is preferably $=CR^{21}R^{22}$, $=SiR^{21}R^{22}$, $=GeR^{21}R^{22}$, -O-, -S-, =SO, $=PR^{21}$ or $=P(O)R^{21}$. $R^{18}$ and $R^{19}$ may be the same or different from each other and are the same atom or group as that of $R^{21}$. m and n may be the same or different from each other and are 0, 1 or 2, preferably 0 or 1, and m+n is 0, 1 or 2, preferably 0 or 1.

As the examples of metallocene compounds represented by the formula (3), there may be mentioned rac-ethylene(2-methyl-1-indenyl)$_2$-zirconium dichloride, rac-dimethylsilylene(2-methyl-1-indenyl)$_2$-zirconium dichloride, and the like. These metallocene compounds may be produced by, for example, a process described in Japanese Patent Laid-Open Publication No. H04-268307.

<Example of Metallocene Compound -3>

In addition, as the metallocene compound, a metallocene compound represented by the following general formula (4) may be used.

[Chemical Formula 3]

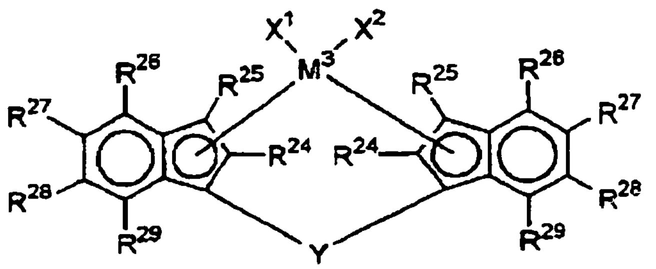 ... (4)

In the formula (4), $M^3$ is a transition metal atom of Group 4 of the periodic table, specifically titanium, zirconium, hafnium or the like. $R^{24}$ and $R^{25}$ may be the same or different from each other and are a hydrogen atom, a halogen atom, a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, or a phosphorus-containing group. $R^{24}$ is preferably a hydrocarbon group, especially preferably an alkyl group having 1 to 3 carbon atoms such as methyl, ethyl or propyl group. $R^{25}$ is preferably a hydrogen atom or a hydrocarbon group,

particularly preferably a hydrogen atom or an alkyl group having 1 to 3 carbon atoms such as methyl, ethyl or propyl group. $R^{26}$, $R^{27}$, $R^{28}$ and $R^{29}$ may be the same or different from one another and represent a hydrogen atom, a halogen atom, a hydrocarbon group having 1 to 20 carbon atoms, or a halogenated hydrocarbon group having 1 to 20 carbon atoms. Of these, a hydrogen atom, a hydrocarbon group or a halogenated hydrocarbon group is preferred. At least one combination of "$R^{26}$ and $R^{27}$", "$R^{27}$ and $R^{28}$", and "$R^{28}$ and $R^{29}$" may form a monocyclic aromatic ring together with carbon atoms to which they are bonded. When there are two or more hydrocarbon groups or halogenated hydrocarbon groups other than the groups that form an aromatic ring, they may be bonded to each other to form a ring. When $R^{29}$ is a substituent other than an aromatic group, $R^{29}$ is preferably a hydrogen atom. $X^1$ and $X^2$ may be the same or different from each other and represent a hydrogen atom, a halogen atom, a hydrocarbon group having 1 to 20 carbon atoms, a halogenated hydrocarbon group having 1 to 20 carbon atoms, an oxygen atom-containing group, or a sulfur atom-containing group. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{30}-$, $-P(R^{30})-$, $-P(O)(R^{30})-$, $-BR^{30}-$ or $-AlR^{30}-$ (provided that $R^{30}$ is a hydrogen atom, a halogen atom, a hydrocarbon group having 1 to 20 carbon atoms, or a halogenated hydrocarbon group having 1 to 20 carbon atoms).

In the formula (4), as the ligand, which contains a monocyclic aromatic ring formed by mutual bonding of at least one combination of "$R^{26}$ and $R^{27}$", "$R^{27}$ and $R^{28}$" and "$R^{28}$ and $R^{29}$" and which is coordinated to $M^3$, the ligands represented by the following formula may be mentioned.

[Chemical Formula 4]

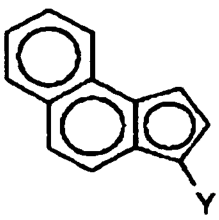

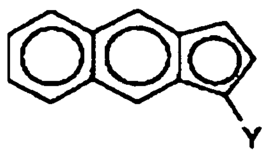

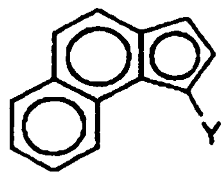

(In the above formula, Y is the same as that described in the formula).

< Example of Metallocene Compound -4>

As the metallocene compound, a metallocene compound represented by the following general formula (5) may be used.

[Chemical Formula 5]

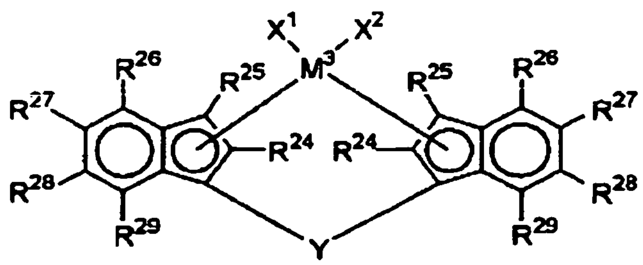

... (5)

In the formula (5), $M^3$, $R^{24}$, $R^{25}$, $R^{26}$, $R^{27}$, $R^{28}$ and $R^{29}$ are the same as those in the formula (4). Of $R^{26}$, $R^{27}$, $R^{28}$ and $R^{29}$, two groups including $R^{26}$ are preferably an alkyl group, and $R^{26}$ and $R^{28}$, or $R^{26}$ and $R^{29}$ are preferably

an alkyl group. This alkyl group is preferably a secondary or tertiary alkyl group. Further, this alkyl group may be substituted with a halogen atom or a silicon-containing group. The halogen atoms and the silicon-containing groups include the same substituents as described in $R^{24}$ and $R^{25}$. Of $R^{26}$, $R^{27}$, $R^{28}$ and $R^{29}$, groups other than the alkyl group are preferably a hydrogen atom. Two groups selected from $R^{26}$, $R^{27}$, $R^{28}$ and $R^{29}$ may be bonded to each other to form a monocycle or a polycycle ring other than the aromatic ring. The halogen atoms include the same atoms as described in the $R^{24}$ and $R^{25}$. Examples of $X^1$, $X^2$ and Y include the same atoms and groups as described above.

As the specific examples of the metallocene compounds represented by the formula (5), there may be mentioned rac-dimethylsilylene-bis(4,7-dimethyl-1-indenyl)zirconium dichloride, rac-dimethylsilylene-bis(2,4,7-trimethyl-1-indenyl) zirconiu m dichloride, rac-dimethylsilylene-bis(2,4,6-trimethyl-1-indenyl)zirconiu m dichloride, and the like.

Further, transition metal compounds in which the zirconium metal of these compounds is replaced by a titanium metal or a hafnium metal may also be used. The transition metal compound is usually used as a racemic compound, but an R form or an S form may also be used.

<Example of Metallocene Compound -5>

As the metallocene compound, a metallocene compound represented by the following general formula (6) may also be used.

[Chemical Formula 6]

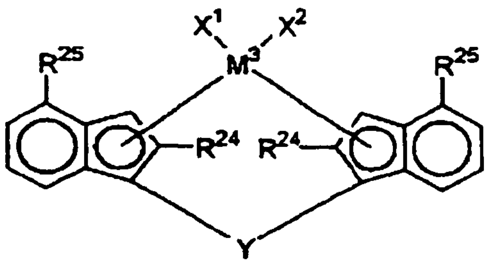

... (6)

In the formula (6), $M^3$, $R^{24}$, $X^1$, $X^2$ and Y are the same as those in the formula (4). $R^{24}$ is preferably a hydrocarbon group, especially preferably an alkyl group having 1 to 4 carbon atoms such as a methyl group, an ethyl group, a propyl group or a butyl group. $R^{25}$ is an aryl group having 6 to 16 carbon atoms. $R^{25}$ is preferably phenyl or naphthyl. The aryl group may be substituted with a halogen atom, a hydrocarbon group having 1 to 20 carbon atoms, or a halogenated hydrocarbon group having 1 to 20 carbon atoms. $X^1$ and $X^2$ are preferably a halogen atom or a hydrocarbon group having 1 to 20 carbon atoms.

As specific examples of the metallocene compound represented by the formula (6), there may be mentioned rac-dimethylsilylene-bis(4-phenyl-1-indenyl)zirconium dichloride, rac-dimethylsilylene-bis(2-methyl-4-phenyl-1-indenyl) zircon ium dichloride, rac-dimethylsilylene-bis(2-methyl-4-(α-naphthyl)-1-indenyl) zirconium dichloride, rac-dimethylsilylene-bis (2-methyl-4-(β-naphthyl)-1*-indenyl) zirconium dichloride, rac-dimethylsilylene-bis(2-methyl-4-(1-anthryl)-1-indenyl)z irconium dichloride, and the like. Further, transition metal compounds in which the zirconium metal of the metallocene compounds is replaced by a titanium metal or a hafnium metal may also be used.

<Example of Metallocene Compound -6>

Further, as the metallocene compound, a metallocene compound represented by the following general formula (7) may also be used.

$$LaM^4X^3_2 \qquad (7)$$

In the formula (7), $M^4$ is a metal of Group 4 or lanthanide series of the periodic table. La is a derivative of a delocalized n bond group and is a group imparting a constraint geometric shape to the metal $M^4$ active site. $X^3$ may be the same or different from each other and is a hydrogen atom, a halogen atom, a hydrocarbon group having 20 or less carbon atoms, a silyl group having 20 or less silicon atoms or a germyl group having 20 or less germanium atoms.

Of these compounds, a compound represented by the following formula (8) is preferred.

[Chemical Formula 7]

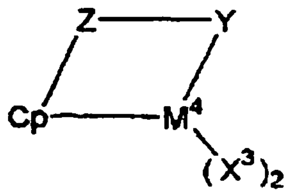

... (8)

In the formula (8), $M^4$ is titanium, zirconium, or hafnium. $X^3$ is the same as that explained in the formula (7). Cp is n-bonded to $M^4$ and is a substituted cyclopentadienyl group having a substituent Z. Z is oxygen, sulfur, boron, or an element of Group 4 of the periodic table (for example, silicon, germanium, or tin). Y is a ligand containing nitrogen, phosphorus, oxygen or sulfur. Z and Y may together form a condensed ring. As the specific examples of the metallocene compounds represented by the formula (8), there may be mentioned (dimethyl (t-butylamide) (tetramethyl-η⁵-cyclopentadienyl)sila ne)titanium dichloride, ((t-butylamide) (tetramethyl-η⁵-cyclopentadienyl) -1,2-ethaned iyl)titanium dichloride, and the like. In addition, compounds in which titanium of the metallocene compounds is replaced by zirconium or hafnium may be mentioned.

<Example of Metallocene Compound -7>

Further, as the metallocene compound, a metallocene compound represented by the following general formula (9) may also be used.

[Chemical Formula 8]

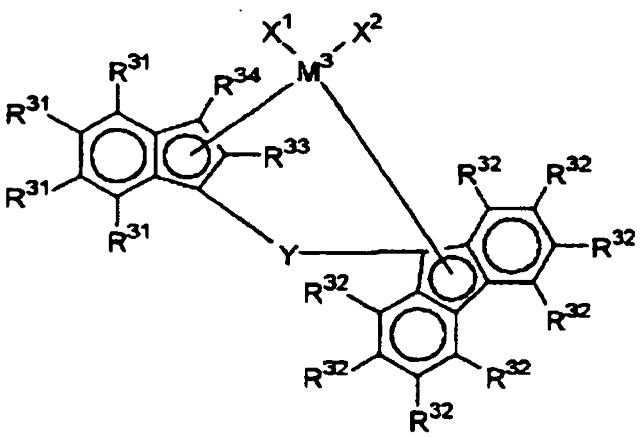

... (9)

In the formula (9), $M^3$ is a transition metal atom of Group 4 of the periodic table, specifically titanium, zirconium, or hafnium, preferably zirconium. $R^{31}$ may be the same or different from each other, and at least one of them is an aryl group having 11 to 20 carbon atoms, an arylalkyl group having 12 to 40 carbon atoms, an arylalkenyl group having 13 to 40 carbon atoms, an alkylaryl group having 12 to 40 carbon atoms, or a silicon-containing group; or at least two adjacent groups of the groups shown by $R^{31}$ form single or plural aromatic rings or aliphatic rings together with carbon atoms to which they are bonded. In this case, the ring formed by $R^{31}$ has 4 to 20 carbon atoms in total including carbon atoms to which $R^{31}$ is bonded. $R^{31}$ other than the $R^{31}$ that is an aryl group, an arylalkyl group, an arylalkenyl group, or an alkylaryl group or that forms an aromatic ring or an aliphatic ring is a hydrogen atom, a halogen atom, an alkyl group having 1 to 10 carbon atoms or a silicon-containing group. $R^{32}$ may be the same or different from each other and is a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group. In addition, at least two adjacent groups of the groups shown by $R^{32}$ may form single or plural aromatic rings or aliphatic rings together with carbon atoms to which they are bonded. In this case, the ring formed by $R^{32}$ has 4 to 20 carbon atoms in total including carbon atoms to which $R^{32}$ is bonded. $R^{32}$ other than the $R^{32}$ that forms an aromatic ring or an aliphatic ring is a hydrogen atom, a halogen atom, an alkyl group having 1 to 10 carbon atoms, or a silicon-containing group. Further, the groups in which single or plural aromatic rings or aliphatic rings are formed by two groups shown by $R^{32}$ include an embodiment in which the fluorenyl group has a structure represented by the following formula.

[Chemical Formula 9]

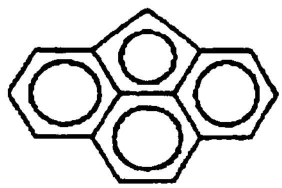

$R^{32}$ is preferably a hydrogen atom or an alkyl group, especially preferably a hydrogen atom or a hydrocarbon group having 1 to 3 carbon atoms, for example, a methyl group, an ethyl group, or a propyl group. Preferred examples of the fluorenyl groups having $R^{32}$ as such a substituent include a 2,7-dialkyl-fluorenyl group, and in this case, the examples of the alkyl groups of the 2, 7-dialkyl include an alkyl group having 1 to 5 carbon atoms. $R^{31}$ and $R^{32}$ may be the same or different from each other. $R^{33}$ and $R^{34}$ may be the same or different from each other and are a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group, as mentioned above. At least one of $R^{33}$ and $R^{34}$ is preferably an alkyl group having 1 to 3 carbon atoms. $X^1$ and $X^2$ may be the same or different from each other and are a hydrogen atom, a halogen atom, a hydrocarbon group having 1 to 20 carbon atoms, a halogenated hydrocarbon group having 1 to 20 carbon atoms, an oxygen-containing group, a sulfur-containing group or a nitrogen-containing group, or a conjugated diene residue formed by $X^1$ and $X^2$. Preferred conjugated diene residues formed by $X^1$ and $X^2$ are 1, 3-butadiene, 2,4-hexadiene, 1-phenyl-1,3-pentadiene and 1,4-diphenylbutadiene, and these residues may be further substituted with a hydrocarbon group having 1 to 10 carbon atoms. $X^1$ and $X^2$ are preferably a halogen atom, a hydrocarbon group having 1 to 20 carbon atoms or a sulfur-containing group. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{35}-$, $-P(R^{35})-$, $-P(O)(R^{35})-$, $-BR^{35}-$ or $-AlR^{35}-$ (provided that $R^{35}$ is a hydrogen atom, a halogen atom, a hydrocarbon group having 1 to 20 carbon atoms or a halogenated hydrocarbon group having 1 to 20 carbon atoms). Of these divalent groups, those wherein the shortest linkage part of -Y-is constituted by one or two atoms are preferable. $R^{35}$ is a halogen atom, a hydrocarbon group having 1 to 20 carbon atoms or a halogenated hydrocarbon group having 1 to 20 carbon atoms. Y is preferably a divalent hydrocarbon group having 1 to 5 carbon atoms, a divalent silicon-containing group or a divalent germanium-containing group, more preferably a divalent silicon-containing group, and especially preferably alkylsilylene, alkylarylsilylene or arylsilylene.

<Example of Metallocene Compound -8)

Further, as the metallocene compound, a metallocene compound represented by the following general formula (10) may also be used.

[Chemical Formula 10]

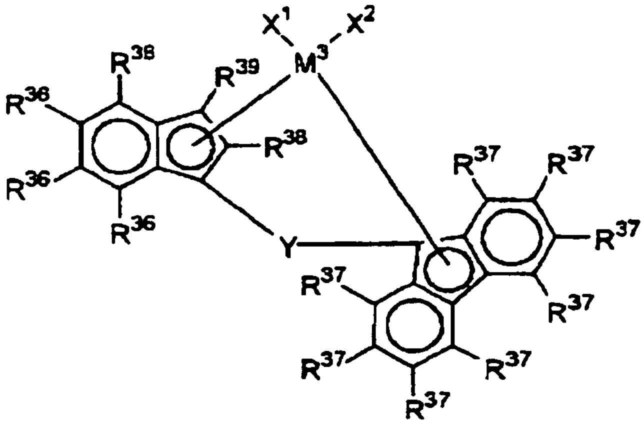

... (10)

In the formula (10), $M^3$ is a transition metal atom of Group 4 of the periodic table, specifically titanium, zirconium or hafnium, and preferably zirconium. $R^{36}$ may be the same or different from each other and is a hydrogen atom, a halogen atom, an alkyl group having 1 to 10 carbon atoms, an aryl group having 6 to 10 carbon atoms, an alkenyl group having 2 to 10 carbon atoms, a silicon-containing group, an oxygen-containing group, a sulfur-containing group, a nitrogen-containing group or a phosphorus-containing group. Further, the above alkyl group and alkenyl group may be substituted with a halogen atom. Of these, $R^{36}$ is preferably an alkyl group, an aryl group or a hydrogen atom, especially preferably a hydrocarbon group having 1 to 3 carbon atoms such as a methyl group, an ethyl group, an n-propyl group or an i-propyl, an aryl group such as a phenyl group, an $\alpha$-naphthyl group or a $\beta$-naphthyl group, or a hydrogen atom. $R^{37}$ may be the same or different from each other and is a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group or a phosphorus-containing group. Further, the alkyl group, the aryl group, the alkenyl group, the arylalkyl group, the arylalkenyl group and the alkylaryl group may be substituted with halogen. Of these, $R^{37}$ is preferably a hydrogen atom or an alkyl group, especially preferably a hydrogen atom or a hydrocarbon group having 1 to 4 carbon atoms such as a methyl group, an ethyl group, an n-propyl group, an i-propyl group, an n-butyl group or a tert-butyl group. In addition, the $R^{36}$ and $R^{37}$ may be the same or different from each other. Either one of $R^{38}$ and $R^{39}$ is an alkyl group having 1 to 5 carbon atoms, and the other of the $R^{38}$ and $R^{39}$ is a hydrogen atom, a halogen atom, an alkyl group having 1 to 10 carbon atoms, an alkenyl group having 2 to 10 carbon atoms, a silicon-containing group, an oxygen-containing group, a sulfur-containing group, a nitrogen-containing group or a phosphorus-containing group. Of these, either one of $R^{38}$ or $R^{39}$ preferably is an alkyl group having 1 to 3 carbon atoms such as a methyl group, an ethyl group, a propyl group or the like, and the other of the $R^{38}$ or $R^{39}$ preferably is a hydrogen atom. $X^1$ and $X^2$ may be the same or different from each other and are a hydrogen atom, a halogen atom, a hydrocarbon group having 1 to 20 carbon atoms, a halogenated hydrocarbon group having 1 to 20 carbon atoms, an oxygen-containing group, a sulfur-containing group or a nitrogen-containing group, or a conjugated diene residue formed by $X^1$ and $X^2$. Of these, a halogen atom or a hydrocarbon group having 1 to 20 carbon atoms are preferred. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{40}-$, $-P(R^{40})-$, $-P(O)(R^{40})-$, $-BR^{40}-$ or $-AlR^{40}-$ (provided that $R^{40}$ is a hydrogen atom, a halogen atom, a hydrocarbon group having 1 to 20 carbon atoms or a halogenated hydrocarbon group having 1 to 20 carbon atoms). Of these, Y is preferably a divalent hydrocarbon group having 1 to 5 carbon atoms, a divalent silicon-containing group or a divalent germanium-containing group, more preferably a divalent silicon-containing group, and especially preferably alkylsilylene, alkylarylsilylene or arylsilylene.

<Example of Metallocene Compound -9)

Further, as the metallocene compound, a metallocene compound represented by the following general formula (11) may also be used.

[Chemical Formula 11]

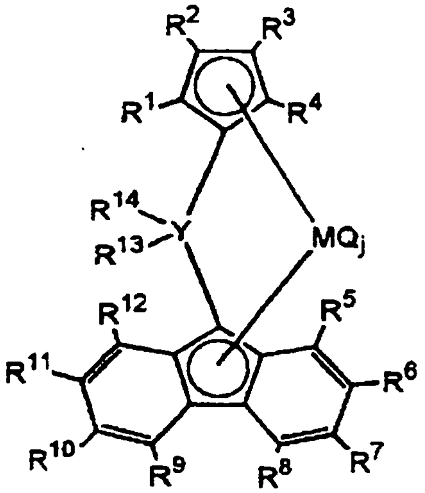

... (1 1)

In the formula (11), Y is selected from carbon, silicon, germanium and tin atoms, M is Ti, Zr or Hf, and $R^1$, $R^2$, $R^3$, $R^4$, $R^5$,$R^6$, $R^7$, $R^8$, $R^9$, $R^{10}$, $R^{11}$ and $R^{12}$ may be the same or different from one another and selected from hydrogen, a hydrocarbon group, and a silicon containing group. The adjacent substituents of $R^5$ to $R^{12}$ may be bonded to one another to form a ring. $R^{13}$ and $R^{14}$ may be the same or different from each other and is selected from a hydrocarbon group, and a silicon containing group, and $R^{13}$ and $R^{14}$ may be bonded to each other to form a ring. Q may be selected in the same or different combination from halogen, a hydrocarbon group, an anionic ligand and a neutral ligand which has a lone pair of electrons and which is capable of coordinating to M, and j is an integer of 1 to 4.

Hereinafter, the cyclopentadienyl group, the fluorenyl group and the bridged part which are the characteristics in the chemical structure of the bridged metallocene compound relating to the present invention and other characteristics are explained in this order. Then, preferred bridged metallocene compounds having these characteristics in combination are explained.

Cyclopentadienyl Group

The cyclopentadienyl group may or may not be substituted. The phrase "the cyclopentadienyl group which may not be substituted" means a cyclopentadienyl group in which $R^1$, $R^2$, $R^3$ and $R^4$ that are contained in the cyclopentadienyl group part in the general formula (11) are all hydrogen atoms, or any one or more of $R^1$, $R^2$, $R^3$ and $R^4$ are substituted with a hydrocarbon group (f1), preferably with a hydrocarbon group having 1 to 20 carbon atoms in total (f1'); or a silicon-containing group (f2), preferably with a silicon-containing group having 1 to 20 carbon atoms in total (f2'). If at least two or more of $R^1$, $R^2$, $R^3$ and $R^4$ are substituted, the substituents may be the same or different from each other. Further, the term "hydrocarbon group having 1 to 20 carbon atoms in total" means an alkyl group, an alkenyl group, an alkynyl group, or an aryl group, which is composed of only carbon and hydrogen. The hydrocarbon groups having 1 to 20 carbon atoms in total include a group in which both of any adjacent two hydrogen atoms are simultaneously substituted to form an alicyclic or aromatic ring. As the hydrocarbon group (f1') having 1 to 20 carbon atoms in total, there may be included, in addition to an alkyl group, an alkenyl group, an alkynyl group, or an aryl group which is composed of only carbon and hydrogen, a heteroatom-containing hydrocarbon group in which a part of the hydrogen atoms directly bonded to these carbon atoms is substituted with a halogen atom, an oxygen-containing group, a nitrogen-containing group or a silicon-containing group, and a group in which any adjacent two hydrogen atoms form an alicyclic group. The examples of the hydrocarbon group (f1') include a linear hydrocarbon group such as a methyl group, an ethyl group, an n-propyl group, an allyl group, an n-butyl group, an n-pentyl group, an n-hexyl group, an n-heptyl group, an n-octyl group, an n-nonyl group, an n-decanyl group and the like; a branched hydrocarbon group such as an isopropyl group, a t-butyl group, an amyl group, a 3-methylpentyl group, a 1,1-diethylpropyl group, a 1,1-dimethylbutyl group, a 1-methyl-1-propyl butyl group, a 1,1-propyl butyl group, a 1,1-dimethyl-2-methylpropyl group, a 1-methyl-1-isopropyl-2-methylpropyl group and the like; a cyclic saturated hydrocarbon group such as a cyclopentyl group, a cyclohexyl group, a cycloheptyl group, a cyclooctyl group, a norbornyl group, an adamanthyl group and the like; a cyclic unsaturated hydrocarbon group and a nuclear alkyl-substituted product thereof such as a phenyl group, a naphthyl group, a biphenyl group, a phenanthryl group, an anthracenyl group and the like; a saturated hydrocarbons group substituted with an aryl group such as a

benzyl group, a cumyl group and the like; and a heteroatom-containing hydrocarbon group such as a methoxy group, an ethoxy group, a phenoxy group, an N-methylamino group, a trifluoromethyl group, a tribromomethyl group, a pentafluoroethyl group, a pentafluorophenyl group and the like.

The silicon-containing group (f2) refers, for example, to a group in which the ring carbon of the cyclopentadienyl group is directly covalently bonded to a silicon atom, and specifically to an alkyl silyl group and an aryl silyl group. The examples of the silicon-containing group (f2') having 1 to 20 carbon atoms in total include a trimethylsilyl group, a triphenylsilyl group and the like.

Fluorenyl Group

The fluorenyl group may or may not be substituted. The phrase "the fluorenyl group which may or may not be substituted" means a fluorenyl group in which $R^5$, $R^6$, $R^7$, $R^8$, $R^9$, $R^{10}$, $R^{11}$ and $R^{12}$ that are contained in the fluorenyl group part in the general formula (11) are all hydrogen atoms, or any one or more of $R^5$, $R^6$, $R^7$, $R^8$, $R^9$, $R^{10}$, $R^{11}$ and $R^{12}$ are substituted with a hydrocarbon group (f1), preferably with a hydrocarbon group having 1 to 20 carbon atoms in total (f1') or a silicon-containing group (f2), or preferably with a silicon-containing group having 1 to 20 carbon atoms in total (f2'). If at least two or more of $R^5$, $R^6$, $R^7$, $R^8$, $R^9$, $R^{10}$, $R^{11}$ and $R^{12}$ are substituted, these substituents may be the same or different from each other. The adjacent substituents of $R^5$, $R^6$, $R^7$, $R^8$, $R^9$, $R^{10}$, $R^{11}$ and $R^{12}$ may be bonded to one another to form a ring. A fluorenyl group in which $R^6$ and $R^{11}$, and $R^7$ and $R^{10}$ are the same each other are preferably used because of the easiness in the production of a catalyst.

A preferable example of the hydrocarbon group (f1) is the hydrocarbon group (f1') having 1 to 20 carbon atoms in total, and a preferable example of the silicon-containing group (f2) is the silicon-containing group (f2') having 1 to 20 carbon atoms in total.

Covalent cross-link

The main chain of the bond which binds the cyclopentadienyl group with the fluorenyl group is a divalent covalent cross-link containing any one of a carbon atom, a silicon atom, a germanium atom and a tin atom. An important point in a high temperature solution polymerization of the present invention is that a bridging atom Y of the covalent cross-link part has $R^{13}$ and $R^{14}$ which may be the same or different from each other. A preferable example of the hydrocarbon group (f1) is the hydrocarbon group (f1') having 1 to 20 carbon atoms in total, and a preferable example of the silicon-containing group (f2) is the silicon-containing group (f2') having 1 to 20 carbon atoms in total described above.

Other Characteristics of Bridged Metallocene Compound

In the formula (11), Q is selected in the same or different combination from halogen, a hydrocarbon group having 1 to 10 carbon atoms, a neutral, conjugated or non-conjugated diene having 10 or less carbon atoms, an anionic ligand, or a neutral ligand which has a lone pair of electrons and which is capable of coordinating to M. The specific examples of halogen include fluorine, chlorine, bromine and iodine, and the specific examples of the hydrocarbon groups include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, 1-methyl-1-cyclohexyl, and the like. As the specific examples of the neutral, conjugated or non-conjugated dienes having 10 or less carbon atoms, there may be mentioned s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, s-cis- or s-trans-$\eta^4$-1,4-bis (trimethylsilyl) -1, 3-butadiene, and the like. The specific examples of the anionic ligands include an alkoxy group such as methoxy, tert-butoxy, phenoxy and the like; a carboxylate group such as acetate, benzoate and the like; a sulfonate group such as mesylate, tosylate and the like; and others. As the specific examples of the neutral ligands which have a lone pair of electrons and which are capable of coordinating to M, there may be mentioned an organophosphorus compound such as trimethylphosphine, triethylphosphine, triphenylphosphine, diphenylmethyl phosphine and the like, and ethers such as tetrahydrofuran, diethyl ether, dioxane, 1,2-dimethoxyethane and the like. j is an integer of 1 to 4, and when j is 2 or more, Qs may be the same or different from each other.

<Example of Metallocene Compound -10>

In addition, as the metallocene compound, a metallocene compound represented by the following general formula (12) may also be used.

[Chemical Formula 12]

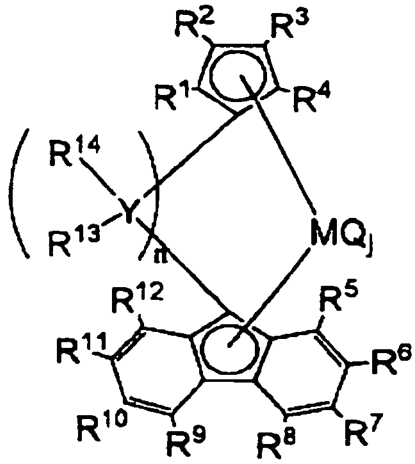

... (1 2)

In the formula (12), $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ are selected from hydrogen, a hydrocarbon group and a silicon-containing group and may be the same or different from one another. The adjacent substituents of $R^1$ to $R^{14}$ may be bonded to each other to form a ring. M is Ti, Zr or Hf, Y is an atom of Group 14 of the periodic table. Q is selected in the same or different combination from the group consisting of halogen, a hydrocarbon group, a neutral, conjugated or non-conjugated diene having 10 or less carbon atoms, an anionic ligand, and a neutral ligand which has a lone pair of electrons and which is capable of coordinating to M. n is an integer of 2 to 4, and j is an integer of 1 to 4.

In the general formula (12), preferable hydrocarbon groups include an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more ring structures.

The specific examples thereof include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethyl butyl, neopentyl, cyclohexylmethyl, cyclohexyl, 1-methyl-1-cyclohexyl, 1-adamanthyl, 2-adamanthyl, 2-methyl-2-adamanthyl, menthyl, norbornyl, benzyl, 2-phenylethyl, 1-tetrahydronaphthyl, 1-methyl-1-tetrahydronaphthyl, phenyl, naphthyl, tolyl, and the like.

In the general formula (12), preferrable silicon-containing hydrocarbon groups include an alkyl or arylsilyl group having 1 to 4 silicon atoms and 3 to 20 carbon atoms, and the specific examples thereof include trimethylsilyl, tert-butyldimethylsilyl, triphenylsilyl, and the like.

In the present invention, $R^1$ to $R^{14}$ of the general formula (12) are selected from hydrogen, a hydrocarbon group and a silicon-containing hydrocarbon group, and may be the same or different from one another. As the preferable examples of the hydrocarbon groups and the silicon-containing hydrocarbon groups, there may be mentioned those mentioned above.

The adjacent substituents of $R^1$ to $R^{14}$ on the cyclopentadienyl ring of the general formula (12) may be bonded to each other to form a ring.

M of the general formula (12) is an element of Group 4 of the periodic table, that is, zirconium, titanium or hafnium, and preferably zirconium.

Y is an atom of Group 14 of the periodic table, preferably a carbon atom or a silicon atom. n is an integer of 2 to 4, preferably 2 to 3, and especially preferably 2.

Q is selected in the same or different combination from the group consisting of halogen, a hydrocarbon group, a neutral, conjugated or non-conjugated diene having 10 or less carbon atoms, an anionic ligand, and a neutral ligand which has a lone pair of electrons and which is capable of coordinating to M. When Q is a hydrocarbon group, a hydrocarbon group having 1 to 10 carbon atoms is more preferred.

The specific examples of halogen include fluorine, chlorine, bromine, and iodine, and the specific examples of the hydrocarbon groups include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexylmethyl, cyclohexyl, 1-methyl-1-cyclohexyl and the like. As the specific example of

the neutral, conjugated or non-conjugated diene having 10 or less carbon atoms, there may be mentioned s-cis- or s-trans-η4-1,3-butadiene, s-cis- or s-trans-η4-1,4-diphenyl-1,3-butadiene, s-cis- or s-trans-η4-3-methyl-1,3-pentadiene, s-cis- or s-trans-η4-1,4-dibenzyl-1,3-butadiene, s-cis- or s-trans-η4-2,4-hexadiene, s-cis- or s-trans-η4-1, 3-pentadiene, s-cis- or s-trans-η4-1,4-ditolyl-1,3-butadiene, s-cis- or s-trans-η4-1,4-bis (trimethylsilyl) -1, 3-butadiene and the like. The specific examples of the anionic ligands include an alkoxy group such as methoxy, tert-butoxy, phenoxy and the like; a carboxylate group such as acetate, benzoate and the like; a sulfonate group such as mesylate, tosylate and the like; and others. As the specific examples of the neutral ligands which have a lone pair of electrons and which are capable of coordinating to M, there may be mentioned an organophosphorus compound such as trimethylphosphine, triethylphosphine, triphenylphosphine, diphenylmethyl phosphine and the like, or ethers such as tetrahydrofuran, diethyl ether, dioxane, 1,2-dimethoxyethane and the like, or others. When j is an integer of 2 or more, Qs may be the same or different from each other.

In the formula (12), Y is present in the plurality of 2 to 4, and the plural Y may be the same as or different from each other. Plural $R^{13}$ and plural $R^{14}$, which are bonded to Y, may be the same or different from each other. For example, plural $R^{13}$ which are bonded to the same Y may be different from each other, and plural $R^{13}$ which are bonded to the different Y may be the same each other. In addition, a ring may be formed among the plural $R^{13}$ or the plural $R^{14}$.

As the preferred examples of Group 4 transition metal compounds represented by the formula (12), compounds represented by the following formula (13) may be mentioned.

[Chemical Formula 13]

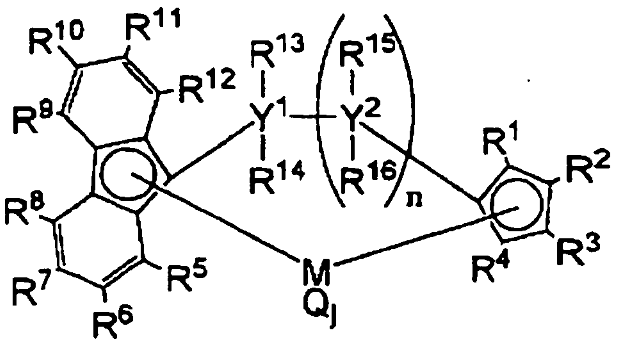

... (1 3)

In the formula (13), $R^1$, $R^2$, $R^3$, $R^4$, $R^5$, $R^6$, $R^7$, $R^8$, $R^9$, $R^{10}$, $R^{11}$ and $R^{12}$ are selected from hydrogen, a hydrocarbon group, and a silicon containing group, and may be the same or different from each other, and $R^{13}$, $R^{14}$, $R^{15}$ and $R^{16}$ are hydrogen or a hydrocarbon group, and n is an integer of 1 to 3. When n is 1, $R^1$ to $R^{16}$ are not hydrogen at the same time and may be the same or different from one another. The adjacent substituents of $R^5$ to $R^{12}$ may be bonded to each other to form a ring. Further, $R^{13}$ and $R^{15}$ may be bonded to each other to form a ring. Furthermore, $R^{14}$ and $R^{16}$ may be bonded to each other to form a ring, while $R^{13}$ and $R^{15}$ are bonded to each other to form a ring. $Y^1$ and $Y^2$ are atoms of Group 14 of the periodic table and may be the same or different from each other. M is Ti, Zr or Hf. Q may be selected in the same or different combination from halogen, a hydrocarbon group, an anionic ligand, and a neutral ligand which has a lone pair of electrons and which is capable of coordinating to M, and j is an integer of 1 to 4.

The compounds as described in Examples of Metallocene Compound -9 and -10 are disclosed in Japanese Patent Laid-Open Publication No. 2004-175707, W02001/027124, WO2004/029062, WO2004/083265 and the like.

The metallocene compounds explained above are used alone or in combination of two or more kinds. In addition, the metallocene compounds may be used after diluted with hydrocarbon, halogenated hydrocarbon or the like.

The catalyst component is composed of a bridged metallocene compound represented by the (A) and at least one compound (B) selected from an organoaluminum oxy-compound (b-1), a compound which reacts with the bridged metallocene compound (A) to form an ion pair (b-2) and an organoaluminum compound (b-3).

Hereinafter, the component (B) is specifically explained.

<Organoaluminum Oxy-Compound (b-1)>

As the organoaluminum oxy-compound (b-1) used in the present invention, a conventionally well-known aluminoxane may be used as it is. Specifically, the organoalumino oxy-compound may be a compound represented by the following general formula (14)

[Chemical Formula 14]

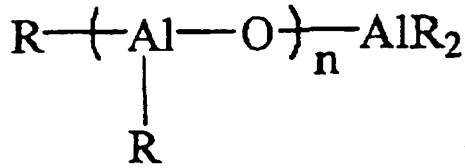

---------------- (14)

and/or a compound represented by the following general formula (15)

[Chemical Formula 15]

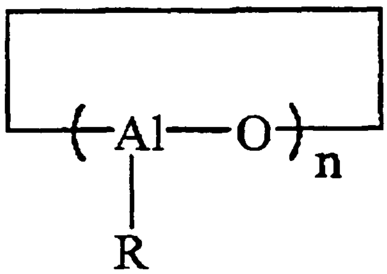

---------------- (15)

(wherein, R represents a hydrocarbon group having 1 to 10 carbon atoms, and n represents an integer of 2 or more.) Particularly, a methyl aluminoxane in which R is a methyl group and n is 3 or more, preferably 10 or more is used. Some amount of organoaluminum compounds may be incorporated in these aluminoxanes. In addition, the high temperature solution polymerization of the present invention is characterized in that the benzene-insoluble organoaluminum oxy-compound exemplified in Japanese Patent Laid-Open Publication No. H02-78687 may also be employed. Further, there may be suitably used the organoaluminum oxy-compound described in Japanese Patent Laid-Open Publication No. H02-167305, the aluminoxane having two or more kinds of alkyl groups described in Japanese Patent Laid-Open Publication No. H02-24701 and Japanese Patent Laid-Open Publication No. H03-103407. In addition, the "benzene-insoluble" organoaluminum oxy-compound used in the high temperature solution polymerization of the present invention means a compound, whose Al component dissolved in benzene at 60°C is usually 10% or less, preferably 5% or less and especially preferably 2% or less in terms of an Al atom, and which is insoluble or poorly soluble in benzene.

In addition, as the organoaluminum oxy-compound used in the present invention, a modified methyl aluminoxane represented by the following formula (16), and the like may be mentioned.

[Chemical Formula 16]

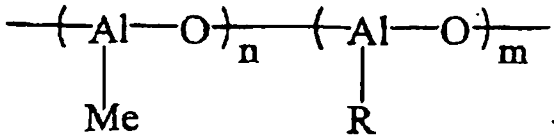

---------------- (16)

(wherein, R represents a hydrocarbon group having 1 to 10 carbon atoms, and m and n represent each an integer of 2 or more.) The modified methyl aluminoxane is prepared using trimethyl aluminum and alkyl aluminum other than trimethyl aluminum. Such compound (16) is generally referred to as MMAO. Such MMAO may be prepared by the process as described in US4960878 and US5041584. Further, the modified methyl aluminoxane, in which R is an isobutyl group and which is prepared using trimethyl aluminum and tri-isobutyl aluminum, is commercially produced under the trade name of MMAO or TMAO by Tosoh Finechem Corporation and the like. Such MMAO is aluminoxane which is improved in solubility in various solvents, and storage stability. Specifically, MMAO is dissolved in an aliphatic or alicyclic hydrocarbon, different from the aluminoxane of the (14) or (15) which is insoluble or poorly soluble in benzene.

Further, as the organoaluminum oxy-compound used in the present invention, there may be also mentioned a boron-containing organoaluminum oxy compound represented by the following general formula (17).

[Chemical Formula 17]

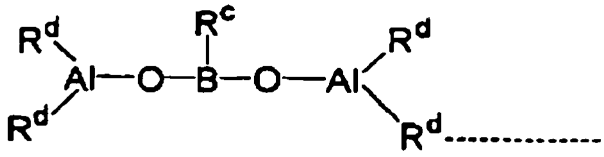

(1 7)

(In the formula (17), $R^c$ represents a hydrocarbon group having 1 to 10 carbon atoms, and $R^d$ may be the same or different from each other and represent a hydrogen atom, a halogen atom or a hydrocarbon group having 1 to 10 carbon atoms.)

<Compound (b-2) which reacts with Bridged Metallocene Compound (A) to form Ion Pair>

As the compound (b-2) which reacts with the bridged metallocene compound (A) to form an ion pair (hereinafter, may be abbreviated as an "ionic compound"), there may be mentioned a Lewis acid, an ionic compound, a borane compound, carborane compound and the like, which are described in Japanese Patent Laid-Open Publication No. H01-501950, Japanese Patent Laid-Open Publication No. H01-502036, Japanese Patent Laid-Open Publication No. H03-179005, Japanese Patent Laid-Open Publication No. H03-179006, Japanese Patent Laid-Open Publication No. H03-207703, Japanese Patent Laid-Open Publication No. H03-207704, USP5321106, and the like. In addition, a heteropoly compound and an isopoly compound may be mentioned.

In the present invention, the ionic compound which is preferably employed is a compound represented by the following general formula (18).

[Chemical Formula 18]

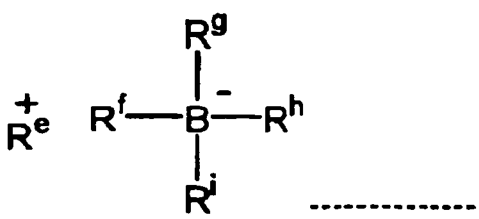

(1 8)

In the formula (18), examples of $R^{e+}$ include $H^+$, a carbenium cation, an oxonium cation, an ammonium cation, a phosphonium cation, a cycloheptyltrienyl cation, and a ferrocenium cation having a transition metal. $R^f$ to $R^i$ may be the same or different from one another and each represent an organic group, preferably an aryl group.

As the specific examples of the carbenium cations, there may be mentioned 3-substituted carbenium cations

such as a triphenyl carbenium cation, a tris(methylphenyl)carbenium cation, a tris(dimethylphenyl)carbenium cation and the like, and others.

As the specific examples of the ammonium cations, there may be mentioned a trialkyl ammonium cation such as a trimethyl ammonium cation, a triethyl ammonium cation, a tri (n-propyl) ammonium cation, a tri-isopropyl ammonium cation, a tri(n-butyl)ammonium cation, a tri-isobutyl ammonium cation and the like; an N,N-dialkyl anilinium cation such as an N,N-dimethyl anilinium cation, an N,N-diethyl anilinium cation, an N,N-2,4,6-pentamethyl anilinium cation and the like; a dialkyl ammonium cation such as a diisopropyl ammonium cation, a dicyclohexyl ammonium cation and the like; and others.

As the specific examples of the phosphonium cations, there may be mentioned a triarylphosphonium cation such as a triphenylphosphonium cation, tris(methylphenyl)phosphonium cation, tris(dimethylphenyl)phosphonium cation and the like, and others.

Among them, a carbenium cation, an ammonium cation, and the like are preferred for $R^{e+}$, and a triphenylcarbenium cation, an N,N-dimethyl anilinium cation, and an N,N-diethyl anilinium cation are especially preferred for $R^{e+}$.

As the specific examples of the carbenium salts, there may be mentioned triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl)carbenium tetrakis(pentafluorophenyl)borate, tris(3,5-dimethylphenyl)carbenium tetrakis(pentafluorophenyl)borate, and the like.

The ammonium salts include a trialkyl-substituted ammonium salt, an N, N-dialkyl anilinium salt, a dialkyl ammonium salt, and the like.

As the specific examples of the trialkyl-substituted ammonium salts, there may be mentioned, for example, triethylammonium tetraphenylborate, tripropylammonium tetraphenylborate, tri (n-butyl)ammonium tetraphenylborate, trimethylammonium tetrakis(p-tolyl)borate, trimethylammonium tetrakis(o-tolyl)borate, tri(n-butyl)ammonium tetrakis (pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(4-trifluoromethylphenyl)borate, tri (n-butyl) ammonium tetrakis(3,5-ditrifluoromethylphenyl)borate, tri(n-butyl)ammonium tetrakis(o-tolyl)borate, dioctadecyl methyl ammonium tetraphenyl borate, dioctadecyl methyl ammonium tetrakis(p-tolyl)borate, dioctadecyl methyl ammonium tetrakis(o-tolyl)borate, dioctadecyl methyl ammonium tetrakis(pentafluorophenyl)borate, dioctadecyl methyl ammonium tetrakis(2,4-dimethylphenyl)borate, dioctadecyl methyl ammonium tetra kis(3,5-dimethylphenyl)borate, dioctadecyl methyl ammonium tetrakis(4-trifluoromethylphenyl)borate, dioctadecyl methyl ammonium tetrakis(3,5-ditrifluoromethylphenyl)borate, dioctadecyl methyl ammonium, and the like.

As the specific examples of the N, N-dialkylanilinium salts, there may be mentionedN,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethyl anilinium tetrakis(pentafluorophenyl)borate, N,N-diethylanilinium tetrakis(3,5-ditrifluoromethylphenyl)borate, N,N-2,4,6-pentamethylanilinium tetraphenylborate, and N,N-2,4,6-pentamethylanilinium tetrakis(pentafluorophenyl)borate, and the like.

The dialkylammonium salts specifically include, for example, di(1-propyl)ammonium tetrakis(pentafluorophenyl) borate, dicyclohexylammonium tetraphenylborate, and the like.

In addition to the above, the ionic compounds disclosed in Japanese Laid-Open Patent Publication No. 2004-51676 by the present applicant may also be used without any restriction.

In addition, the ionic compounds (b-2) as mentioned above may be used by mixing two or more kinds.

<Organoaluminum Compound (b-3)>

As the organoaluminum compound (b-3) which forms an olefin polymerization catalyst, there may be mentioned, for example, an organoaluminum compound represented by the following general formula (19), an alkylated complex compound including a metal element of Group 1 of the periodic table and aluminum represented by the following general formula (20), and the like.

An organoaluminum compound represented by

$$R^a_m Al\ (OR^b)_n H_p X_q \qquad (19)$$

(In the formula (19), $R^a$ and $R^b$ are may be the same or different from each other and each represent a hydrocarbon group having 1 to 15 carbon atoms, preferably 1 to 4 carbon atoms. X represents a halogen atom, and m, n, p and q are $0<m\leq3$, $0\leq n<3$, $0\leq p<3$, and $0\leq q<3$, respectively, and $m+n+p+q=3$.). The specific examples of such compounds include tri-n-alkylaluminum such as trimethylaluminum, triethylaluminum, tri-n-butylaluminum, trihexylaluminum, trioctylaluminum and the like; tri-branched alkylaluminum such as triisopropylaluminum, triisobutylaluminum, tri-sec-butylaluminum, tri-tert-butylaluminum, tri-2-methylbutylaluminum, tri-3-methylhexylaluminum, tri-2-ethylhexylaluminum and the like; tri-cycloalkylaluminum such as tri-cyclohexyl aluminum, tri-cyclooctylaluminum and the like; triarylaluminum such as triphenylaluminum, tritolylaluminum and the like; dialkylaluminum hydride such as diisopropylaluminum hydride, diisobutylaluminum hydride and the like; alkenylaluminum, such as isoprenylaluminum represented by the general formula: $(i\text{-}C_4H_9)_xAl_y(C_5H_{10})_z$ (wherein, x, y and z are a positive integer and z is $z \leq 2x$) and the like; alkylaluminum alkoxide such as isobutylaluminum methoxide, isobutylaluminum ethoxide and the like; dialkylaluminum alkoxide such as dimethylaluminum methoxide, diethylaluminum ethoxide, dibutylaluminum butoxide and the like; alkylaluminum sesquialkoxide such as ethylaluminum sesquiethoxide, butylaluminum sesquibutoxide and the like; partially alkoxylated alkylaluminum, having an average composition represented by the general formula $R^a{}_{2.5}Al\ (OR^b)_{0.5}$ and the like; alkylaluminum aryloxide such as diethylaluminum phenoxide, diethylaluminum (2,6-di-t-butyl-4-methylphenoxide) and the like; dialkylaluminum halide such as dimethylaluminum chloride, diethylaluminum chloride, dibutylaluminum chloride, diethylaluminum bromide, diisobutylaluminum chloride and the like; alkylaluminum sesquihalide such as ethylaluminum sesquichloride, butylaluminum sesquichloride, ethylaluminum sesquibromide and the like; partially halogenated alkylaluminum of alkylaluminum dihalide such as ethylaluminum dichloride and the like; dialkylaluminum hydride such as diethylaluminum hydride, dibutylaluminum hydride and the like; other partially hydrogenated alkylaluminum of alkylaluminum dihydrides such as ethylaluminum dihydride and propylaluminum dihydride and the like, and others; and partially alkoxylated and halogenated alkylaluminums such as ethylaluminum ethoxychloride, butylaluminum butoxychloride, ethylaluminum ethoxybromide and the like; and others.

An alkylated complex compound which includes a metal element of Group 1 of the periodic table and aluminum, and which is represented by the following general formula (20):

$$M^2AlR^a{}_4 \qquad (20)$$

(wherein, $M^2$ is Li, Na or K, and $R^a$ is a hydrocarbon group having 1 to 15 carbon atoms, preferably 1 to 4 carbon atoms). The specific examples of the compounds include $LiAl(C_2H_5)_4$, $LiAl(C\text{-}_7H_{15})_4$ and the like.

In addition, a compound similar to the compound represented by the general formula (20) may also be used. For example, an organoaluminum compound in which two or more aluminum compounds are bonded via a nitrogen atom may be mentioned. The specific examples of the compounds include $(C_2H_5)_2AlN(C_2H_5)Al(C_2H_5)_2$ and the like.

From the viewpoint of easy availability, trimethyl aluminum or tri-isobutyl aluminum is preferably used as an organoaluminum compound (b-3).

<Polymerization>

The polyethylene wax used in the present invention is obtained usually by homopolymerizing ethylene in a liquid phase or copolymerizing ethylene and an $\alpha$-olefin in the presence of the metallocene catalyst. In the polymerization, the process for using each component and the addition order are arbitrarily selected, but the following method may be mentioned.

[q1]: A method in which a component (A) is added alone to a polymerization reactor.

[q2]: A method in which a component (A) and a component (B) are added to a polymerization reactor in an arbitrary order.

In the [q2] method, at least two or more of each of the catalyst components may be brought into contact with each other in advance. At this time, a hydrocarbon solvent is generally used, but an $\alpha$-olefin may be used as a solvent. In addition, each monomer used here is as described above.

The available polymerization methods include suspension polymerization in which polymerization is carried out in a state where a polyethylene wax is suspended in the form of particles in a solvent such as hexane and the like, gas phase polymerization in which a solvent is not used, and solution polymerization in which polymerization is carried out at a polymerization temperature of 140°C or higher in a state where the polyethylene wax is melted alone or together with a solvent. Among these methods, solution polymerization is preferable in both aspects of economic efficiency and product quality.

The polymerization reaction may be carried out by either a batch process or a continuous process. When the polymerization is carried out by a batch process, the catalyst components are used in the concentrations explained below.

In the case of polymerizing an olefin using the olefin polymerization catalyst, the component (A) is used in the amount of usually $10^{-9}$ to $10^{-1}$ mol, preferably $10^{-8}$ to $10^{-2}$ mol per 1 liter of the reaction volume.

The component (b-1) is used in an amount such that the mole ratio [(b-1)/M] of the component (b-1) to the total transition metal atoms (M) in the component (A) is usually 0.01 to 5,000, preferably 0.05 to 2,000. The component (b-2) is used in an amount such that the mole ratio [(b-2) /M] of the ionic compounds in the components (b-2) to total transition metals (M) in the component (A) is usually 0.01 to 5,000, preferably 1 to 2,000. The component (b-3) is used in an amount such that the mole ratio [(b-3)/M] of the component (b-3) to the transition metal atoms (M) in the component (A) is usually 1 to 10,000, preferably 1 to 5,000.

The polymerization reaction is carried out using 10 g of wax set on a filter under the conditions of a temperature of usually -20 to +200°C, preferably 50 to 180°C, more preferably 70 to 180°C and a pressure of usually more than 0 MPa to 7.8 MPa or lower (80 kgf/$cm^2$, gauge pressure), preferably more than 0 MPa to 4.9 MPa or lower (50 kgf/$cm^2$, gauge pressure).

In the polymerization, ethylene and an optional $\alpha$-olefin used as needed are fed into the polymerization system in an amount ratio such that a polyethylene wax of the specific composition is obtained. In addition, in the polymerization, a molecular weight modifier such as hydrogen and the like may be added.

When polymerization is carried out in this manner, since the resulting polymer is usually obtained as a polymerization solution containing this polymer, a polyethylene wax may be obtained by treating the solution by a conventional method.

In the present invention, especially a catalyst containing the metallocene compound described in "Example of Metallocene Compound -1" is preferably used.

When such a catalyst is used, a polyethylene wax with the properties as described above may be readily obtained. The form of the polyethylene wax of the present invention is not particularly limited, but is typically particles in the form of powders, pellets or tablets.

[Other Components]

In the present invention, a stabilizer such as an antioxidant, an ultraviolet absorber, a light stabilizer and the like, and an additive such as a metal soap, a filler, a flame retardant and the like, may be added to the raw material which comprises polyethylene and the polyethylene wax, if necessary.

The stabilizers include an antioxidant such as a hindered phenol compound, a phosphite compound, a thioether compound and the like; an ultraviolet absorber such as a benzotriazole compound, a benzophenone compound and the like; and a light stabilizer such as a hindered amine compound and the like.

The metal soaps include a stearate such as magnesium stearate, calcium stearate, barium stearate, zinc stearate and the like.

The fillers include calcium carbonate, titanium oxide, barium sulfate, talc, clay, carbon black and the like.

The flame retardants include a halogenated diphenyl ether such as a decabromodiphenyl ether, an octabromodiphenyl ether and the like; a halogen compound such as a halogenated polycarbonate and the like; an inorganic compound such as antimony trioxide, antimony tetraoxide, antimony pentaoxide, sodium pyroantimonate, aluminum hydroxide and the like; a phosphorus compound; and others.

Further, as the flame retarding aid for drip prevention, a compound such as tetrafluoroethylene and the like may be added.

As the antibacterial agent or antifungal agent, there may be mentioned an organic compound such as an imidazole compound, a thiazole compound, a nitrile compound, a haloalkyl compound, a pyridine compound and the like; an inorganic substance and an inorganic compound such as silver, a silver based compound, a zinc based compound, a copper based compound, a titanium based compound, and the like; and others. Among these compounds, silver and a silver based compound are desirable because of the high thermal stability and high performance.

The silver based compounds include a silver complex and a silver salt of a fatty acid, phosphoric acid and the like. If silver and a silver based compound are used as an antibacterial agent or an antifungal agent, these substances may be used after being supported on a porous structure such as zeolite, silica gel, zirconium phosphate, calcium phosphate, hydrotalcite, hydroxyapatite, calcium silicate and the like.

In addition, in the case of producing a foam molded article, a foaming agent may be added. In the case of producing a foam molded article in the present invention, the foaming agent is preferably an organic or inorganic chemical foaming agent.

The chemical foaming agents include azodicarbonamide (ADCA), azobisisobutylonitrile (AIBN), N,N'-dinitrosopentamethylenetetramine (DPT), 4,4'-oxybis(benzenesulfonyl hydrazide) (OBSH), sodium acid carbonate (sodium hydrogen carbonate), ammonium carbonate and a mixture of two or more kinds of these compounds. A master batch of a foaming agent which is improved in handling property may be used.

Further, in addition to the foaming agent, a foaming auxiliary agent may be used. The foaming auxiliary agents include a zinc compound, an urea compound, an acidic substance and amines.

The other additives include a coloring agent, a pigment, a plasticizer, an anti-aging agent, an oil and the like.

<Composition Ratio of Raw Materials>

The composition ratio of a polyolefinic resin to a polyethylene wax which are used as raw materials of the present invention is as follows. In the case of using the polyethylene (1) as the polyolefinic resin, the composition ratio of the polyethylene (1) to the polyethylene wax is not particularly limited, as long as the properties of the molded article

to be obtained are not impaired. However, the amount of the polyethylene wax is usually from 0.01 to 10 parts by weight, preferably from 0.1 to 5 parts by weight and more preferably from 0.3 to 3 parts by weight, based on 100 parts by weight of the polyethylene(1). When the polyethylene (1) and the polyethylene wax are used in an amount within the range, the improvement effect of the flowability at the time of T-die molding is large. Furthermore, the molding rate is further increased, and the productivity therefore tends to increase. Further, the mechanical properties inherent in polyethylene (1) tend to be excellent. In addition, the molding may be performed at a lower temperature and the cooling time is reduced in some cases, compared to the case where the T-die molding is performed without adding the polyethylene wax. Furthermore, the thermal deterioration of the resin is suppressed by lowering the molding temperature, and the reduction of the resin strength as well as the burning or black specks of the resin may be suppressed in some cases.

The composition ratio of the polyolefinic resin to the polyethylene wax which are used as raw materials of the present invention is as follows. In the case of using the polyethylene (2) as the polyolefinic resin, the composition ratio of the polyethylene (2) to the polyethylene wax which are used as raw materials of the present invention is not particularly limited, as long as the properties of the molded article to be obtained are not impaired. However, the amount of the polyethylene wax is usually from 0.01 to 10 parts by weight, preferably from 0.1 to 5 parts by weight, more preferably from 0.3 to 3 parts by weight and especially preferably from 0.5 to 2 parts by weight, based on 100 parts by weight of the polyethylene. When the polyethylene (2) and the polyethylene wax are used in an amount within the range, the improvement effect of the flowability at the time of T-die molding is large. Furthermore, the molding rate is further increased, and the productivity therefore tends to increase. Further, the mechanical properties inherent in polyethylene (2) tend to be excellent. In addition, even when vacuum molding is performed using the resulting molded article, the formability is more excellent and drawdown is unlikely to be observed. Further, the molding may be performed at a lower temperature and the cooling time is reduced in some cases, compared to the case where the T-die molding is performed without adding the polyethylene wax. Furthermore, the thermal deterioration of the resin is suppressed by lowering the molding temperature, and the reduction of the resin strength as well as the burning or black specks of the resin may be suppressed in some cases. Especially when the polyethylene wax is used in an amount of 2 parts by weight or less based on 100 parts by weight of the polyethylene (2), the mechanical properties are more likely to be improved, compared to the case where only a polyethylene is used.

The composition ratio of the polyolefinic resin to the polyethylene wax which are used as raw materials of the present invention is as follows. In the case of using the polypropylene (1) as the polyolefinic resin, the composition ratio of the polypropylene (1) to the polyethylene wax which are used as raw materials of the present invention is not particularly limited, as long as the properties of the molded article to be obtained are not impaired. However, the amount of the polyethylene wax is usually from 0.01 to 10 parts by weight, preferably from 0.1 to 8 parts by weight, more preferably from 0.3 to 6 parts by weight and especially preferably from 0.5 to 5 parts by weight, based on 100 parts by weight of the polypropylene (1). When the polypropylene (1) and the polyethylene wax are used in an amount within the range, the improvement effect of the flowability at the time of T-die molding is large. Furthermore, the molding rate is further increased, and the productivity therefore tends to increase. Further, the mechanical properties and optical properties inherent in the polypropylene (1) are unlikely to be impaired. Furthermore, even when vacuum molding is performed using the resulting molded article, the formability tends to be more excellent and drawdown is unlikely to be observed. In addition, the molding may be performed at a lower temperature and the cooling time is reduced in some cases, compared to the case where the T-die molding is performed without adding the polyethylene wax. Furthermore, the thermal deterioration of the resin is suppressed by lowering the molding temperature, the reduction of the resin strength as well as the burning or black specks of the resin may be suppressed in some cases.

The composition ratio of the polyolefinic resin to the polyethylene wax which are used as raw materials of the present invention is as follows. In the case of using a resin mixture of the polypropylene (2) and an olefinic elastomer as a polyolefinic resin, the resin mixture contains 55 to 95% by weight of the polypropylene (2) and 5 to 45% by weight of the olefinic thermoplastic elastomer, based on the total amount of 100% by weight of the polypropylene (2) and the olefinic elastomer. The weight ratio is preferably in the range where the content of the polypropylene (2) is from 60 to 90% by weight and the content of the olefinic elastomer is from 10 to 40% by weight, and more preferably in the range where the content of the polypropylene (2) is from 70 to 90% by weight and the content of the olefinic elastomer is from 10 to 30% by weight, based on the total amount of 100% by weight of the polypropylene (2) and the olefinic elastomer. If the content ratio of the polypropylene (2) to the olefinic elastomer is within the above range, a molded article excellent in balance between impact resistance and transparency may be obtained.

In the composition ratio of a resin mixture composed of the polypropylene (2) and the olefinic elastomer to the polyethylene wax, which are used as raw materials of the present invention, the amount of the polyethylene wax is in the range of 0.01 to 10 parts by weight based on the 100 parts by weight of the resin mixture components. The composition ratio is preferably in the range of from 1 to 5 parts by weight, more preferably from 1 to 4 parts by weight and especially preferably from 1 to 2 parts by weight. When the polyethylene wax is used for the resin mixture composed of polypropylene and an olefinic elastomer in a composition ratio within the range, the improvement effect of the flowability at the time of T-die molding is large. Furthermore, the molding rate is further increased, and the productivity therefore tends to increase.

In addition, the mechanical properties inherent in the polypropylene resin mixture composed of the polypropylene (2) and the olefinic elastomer are more unlikely to be impaired. Further, the molding may be performed at a lower temperature and the cooling time is reduced in some cases, compared to the case where the injection molding is performed without adding the polyethylene wax. Furthermore, the thermal deterioration of the resin is suppressed by lowering the molding temperature, and the reduction of the resin strength as well as the burning or black specks of the resin may be suppressed in some cases. In addition, when the polyethylene wax is used in an amount of less than 5 parts by weight based on 100 parts by weight of the resin mixture components (the polypropylene and the olefinic elastomer), the optical properties tend to be almost equal or tend to be more excellent, even compared to those of a polypropylene resin composition to which wax is not added.

<T-die Molding>

In a process for producing a molded article of the present invention, the raw materials are subjected to T-die molding.

The T-die molding process is not particularly limited. Generally, an olefinic resin such as polyethylene, polypropylene or a polypropylene resin mixture and the like and a raw material such as a polyethylene wax and the like, which are added from a hopper, are melt-kneaded in an extruding machine. The melt-kneaded product may be extruded from a T-die installed at the tip of the extruding machine, may be cooled by a cooling roll and the like, and may be winded using a winding device and the like to produce a molded article (a sheet or film).

There is no limitation on a method for adding a polyethylene wax and an olefinic resin such as polyethylene, polypropylene or a polypropylene resin mixture and the like into the extruding machine. For example, the olefinic resin and the polyethylene wax may be separately added as is into the extruding machine, or the olefinic resin and the polyethylene wax are dry-blended and then the blended material may be added into the extruding machine. In addition, the olefinic resin and the polyethylene wax may be melt-kneaded in advance to obtain a master batch and then the master batch may be added into the extruding machine. The examples of the equipment used for dry blending include a high speed mixer such as a Henschel mixer and the like, a tumbler mixer, and the like. The examples of the devices used for melt-kneading include a plast-mill, a kneader, a roll mixer, a Bambury mixer, a Brabender mill, a single-screw extruder, a twin-screw extruder and the like.

In the present invention, a molded article in a form of a film or sheet may be obtained by the T-die molding. The film (sheet) obtained by T-die molding may be a monolayer film (sheet) or a multilayer film (sheet). The monolayer film (sheet) may be obtained by the T-die molding. The multilayer film (sheet) may be produced by, for example, melt-kneading the resin compositions for each layer of the film (sheet) by use of separate extruding machines, adding the melt-kneaded products into a T-die for coextrusion under pressure, and further simultaneously extruding the melt-kneaded products from a slit of the die, cooling the resulting product by a cooling roll and the like, and winding the cooled product by a winding device and the like.

In addition, in the multilayer film obtained by the present invention, at least one layer is formed by a resin composition obtained by using an olefinic resin such as the polyethylene, polypropylene or a polypropylene resin mixture or the like described above and a polyethylene wax as raw materials, but the other layers may be formed by other thermoplastic resin compositions. As a condition of extruding the other thermoplastic resin compositions, a T-die molding condition used in the thermoplastic resin may be generally employed.

The resin temperature in extruding the melt-kneaded product from the die is preferably from 180 to 250°C. If the resin temperature in extruding from the die is within the range, the resulting molded article is excellent in gloss. Further, a molded article excellent in resin strength may be stably produced.

In the present invention, if a foaming agent or a foaming agent and a foaming auxiliary agent are added in kneading an olefinic resin such as polyethylene, polypropylene or a polypropylene resin mixture or the like and a polyethylene wax in an extruder, a foam molded article may be obtained.

In the present invention, a molded article (a film or sheet) obtained by the T-die molding may be further drawn. The drawing methods include a tenter method (vertical and horizontal drawing, horizontal and vertical drawing), a simultaneous biaxial drawing method, a uniaxial drawing method and other well-known drawing methods.

In addition, the other layers may be laminated through a layer formed by an adhesive. The adhesives include an isocyanate adhesive, a polyester adhesive, a urethane adhesive and an organic titanium compound.

When other layers are formed by adhesion, the other layer may be formed by the thermoplastic resin compositions and further may be formed by paper, a metal, an inorganic substance, a wood material and the like.

Such a molded article obtained by T-die molding, namely a sheet, film and the like, may be further subjected to molding such as vacuum molding, and the resulting molded article may be used as a secondary molded article.

[Vacuum Molding]

A molded article obtained by the T-die molding may be further molded in vacuo to form a secondary molded article.

The process of vacuum molding is not particularly limited. A secondary molded article may be generally produced by softening a molded article in a form of a sheet or film by heating to adhere to a mold and adhering the molded article to the mold by discharging air from the exhaust outlet installed in the mold, and then by cooling the resulting mold article.

The processes of vacuum molding include other well-known processes such as straight molding, drape molding, plug assist molding, air-blow molding and the like.

The surface temperature of a molded article in vacuum molding is usually from 150 to 250°C, preferably from 160 to 220°C and more preferably from 160 to 200°C. If the surface temperature is within the range, the drawdown properties and formability are improved and the thickness becomes uniform.

The molded article thus obtained may be further fabricated where necessary to be used for various applications.

[EXAMPLES]

Hereinafter, the present invention will be explained in more detail with reference to Examples, but it should be construed that the present invention is in no way limited to these examples.

Hereinafter, the present invention will be explained in more detail with reference to Examples, but it should be construed that the present invention is in no way limited to these examples.

In the following Examples, the properties of polyethylene and polyethylene waxes were measured in the following manner.

(Number Average Molecular Weight (Mn))

The number-average molecular weight (Mn) was determined by GPC measurement. The measurement was conducted under the following conditions. In addition, the number average molecular weight (Mn) was determined by preparing a calibration curve using a commercially available monodisperse standard polystyrene, and then calculating the number average molecular weight based on the following conversion method.

Apparatus: Gel permeation Chromatograph Alliance GPC 2000 System (manufactured by Waters Corporation)
Solvent: o-dichlorobenzene
Column: TSK gel column (manufactured by Tosoh Corporation)x4
Flow rate: 1.0 mL/min
Sample: 0.15 mg/mL o-dichlorobenzene solution
Temperature: 140°C
Molecular weight conversion: In terms of PE/universal calibration method

In addition, for the calculation of the universal calibration, the following coefficients of Mark-Houwink viscosity equations are used.

The coefficient of polystyrene (PS): KPS=1.38 x $10^{-4}$, aPS=0.70

The coefficient of polyethylene (PE): KPE=5.06 x $10^{-4}$, aPE=0.70

(A Value and B Value)

The ratio of the components having a molecular weight of 1,000 or less was determined in % by weight from the GPC measurement results, which was used as the A value. In addition, the ratio of the components having a molecular weight of 20, 000 or more was determined in % by weight from the GPC measurement results, which was used as the B value.

(Melt Viscosity)

The melt viscosity was measured at 140°C using a Brookfield viscometer.

(MI)

The measurement was conducted under the conditions of a temperature of 190°C and a test load of 21.18 N in accordance with JIS K7210.

(Density)

The density was measured by the density gradient tube method in accordance with JIS K7112.

(Melting Point)

The melting point was measured by a differential scanning calorimeter (DSC) [DSC-20, manufactured by Seiko Instruments Inc.]. Firstly, a measurement sample was heated to 200°C once and the temperature was kept for 5 minutes, and then the sample was immediately cooled to room temperature. Approximately 10 mg of the sample thus treated was subjected to DSC measurement under the conditions of the temperature increase rate of 10°C/min and the temperature range from -20 to 200°C. The value of endothermic peak of the curve obtained from the measurement result was used as a melting point.

(Crystallization Temperature)

The crystallization temperature (Tc, °C) was measured under a condition of the temperature decrease rate of 2°C/min in accordance with ASTM D 3417-75.
In the following Examples, the properties of the polypropylene (2) were measured in the following manner.

(MI)

The measurement was conducted under the conditions of a temperature of 230°C and a test load of 21.18 N in accordance with JIS K7210.

(Density)

The density was measured by the density gradient tube method in accordance with JIS K7112.
In the following Examples, the properties of the olefinic elastomer were measured in the following manner.

(MI)

In the case of the ethylene-α-olefin random copolymer: The measurement was conducted under the conditions of a temperature of 190°C and a test load of 21.18 N in accordance with JIS K7210.
In the case of the propylene-α-olefin random copolymer: The measurement was conducted under the conditions of a temperature of 230°C and a test load of 21.18 N in accordance with JIS K7210.

(Density)

The density was measured by the density gradient tube method in accordance with JIS K7112.

(Synthesis of Polyethylene Wax (1))

The polyethylene wax (1) was synthesized in the following manner using a metallocene catalyst.
A 2L inner volume stainless steel autoclave sufficiently purged with nitrogen and held at 25°C was charged with 770 mL of hexane and 115 g of propylene. Subsequently, the temperature in the system was elevated to 150°C, and then 0.3 mmol of triisobutylaluminum, 0.04 mmol of dimethylaniliniumtetrakis(pentafluorophenyl)borate and 0.0005 mmol of bis(cyclopentadienyl)zirconium dichloride were added by pressurization with ethylene, and the polymerization was started. Thereafter, only ethylene was continuously fed so that the total pressure was kept at 3.0 MPa (gauge pressure) and the polymerization was continued at 155°C for 30 minutes.
A small amount of ethanol was added to the system to terminate the polymerization, and the unreacted ethylene was purged out. The resulting polymer solution was dried overnight at 100°C under reduced pressure to obtain 46 g of a polyethylene wax (1) . The resulting polyethylene wax (1) had a number average molecular weight (Mn) of 800, a weight average molecular weight (Mw) of 1,500, a melt viscosity of 40 mPa·, a density of 897 kg/$m^3$ and a melting point of 78.8°C. In addition, the A value was 23.5% by weight and the B value was 0.01% by weight. The results are shown in Table 1.

(Synthesis of Polyethylene Wax (2))

The polyethylene wax (2) was synthesized in the following manner using a metallocene catalyst.

A 2L inner volume stainless steel autoclave sufficiently purged with nitrogen and held at 25°C was charged with 930 mL of hexane and 35 g of propylene. Subsequently, the temperature in the system was elevated to 150°C, and then 0.3 mmol of triisobutylaluminum, 0.04 mmol of dimethylaniliniumtetrakis(pentafluorophenyl)borate and 0.0005 mmol of bis(cyclopentadienyl)zirconium dichloride were added by pressurization with ethylene, and the polymerization was started. Thereafter, only ethylene was continuously fed so that the total pressure was kept at 3.0 MPa (gauge pressure) and the polymerization was continued at 155°C for 30 minutes.

A small amount of ethanol was added to the system to terminate the polymerization, and the unreacted ethylene was purged out. The resulting polymer solution was dried overnight at 100°C under reduced pressure to obtain 40 g of a polyethylene wax (2). The resulting polyethylene wax (2) had a number average molecular weight (Mn) of 1,300, a weight average molecular weight (Mw) of 3,300, a melt viscosity of 90 mPa·s, a density of 948 kg/$m^3$ and a melting point of 115.4°C. In addition, the A value was 19.8% by weight and the B value was 0.3% by weight. The results are shown in Table 1.

(Synthesis of Polyethylene Wax (3))

The polyethylene wax (3) was synthesized in the following manner using a metallocene catalyst.

A 2L inner volume stainless steel autoclave sufficiently purged with nitrogen and held at 25°C was charged with 700 mL of hexane and 150 g of propylene. Subsequently, the temperature in the system was elevated to 140°C, and then 0.3 mmol of triisobutylaluminum, 0.04 mmol of dimethylaniliniumtetrakis(pentafluorophenyl)borate and 0.0002 mmol of bis(cyclopentadienyl)zirconium dichloride were added by pressurization with ethylene, and the polymerization was started. Thereafter, only ethylene was continuously fed so that the total pressure was kept at 3.0 MPa (gauge pressure) and the polymerization was continued at 140°C for 30 minutes.

A small amount of ethanol was added to the system to terminate the polymerization, and the unreacted ethylene was purged out. The resulting polymer solution was dried overnight at 100°C under reduced pressure to obtain 40 g of a polyethylene wax (3) . The resulting polyethylene wax (3) had a number average molecular weight (Mn) of 2, 500, a weight average molecular weight (Mw) of 7,000, a melt viscosity of 600 mPa·s, a density of 880 kg/$m^3$ and a melting point of 68.2°C. In addition, the A value was 7.0% by weight and the B value was 4.1% by weight. The results are shown in Table 1.

(Synthesis of Polyethylene Wax (4))

The polyethylene wax (4) was synthesized in the following manner using a metallocene catalyst.

A 2L inner volume stainless steel autoclave sufficiently purged with nitrogen and held at 25°C was charged with 920 mL of hexane and 50 g of propylene. Subsequently, the temperature in the system was elevated to 150°C, and then 0.3 mmol of triisobutylaluminum, 0.04 mmol of dimethylaniliniumtetrakis(pentafluorophenyl)borate and 0.0002 mmol of bis(cyclopentadienyl)zirconium dichloride were added by pressurization with ethylene, and the polymerization was started. Thereafter, only ethylene was continuously fed so that the total pressure was kept at 3.0 MPa (gauge pressure) and the polymerization was continued at 150°C for 30 minutes.

A small amount of ethanol was added to the system to terminate the polymerization, and the unreacted ethylene was purged out. The resulting polymer solution was dried overnight at 100°C under reduced pressure to obtain 40 g of a polyethylene wax (4) . The resulting polyethylene wax (4) had a number average molecular weight (Mn) of 3, 000, a weight average molecular weight (Mw) of 8,200, a melt viscosity of 1,000 mPa·s, a density of 932 kg/$m^3$ and a melting point of 105.0°C. In addition, the A value was 4.6% by weight and the B value was 6.7% by weight. The results are shown in Table 1.

[Table 1]

Table 1: Properties of Polyolefin Wax

| | Mn | Mw | Density (kg/m$^3$) | Melt Viscosity K (mPa·s) | B Value (% by weight) | A Value (% by weight) | 0.0075× K | 230×$K^{-0.537}$ | DSC, Melting Point (°C) | Crystallization Temperature (°C) | Value of the left side of the Expression (III) |
|---|---|---|---|---|---|---|---|---|---|---|---|
| 30200BT | 2000 | 5000 | 913 | 300 | 2.2 | 9.3 | 2.3 | 10.8 | 98.2 | 86.6 | 91.41 |
| 48070BT | 3400 | 9000 | 902 | 1350 | 8.7 | 4.7 | 10.1 | 4.8 | 89.5 | 83.8 | 85.90 |
| 40800T | 2400 | 7000 | 980 | 600 | 4.2 | 7.3 | 4.5 | 7.4 | 127.7 | 116.2 | 124.98 |
| Polyethylene wax (1) | 800 | 1500 | 897 | 40 | 0.01 | 23.5 | 0.3 | 31.7 | 78.8 | 62.9 | 83.40 |
| Polyethylene wax (2) | 1300 | 3300 | 948 | 90 | 0.3 | 19.8 | 0.7 | 20.5 | 115.4 | 106.3 | 108.95 |
| Polyethylene wax (3) | 2500 | 7000 | 880 | 600 | 4.1 | 7.0 | 4.5 | 7.4 | 68.2 | 56.8 | 74.88 |
| Polyethylene wax (4) | 3000 | 8200 | 932 | 1000 | 6.7 | 4.6 | 7.5 | 5.6 | 105.0 | 95.2 | 100.93 |
| 10500 | 700 | 1300 | 960 | 18 | 0 | 47.8 | 0.1 | 48.7 | 119.6 | 108.1 | 114.96 |
| 420P | 2000 | 6400 | 930 | 700 | 6.2 | 8.3 | 5.3 | 6.8 | 112.3 | 101.8 | 99.93 |
| A-C6 | 1800 | 6500 | 913 | 420 | 3.3 | 6.5 | 3.2 | 9.0 | 103.2 | 92.3 | 91.41 |

In the following Examples, the properties of a film were measured in the following manner.

(Transparency)

The haze of films formed with the same film thickness was measured in accordance with JIS K7105.

(Gloss)

The gloss was measured at a reflection angle of 60° using a gloss meter.

(Productivity)

In the case of using the polyethylene (1) or polyethylene (2) as a polyolefinic resin of a raw material, the productivity was evaluated by a resin pressure in T-die molding and a torque (A) applied to a screw.

In the case of using the polypropylene (1), or a polypropylene resin mixture composed of the polypropylene (2) and an olefinic elastomer as a polyolefinic resin of a raw material, the productivity was evaluated by a resin pressure (MPa) and a load electric power (A) at the time of T-die molding.

(Mechanical Properties)

When the polyethylene (1) is used as a polyolefinic resin in a composition of a polyolefinic resin and a polyethylene wax for the raw material,
the test specimens of No. 5 were prepared from the film obtained and a tensile test was conducted at a speed of 500 mm/min at 23°C to measure a tensile stress at yield, in accordance with JIS K7127.

When the polyethylene (2) is used as a polyolefinic resin in a composition of a polyolefinic resin and a polyethylene wax for the raw material,
the test specimens of No. 5 type were prepared from the film obtained and a tensile test was conducted at a speed of 200 mm/min at 23°C to measure a tensile stress at yield, in accordance with JIS K7127.

When the polypropylene (1) is used as a polyolefinic resin in a composition of a polyolefinic resin and a polyethylene wax for the raw material,
the test specimens of No. 4 specified in ASTM D638 were prepared and a tensile test was conducted at a speed of 50 mm/min at 23°C to measure a tensile stress at yield.

When a polypropylene resin mixture composed of the polypropylene (2) and an olefinic elastomer is used as a polyolefinic resin in a composition of a polyolefinic resin and a polyethylene wax for the raw material,
the test specimens of No. 4 specified in ASTM D638 were prepared and a tensile test was conducted at a speed of 50 mm/min at 23°C to measure a tensile stress at yield.

(Examples in which Polyolefinic Resin is Polyethylene (1))

[Example 1A]

100 parts by mass of a linear low density polyethylene resin (Evolue SP2040; manufactued by Prime Polymer Co., Ltd., density=918 (kg/$m^3$), MI=3.8 g/10 min) was mixed with 2 parts by mass of a metallocene polyethylene wax (Excerex 30200BT; produced by Mitsui Chemicals Inc. , density=913 (kg/$m^3$), Mn=2, 000, Value=9.3 (%), B value=2.2 (%), melt viscosity=300 (mPa·s)). Subsequently, the cylinder temperature and the die temperature of a single screw extruder (Tanaka Iron Works Co., Ltd.) having a screw diameter of φ20 mm equipped with a T-die having a lip width of 240 mm were set at 190°C and 200°C, respectively. The resulting mixture was added to the extruder and was melt-kneaded at a screw rotation speed of 67 rpm. The melt-kneaded product was then extruded from the T-die. Thereafter, the extruded product was cooled by a cooling roll set at 40°C to prepare a film with a thickness of 100 μm. At the time of melt-kneading, the torque was 3.9 A and the resin pressure was 4.9 MPa, and the extrusion was performed stably. In addition, the resulting film had no thickness irregularity and was excellent in moldability. The resulting film had a tensile stress at break of 44.4 MPa, a haze of 7.7% and a gloss of 109%. The results are shown in Table 2.

[Example 2A]

The T-die molding was conducted in the same manner as in Example 1A except that the polyethylene wax was changed to a metallocene polyethylene wax (Excerex 48070BT; manufactured by Mitsui Chemicals Inc., density=902 (kg/$m^3$), Mn=3,400, A value=4.7 (%), B value=8.7 (%), melt viscosity=1,350 (mPa·s) The results are shown in Table 2.

[Example 3A]

The T-die molding was conducted in the same manner as in Example 1A except that the polyethylene wax was changed to a metallocene polyethylene wax (Excerex 40800T; manufactured by Mitsui Chemicals Inc., density=980 (kg/$m^3$), Mn=2,400, A value=7.3 (%), B value=4.2 (%), melt viscosity=600 (mPa·s)). The results are shown in Table 2.

[Example 4A]

The T-die molding was conducted in the same manner as in Example 1A except that the polyethylene wax was changed to a polyethylene wax (1) (density=897 (kg/$m^3$), Mn=800, Avalue=23.5 (%), B value=0.01 (%), melt viscosity=40 (mPa·s)). The results are shown in Table 2.

[Example 5A]

The T-die molding was conducted in the same manner as in Example 1A except that the polyethylene wax was changed to a polyethylene wax (2) (density=948 (kg/$m^3$), Mn=1,300, A value=19.8 (%), B value=0.3 (%), melt viscosity=90 (mPa·s)). The results are shown in Table 2.

[Example 6A]

The T-die molding was conducted in the same manner as in Example 2A except that the additive amount of a metallocene polyethylene wax (Excerex 48070BT; manufactured by Mitsui Chemicals Inc.) was changed to 1 part by mass. The results are shown in Table 2.

[Example 7A]

The T-die molding was conducted in the same manner as in Example 2A except that the additive amount of a metallocene polyethylene wax (Excerex 48070BT; manufactured by Mitsui Chemicals Inc.) was changed to 5 parts by mass. The results are shown in Table 2.

[Comparative Example 1A]

The cylinder temperature and the die temperature of a single screw extruder (Tanaka Iron Works Co., Ltd.) having a screw diameter of φ20 mm equipped with a T-die having a lip width of 240 mm were set at 190°C and 200°C, respectively. A linear low density polyethylene resin (Evolue SP2040; manufactured by Prime Polymer Co., Ltd.) was added to the extruder and was melt-kneaded at a screw rotation speed of 67 rpm. The melt-kneaded product from the T-die was then extruded. Thereafter, the extruded product was cooled by a cooling roll set at 40°C to prepare a film with a thickness of 100 μm. At the time of melt-kneading, the torque was 4.9 A and the resin pressure was 5.2 MPa. The resulting film had a tensile stress at break of 42.8 MPa, a haze of 9.6% and a gloss of 102%. The results are shown in Table 2.

[Comparative Example 2A]

The T-die molding was conducted in the same manner as in Example 1A except that the polyethylene wax was changed to a polyethylene wax (Hi-wax 420P; manufactured by Mitsui Chemicals Inc., density=930 (kg/$m^3$), Mn=2,000, A value=8.3 (%), B value=6.2 (%), melt viscosity=700 (mPa·s)). The results are shown in Table 2. As compared to a film made of polyethylene alone in Comparative Example 1A, the resulting film is improved in formability in molding, but tends to decrease in tensile stress at break and has an increased haze and a reduced gloss, and optical properties inherent in polyethylene are greatly deteriorated.

[Comparative Example 3A]

The T-die molding was conducted in the same manner as in Example 1A except that the polyethylene wax was changed to a polyethylene wax (A-C6; manufactured by Honeywell International, Inc., density=913 (kg/$m^3$), Mn=1,800, A value=6.5 (%), B value=3.3 (%), melt viscosity=420 (mPa·s)). The results are shown in Table 2. As compared to a film made of polyethylene alone in Comparative Example 1A, the resulting film is improved in formability in molding, but tends to decrease in tensile stress at break and has an increased haze and a reduced gloss, and optical properties inherent in polyethylene are greatly deteriorated.

[Example 8A]

100 parts by mass of a linear low density polyethylene resin (MIRASON 18SP; manufactured by Prime Polymer Co., Ltd., density=921 (kg/$m^3$), MI=7 g/10 min) was mixed with 2 parts by mass of a metallocene polyethylene wax (Excerex 30200BT; manufactured by Mitsui Chemicals Inc., density=913 (kg/$m^3$), Mn=2, 000, A value=9.3 (%), B value=2.2 (%), melt viscosity=300 (mPa·s)). Subsequently, the cylinder temperature and the die temperature of a single screw extruder (Tanaka Iron Works Co., Ltd.) having a screw diameter of φ20 mm equipped with a T-die having a lip width of 240 mm were set at 200°C and 210°C, respectively. The resulting mixture was added to the extruder and was melt-kneaded at a screw rotation speed of 67 rpm. The melt-kneaded product was then extruded from the T-die. Thereafter, the extruded product was cooled by a cooling roll set at 30°C to prepare a film with a thickness of 100 μm. At the time of melt-kneading, the torque was 3.4 A and the resin pressure was 3.3 MPa, and the extrusion was performed stably. In addition, the resulting film had no thickness irregularity and was excellent in moldability. The resulting film had a tensile stress at break of 26.3 MPa, a haze of 11.4% and a gloss of 70%. The results are shown in Table 3.

[Example 9A]

The T-die molding was conducted in the same manner as in Example 8A except that the polyethylene wax was changed to a metallocene polyethylene wax (Excerex 48070BT; manufactured by Mitsui Chemicals Inc., density=902 (kg/$m^3$), Mn=3,400, A value=4.7 (%), B value=8.7 (%), melt viscosity=1,350 (mPa·s) The results are shown in Table 3.

[Example 10A]

The T-die molding was conducted in the same manner as in Example 8A except that the polyethylene wax was changed to a metallocene polyethylene wax (Excerex 40800T; manufactured by Mitsui Chemicals Inc., density=980 (kg/$m^3$), Mn=2,400, A value=7.3 (%), B value=4.2(%), melt viscosity=600 (mPa·s)). The results are shown in Table 3.

[Example 11A]

The T-die molding was conducted in the same manner as in Example 8A except that the polyethylene wax was changed to a polyethylene wax (1) (density=897 (kg/$m^3$), Mn=800, A value=23.5 (%), B value=0.01 (%), melt viscosity=40 (mPa·s) The results are shown in Table 3.

[Example 12A]

The T-die molding was conducted in the same manner as in Example 8A except that the polyethylene wax was changed to a polyethylene wax (2) (density=948 (kg/$m^3$), Mn=1,300, A value=19.8 (%), B value=0.3 (%), melt viscosity=90 (mPa·s)). The results are shown in Table 3.

[Example 13A]

The T-die molding was conducted in the same manner as in Example 9A except that the additive amount of the metallocene polyethylene wax (Excerex 48070BT; manufactured by Mitsui Chemicals Inc.) was changed to 1 part by mass. The results are shown in Table 3.

[Example 14A]

The T-die molding was conducted in the same manner as in Example 9A except that the additive amount of the metallocene polyethylene wax (Excerex 48070BT; manufactured by Mitsui Chemicals Inc.) was changed to 5 parts by mass. The results are shown in Table 3.

[Comparative Example 4A]

The cylinder temperature and the die temperature of a single screw extruder (Tanaka Iron Works Co., Ltd.) having a screw diameter of φ20 mm equipped with a T-die having a lip width of 240 mm were set at 200°C and 210°C, respectively. A low density polyethylene resin (MIRASON 18SP; manufactured by Prime Polymer Co., Ltd.) was added to the extruder and was melt-kneaded at a screw rotation speed of 67 rpm. The melt-kneaded product was then extruded from the T-die. Thereafter, the extruded product was cooled by a cooling roll set at 30°C to prepare a film with a thickness of 100 μm. At the time of melt-kneading, the torque was 3.0 A and the resin pressure was 2.8 MPa. The resulting film

had a tensile stress at break of 25.4 MPa, a haze of 12.9% and a gloss of 66%. The results are shown in Table 3.

[Comparative Example 5A]

The T-die molding was conducted in the same manner as in Example 8A except that the polyethylene wax was changed to a polyethylene wax (Hi-wax 420P; manufactured by Mitsui Chemicals Inc., density=930 (kg/$m^3$), Mn=2,000, A value=8.3 (%), B value=6.2 (%), melt viscosity=700 (mPa·s)). The results are shown in Table 3. As compared to a film made of polyethylene alone in Comparative Example 4A, the resulting film is improved in formability in molding, but tends to decrease in tensile stress at break and has an increased haze and a reduced gloss, and optical properties inherent in polyethylene are greatly deteriorated.

[Comparative Example 6A]

The T-die molding was conducted in the same manner as in Example 8A except that the polyethylene wax was changed to a polyethylene wax (A-C6; manufactured by Honeywell International, Inc., density=913 (kg/$m^3$), Mn=1,800, A value=6.5 (%), B value=3.3 (%), melt viscosity=420 (mPa·s)). The results are shown in Table 3. As compared to a film made of polyethylene alone in Comparative Example 4A, the resulting film is improved in formability in molding, but tends to decrease in tensile stress at break and has an increased haze and a reduced gloss, and optical properties inherent in polyethylene are greatly deteriorated.

[Table 2]

Table 2: T-die Molding Results

| Example/ Comparative No. | Example | Example 1A | Example 2A | Example 3A | Example 4A | Example 5A | Example 6A | Example 7A | Comparative Example 1A | Comparative Example 2A | Comparative Example 3A |
|---|---|---|---|---|---|---|---|---|---|---|---|
| Polyethylene | Type | SP2040 | SP2040 | SP2040 | SP2040 | SP2040 | SP2040 | SP2040 | SP2040 | SP2040 | SP2040 |
| | Quantity | 100 | 100 | 100 | 100 | 100 | 100 | 100 | 100 | 100 | 100 |
| Polyethylene wax | Type | 30200BT | 4B070BT | 40800T | Polyethylene Wax (1) | Polyethylene Wax (2) | 48070BT | 48070BT | - | 420P | A-C6 |
| | Quantity | 2 | 2 | 2 | 2 | 2 | 1 | 5 | - | 2 | 2 |
| Torque | | 3.9 | 3.7 | 3.7 | 3.8 | 3.8 | 4.2 | 3.3 | 4.9 | 3.8 | 4.2 |
| Resin Pressure | | 4.9 | 4.8 | 4.2 | 5.1 | 4.5 | 5.0 | 4.2 | 5.2 | 4.9 | 6.1 |
| Tensile Stress at Break | | 44.4 | 43.2 | 40.8 | 42.5 | 42.1 | 43.5 | 44.8 | 42.8 | 41.5 | 41.7 |
| Haze | | 7.7 | 7.2 | 9.8 | 7.7 | 9.1 | 8.8 | 7.0 | 9.6 | 11.3 | 11.6 |
| Gloss | | 109 | 108 | 111 | 115 | 108 | 107 | 113 | 102 | 95 | 83 |

[Table 3]

Table 3: T-die Molding Results

| Example/ Comparative No. | Example | Example 8A | Example 9A | Example 10A | Example 11A | Example 12A | Example 13A | Example 14A | Comparative Example 4A | Comparative Example 5A | Comparative Example 6A |
|---|---|---|---|---|---|---|---|---|---|---|---|
| Polyethylene | Type | 18SP | 18SP | 18SP | 18SP | 18SP | 18SP | 18SP | 18SP | 18SP | 18SP |
| | Quantity | 100 | 100 | 100 | 100 | 100 | 100 | 100 | 100 | 100 | 100 |
| Polyethylene wax | Type | 30200BT | 48070BT | 40800T | Polyethylene Wax (1) | Polyethylene Wax (2) | 48070BT | 48070BT | - | 420P | A-C6 |
| | Quantity | 2 | 2 | 2 | 2 | 2 | 1 | 5 | - | 2 | 2 |
| Torque | | 3.4 | 3.3 | 4.0 | 3.0 | 3.5 | 3.7 | 2.9 | 4.3 | 3.5 | 3.3 |
| Resin Pressure | | 3.3 | 3.2 | 3.4 | 2.9 | 3.0 | 3.4 | 3.0 | 3.5 | 3.3 | 2.9 |
| Tensile Stress at Break | | 26.3 | 25.6 | 24.2 | 25.2 | 24.9 | 25.8 | 26.6 | 25.4 | 24.6 | 24.7 |
| Haze | | 11.9 | 12.4 | 11.3 | 10.9 | 11.5 | 12.0 | 10.8 | 12.9 | 14.8 | 16.4 |
| Gloss | | 70 | 67 | 70 | 73 | 71 | 68 | 74 | 66 | 62 | 58 |

(Examples in which Polyolefinic Resin is Polyethylene (2))

[Example 1B]

100 parts by mass of a high density polyethylene resin (Hizex 3300F; manufactured by Prime Polymer Co., Ltd., density=952 (kg/$m^3$), MI=1.1 g/10 min (JIS K7210: 190°C/21.18N)) was mixed with 2 parts by mass of a metallocene polyethylene wax (Excerex 40800T; manufactured by Mitsui Chemicals Inc., density=980 (kg/$m^3$), Mn=2, 400, A value=7.4 (%), B value=4.5 (%), melt viscosity=600 (mPa·s)). Subsequently, the cylinder temperature and the die temperature of a single screw extruder (manufactured by Tanaka Iron Works Co., Ltd.) having a screw diameter of φ20 mm equipped with a T-die having a lip width of 240 mm were set at 250°C and 260°C, respectively. The resulting mixture was added to the extruder and was melt-kneaded at a screw rotation speed of 43 rpm. The melt-kneaded product was then extruded from the T-die. Thereafter, the extruded product was cooled by a cooling roll set at 40°C to prepare a film with a thickness of 40 μm. At the time of melt-kneading, the torque was 2.4 A and the resin pressure was 3.0 MPa, and the extrusion was performed stably. In addition, the resulting film had no thickness irregularity and was excellent in moldability. The resulting film had a tensile stress at yield of 22.0 MPa, a haze of 8.1% and a gloss of 110%. The results are shown in Table 4.

[Example 2B]

The T-die molding was conducted in the same manner as in Example 1B except that the polyethylene wax was changed to a metallocene polyethylene wax (Excerex 30200BT; manufactured by Mitsui Chemicals Inc., density=913 (kg/$m^3$), Mn=2,000, A value=9.3, B value=2.2, melt viscosity=300 (mPa·s)). The results are shown in Table 4.

[Example 3B]

The T-die molding was conducted in the same manner as in Example 1B except that the polyethylene wax was changed to a polyethylene wax (1) (density=897 (kg/$m^3$), Mn=800, A value=23.5 (% by weight), B value=0.01 (% by weight), melt viscosity=40 (mPa·s)). The results are shown in Table 4.

[Example 4B]

The T-die molding was conducted in the same manner as in Example 1B except that the polyethylene wax was changed to a polyethylene wax (2) (density=948 (kg/$m^3$), Mn=1,300, A value=19.8 (% by weight), B value=0.3 (% by weight), melt viscosity=90 (mPa·s)). The results are shown in Table 4.

[Example 5B]

The T-die molding was conducted in the same manner as in Example 1B except that the polyethylene wax was changed to a metallocene polyethylene wax (Excerex 10500; manufactured by Mitsui Chemicals Inc., density=960 (kg/$m^3$), Mn=700, A value=0, B value=47.8, melt viscosity=18 (mPa·s)). The results are shown in Table 4.

[Example 6B]

The T-die molding was conducted in the same manner as in Example 1B except that the additive amount of the metallocene polyethylene wax (Excerex 40800T; manufactured by Mitsui Chemicals Inc.) was changed to 0.5 part by mass. The results are shown in Table 4.

[Example 7B]

The T-die molding was conducted in the same manner as in Example 1B except that the additive amount of the metallocene polyethylene wax (Excerex 40800T; manufactured by Mitsui Chemicals Inc.) was changed to 1 part by mass. The results are shown in Table 4.

[Example 8B]

The T-die molding was conducted in the same manner as in Example 1B except that the additive amount of the metallocene polyethylene wax (Excerex 40800T; manufactured by Mitsui Chemicals Inc.) was changed to 5 parts by mass. The results are shown in Table 4.

[Comparative Example 1B]

The cylinder temperature and the die temperature of a single screw extruder (Tanaka Iron Works Co., Ltd.) having a screw diameter of φ20 mm equipped with a T-die having a lip width of 240 mm were set at 250°C and 260°C, respectively. A high density polyethylene resin (Hizex 3300F; manufactured by Prime Polymer Co., Ltd., density=952 (kg/$m^3$), MI=1.1 g/10 min (JIS K7210: 190°C/21.18N)) was added to the extruder and was melt-kneaded at a screw rotation speed of 43 rpm. The melt-kneaded product was then extruded from the T-die. Thereafter, the extruded product was cooled by a cooling roll set at 40°C to prepare a film with a thickness of 40 μm. At the time of melt-kneading, the torque was 2. 8 A and the resin pressure was 4.3 MPa. The resulting film had a tensile stress at yield of 22.0 MPa, a haze of 8.4% and a gloss of 111%. The results are shown in Table 4.

[Comparative Example 2B]

The T-die molding was conducted in the same manner as in Example 1B except that the polyethylene wax was changed to a polyethylene wax (Hi-wax 420P; manufactured by Mitsui Chemicals Inc., density=930 (kg/$m^3$), Mn=2,000, A value=8.3, B value=6. 2, melt viscosity=700 (mPa·s)). The results are shown in Table 4. As compared to a film made of polyethylene alone in Comparative Example 1B, the resulting film is improved in formability in molding, but has significantly decreased tensile stress at break.

[Comparative Example 3B]

The T-die molding was conducted in the same manner as in Example 1B except that the polyethylene wax was changed to a polyethylene wax (A-C6; manufactured by Honeywell International, Inc., density=913 (kg/$m^3$), Mn=1,800, A value=6.5, B value=3.3, melt viscosity=420 (mPa·s)). The results are shown in Table 4. As compared to a film made of polyethylene alone in Comparative Example 1B, the resulting film is improved in formability in molding, but has significantly decreased tensile stress at break.

[Table 4]

Table 4: T-die Molding Results

| Example/Comparative Example No. | | Example 1B | Example 2B | Example 3B | Example 4B | Example 5B | Example 6B | Example 7B | Example 8B | Comparative Example 1B | Comparative Example 2B | Comparative Example 3B |
|---|---|---|---|---|---|---|---|---|---|---|---|---|
| Polyethylene | Type | 3300F | 3300F | 3300F | 3300F | 3300F | 3300F | 3300F | 3300F | 3300F | 3300F | 3300F |
| | Quantity | 100 | 100 | 100 | 100 | 100 | 100 | 100 | 100 | 100 | 100 | 100 |
| Polyethylene wax | Type | 408008T | 302008T | Polyethylene Wax (1) | Polyethylene Wax (2) | 10500 | 40800BT | 40800BT | 40800BT | - | 420P | A-C6 |
| | Quantity | 2 | 2 | 2 | 2 | 2 | 0.5 | 1 | 5 | - | 2 | 2 |
| Torque | A | 2.4 | 2.1 | 2.3 | 2.2 | 2.3 | 2.5 | 2.5 | 2.0 | 2.8 | 2.4 | 2.3 |
| Resin Pressure | MPa | 3.0 | 2.8 | 2.9 | 2.8 | 3.0 | 3.3 | 3.2 | 2.7 | 4.3 | 3.2 | 3.3 |
| Tensile Stress at Yield | MPa | 22.0 | 22.4 | 22.0 | 22.3 | 22.5 | 22.5 | 22.6 | 21.9 | 22.0 | 19.2 | 18.9 |
| Haze | % | 8.1 | 8.0 | 8.0 | 7.9 | 8.0 | 8.1 | 8.0 | 8.3 | 8.4 | 8.0 | 7.9 |
| Gloss | % | 110 | 112 | 112 | 112 | 113 | 112 | 113 | 111 | 111 | 109 | 112 |

The properties of the sheets prepared in Examples 9B to 16B and Comparative Examples 4B to 6B were measured in the following manner.

(Productivity)

The torque (A) applied to the screw in T-die molding was evaluated.

(Mechanical Properties)

The test specimens of No. 4 specified in ASTM D638 were prepared and a tensile test was conducted at a speed of 50 mm/min at 23°C to measure a tensile stress at yield.

(Drawdown Properties)

The resulting sheet was vacuum molded under the conditions of the sheet surface temperature of 180°C and heating time of 30 seconds using a pressure and vacuum forming machine (manufactured by Asano Laboratories Co., Ltd.) whose heater temperature was set at 600°C. The formability (drawdown) in vacuum molding was evaluated by visually observing the drooping degree of the sheet softened by heat in vacuum molding.
Good: The sheet did not droop excessively and vacuum molding was therefore performed without problems
Poor: A sheet drooped excessively and contacted with the heater

(Appearance)

The gloss feeling of the resulting molded article surface was visually observed to be evaluated by comparing with that of a molded article made of polyethylene alone.
Good: The gloss feeling was not changed
Poor: The gloss feeling was deteriorated

[Example 9B]

100 parts by mass of a high density polyethylene resin (Hizex 7800F; manufactured by Prime Polymer Co., Ltd., density=954 (kg/$m^3$), MI=0.04 g/10 min (JIS K7210) was mixed with 2 parts by mass of a metallocene polyethylene wax (Excerex 40800T; manufactured by Mitsui Chemicals Inc., density=980 (kg/$m^3$), Mn=2,400, A value=7.3 (%), B value=4.2 (%), melt viscosity=600 (mPa·s)). Subsequently, the cylinder temperature and the die temperature of a single screw extruder (manufactured by The Japan Steel Works, Ltd.) having a screw diameter of φ120 mm equipped with a T-die having a lip width of 2,400 mm were set at 260°C. The resulting mixture was added to the extruder and was melt-kneaded at a screw rotation speed f 60 rpm. The melt-kneaded product was then extruded from the T-die. Thereafter, the extruded product was cooled by a cooling roll set at 60°C to prepare a sheet with a thickness of 3.0 mm and a width of 2,000 mm.
The torque at the time of melt-kneading was 270 A and the extrusion was performed stably. In addition, the resulting sheet had no thickness irregularity and was excellent in moldability. The resulting sheet had a tensile stress at yield of 26.0 MPa.
The resulting sheet was vacuum molded and the formability and appearance in vacuum molding were evaluated. The results are shown in Table 5.

[Example 10B]

The T-die molding and vacuum molding tests were conducted in the same manner as in Example 9B except that the polyethylene wax was changed to a metallocene polyethylene wax (Excerex 30200BT; manufactured by Mitsui Chemicals Inc., density=913 (kg/$m^3$), Mn=2, 000, A value=9. 3, B value=2.2, melt viscosity=300 (mPa·s)). The results are shown in Table 5.

[Example 11B]

The T-die molding and vacuum molding tests were conducted in the same manner as in Example 9B except that the polyethylene wax was changed to a metallocene polyethylene wax (1) (density=897 (kg/$m^3$), Mn=800, A val-

ue=23.5 (% by weight), B value=0.01 (% by weight), melt viscosity=40 (mPa·s)). The results are shown in Table 5.

[Example 12B]

The T-die molding and vacuum molding tests were conducted in the same manner as in Example 9B except that the polyethylene wax was changed to a polyethylene wax (2) (density=948 (kg/m$^3$), Mn=1,300, A value=19. 8 (% by weight), B value=0.3 (% by weight), melt viscosity=90 (mPa·s)). The results are shown in Table 5.

[Example 13B]

The T-die molding and vacuum molding tests were conducted in the same manner as in Example 9B except that the polyethylene wax was changed to a metallocene polyethylene wax (Excerex 10500; manufactured by Mitsui Chemicals Inc., density=960 (kg/m$^3$), Mn=700, A value=0, B value=47.8, melt viscosity=18 (mPa·s)). The results are shown in Table 5.

[Example 14B]

The T-die molding and vacuum molding tests were conducted in the same manner as in Example 9B except that the additive amount of the metallocene polyethylene wax (Excerex 40800T; manufactured by Mitsui Chemicals Inc.) was changed to 0.5 part by mass. The results are shown in Table 5.

[Example 15B]

The T-die molding and vacuum molding tests were conducted in the same manner as in Example 9B except that the additive amount of the metallocene polyethylene wax (Excerex 40800T; manufactured by Mitsui Chemicals Inc.) was changed to 1 part by mass. The results are shown in Table 5.

[Example 16B]

The T-die molding and vacuum molding tests were conducted in the same manner as in Example 9B except that the additive amount of the metallocene polyethylene wax (Excerex 40800T; manufactured by Mitsui Chemicals Inc.) was changed to 5 parts by mass. The results are shown in Table 5.

[Comparative Example 4B]

The cylinder temperature and the die temperature of a single screw extruder (manufactured by The Japan Steel Works, Ltd.) having a screw diameter of φ20 mm equipped with a T-die having a lip width of 2, 400 mm were set at 260°C. A high density polyethylene resin (Hizex 7800M; manufactured by Prime Polymer Co., Ltd., density=954 (kg/m$^3$), MI=0.04 g/10 min (JIS K7210) was added to the extruder and was melt-kneaded at a screw rotation speed of 60 rpm. The melt-kneaded product was then extruded from the T-die. Thereafter, the extruded product was cooled by a cooling roll set at 60°C to prepare a sheet with a thickness of 3.0 mm and a width of 2,000 mm. The torque at the time of melt-kneading was 280 A. The resulting sheet had a tensile stress at yield of 26.3 MPa.

The resulting sheet was subjected to vacuum molding to evaluate the formability and the appearance at the time of vacuum molding. The results are shown in Table 5.

[Comparative Example 5B]

The T-die molding and vacuum molding tests were conducted in the same manner as in Example 9B except that the polyethylene wax was changed to a polyethylene wax (Hi-wax 420P; manufactured by Mitsui Chemicals Inc., density=930 (kg/m$^3$), Mn=2,000, A value=8.3, B value=6.2, melt viscosity=700 (mPa·s) The results are shown in Table 5.

[Comparative Example 6B]

The T-die molding and vacuum molding tests were conducted in the same manner as in Example 9B except that the polyethylene wax was changed to a polyethylene wax (A-C6; manufactured by Honeywell International, Inc., density=913 (kg/m$^3$), Mn=1,800, A value=6.5, B value=3.3, melt viscosity=420 (mPa·s) The results are shown in Table 5.

[Table 5]

Table 5: Results of T-die Molding and Vacuum Molding

| Example/Comparative Example No. | | Example 9B | Example 10B | Example 11B | Example 12B | Example 13B | Example 14B | Example 15B | Example 16B | Comparative Example 4B | Comparative Example 5B | Comparative Example 6B |
|---|---|---|---|---|---|---|---|---|---|---|---|---|
| Polyethylene | Type | 7800M | 7800M | 7800M | 7800M | 7800M | 7800M | 7800M | 7800M | 7800M | 7800M | 7800M |
| | Quantity | 100 | 100 | 100 | 100 | 100 | 100 | 100 | 100 | 100 | 100 | 100 |
| Polyethylene wax | Type | 40800BT | 30200BT | Polyethy lene Wax (1) | Polyethy lene Wax (2) | 10500 | 40800BT | 40800BT | 40800BT | - | 420P | A-C6 |
| | Quantity | 2 | 2 | 2 | 2 | 2 | 0.5 | 1 | 5 | - | 2 | 2 |
| Torque | A | 270 | 263 | 26.6 | 26.7 | 265 | 270 | 272 | 260 | 280 | 268 | 275 |
| Tensile Stress at Yield | MPa | 26.0 | 26.8 | 26.3 | 26.8 | 26.9 | 26.9 | 27.0 | 26.2 | 26.3 | 23.0 | 22.6 |
| Drawdown Property | | Good | Good | Good | Good | Good | Good | Good | Good | Good | Poor | Poor |
| Appearance | | Good | Good | Good | Good | Good | Good | Good | Good | Good | Poor | Good |

(Examples in which Polyolefinic Resin is Polypropylene (1))

[Example 1C]

100 parts by mass of a polypropylene resin (PrimePolypro E111G; manufactured by Prime Polymer Co., Ltd.) (a polypropylene homopolymer, MI=0. 5 g/10 min (JIS K7210)) was mixed with 3 parts by mass of a polyethylene wax (Excerex 30200BT; manufactured by Mitsui Chemicals Inc., density=913 (kg/$m^3$), Mn=2,000, A value=9.3 (% by weight), B value=2.2 (% by weight), melt viscosity=300 (mPa·s), ethylene content=95 (mol %)). The cylinder temperature and the die temperature of a single screw extruder having a screw diameter of φ65 mm equipped with a T-die having a lip width of 600 mm was set at 230°C and the rotation speed was set at 70 rpm to prepare a sheet with a thickness of 0.5 mm. At the time of melt-kneading, the resin pressure was 7.6 MPa and the load electric power was 49 A. In addition, the prepared sheet had a tensile stress at yield of 36.2 MPa and a haze of 56.1%. Further, a sheet obtained after curing the prepared sheet in an air oven at 120°C for 24 hours had a haze of 60.4%. The results are shown in Table 6.

[Example 2C]

The melt-kneading was carried out in the same manner as in Example 1C except that the polyethylene wax was changed to a polyethylene wax (Excerex 48070BT; manufactured by Mitsui Chemicals Inc., density=902 (kg/$m^3$) Mn=3,400, A value=4.7 (% by weight), B value=8.7 (% by weight), melt viscosity=1,350 (mPa·s), ethylene content=92 (mol %)). The results are shown in Table 6.

[Example 3C]

The melt-kneading was carried out in the same manner as in Example 1C except that the polyethylene wax was changed to a polyethylene wax (1) (density=897 (kg/$m^3$), Mn=800, A value=23.5 (% by weight), B value=0.01 (% by weight), melt viscosity=40 (mPa·s), ethylene content=90 (mol %)). The results are shown in Table 6.

[Example 4C]

The melt-kneading was carried out in the same manner as in Example 1C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s), ethylene content=96 (mol %)). The results are shown in Table 6.

[Example 5C]

The melt-kneading was carried out in the same manner as in Example 1C except that the additive amount of the polyethylene wax (Excerex 30200BT; manufactured by Mitsui Chemicals Inc.) was changed to 1 part by mass. The results are shown in Table 6.

[Example 6C]

The melt-kneading was carried out in the same manner as in Example 1C except that the additive amount of the polyethylene wax (Excerex 30200BT; manufactured by Mitsui Chemicals Inc.) was changed to 5 parts by mass. The results are shown in Table 6.

[Comparative Example 1C]

A polypropylene resin (PrimePolypro E111G; manufactured by Prime Polymer Co., Ltd.) (a polypropylene homopolymer) MI=0. 5 g/10 min (JIS K7210) was introduced into a single screw extruder having a screw diameter of φ65 mm and a T-die having a lip width of 600 mm, whose cylinder temperature and die temperature were set at 230°C, to prepare a sheet with a thickness of 0.5 mm. At the time of melt-kneading, the resin pressure was 8.3 MPa and the load electric power was 65 A. In addition, the prepared sheet had a tensile stress at yield of 36.9 MPa and a haze of 56.9%. Further, a sheet obtained after curing the prepared sheet in an air oven at 120°C for 24 hours had a haze of 60.9%. The results are shown in Table 6.

[Comparative Example 2C]

The melt-kneading was carried out in the same manner as in Example 1C except that the polyethylene wax

was changed to a polyethylene wax (Excerex 10500; manufactured by Mitsui Chemicals Inc., density=960 (kg/$m^3$), Mn=700, A value=47.8 (% by weight), B value=0 (% by weight), melt viscosity=18 (mPa·s), ethylene content=100 (mol %)). The haze of the prepared sheet after the curing increased by 5% or more compared to that of when the polyethylene wax is not added (Comparative Example 1C), and thus the optical properties were deteriorated. The results are shown in Table 6.

[Comparative Example 3C]

The melt-kneading was carried out in the same manner as in Example 1C except that the polyethylene wax was changed to a polyethylene wax (Excerex 40800T; manufactured by Mitsui Chemicals Inc., density=980 (kg/$m^3$), Mn=2,400, A value=7.3, B value=4.2, melt viscosity=600 (mPa·s), ethylene content=100 (mol %)). The haze of the prepared sheet after the curing increased by 5% or more compared to that of when the polyethylene wax is not added (Comparative Example 1C), and thus the optical properties were deteriorated. The results are shown in Table 6.

[Comparative Example 4C]

The melt-kneading was carried out in the same manner as in Example 1C except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6. 2 (% by weight), melt viscosity=700 (mPa·s), ethylene content=97 (mol %)). The haze of the prepared sheet after the curing increased by 5% or more compared to that of when the polyethylene wax is not added (Comparative Example 1C), and thus the optical properties were deteriorated. The results are shown in Table 6.

[Comparative Example 5C]

The melt-kneading was carried out in the same manner as in Example 1C except that the polyethylene wax was changed to a polyethylene wax (A-C6; manufactured by Honeywell International, Inc., density=913 (kg/$m^3$), Mn=1, 800, A value=6.5 (% by weight), B value=3.3 (% by weight), melt viscosity=420 (mPa·s)). The results are shown in Table 6.

[Table 6]

Table 6: Ti-die Molding Results

| Example/ Comparative Example No. | | Example 1C | Example 2C | Example 3C | Example 4C | Example 5C | Example 6C | Comparative Example 1C | Comparative Example 2C | Comparative Example 3C | Comparative Example 4C | Comparative Example 5C |
|---|---|---|---|---|---|---|---|---|---|---|---|---|
| Polyethylene | Type | E111G | E111G | E111G | E111G | E111G | E111G | E111G | E111G | E111G | E111G | E111G |
| | Quantity | 100 | 100 | 100 | 100 | 100 | 100 | 100 | 100 | 100 | 100 | 100 |
| Polyethylene wax | Type | 30200BT | 48070BT | Polyethylene Wax (1) | Polyethylene Wax (2) | 30200BT | 30200BT | - | 10500 | 40800T | 420P | A-C6 |
| | Quantity | 3 | 3 | 3 | 3 | 1 | 5 | - | 3 | 3 | 3 | 3 |
| Resin Pressure | | 7.6 | 7.8 | 7.5 | 7.8 | 8.2 | 7.2 | 8.3 | 7.4 | 7.6 | 7.7 | 7.5 |
| Load Electric Power | | 49 | 50 | 47 | 49 | 54 | 44 | 65 | 45 | 46 | 49 | 48 |
| Tensile Stress at Yield | | 36.2 | 36.6 | 35.8 | 35.9 | 37.1 | 36.5 | 36.9 | 37.2 | 38.1 | 35.0 | 34.1 |
| Haze | Before curing | 56.1 | 55.5 | 54.5 | 59.7 | 54.3 | 56.2 | 56.9 | 58.9 | 59.4 | 58.7 | 56.5 |
| | After curing | 60.4 | 58.0 | 58.4 | 61.8 | 56.2 | 59.2 | 60.9 | 67.3 | 66.1 | 65.7 | 60.2 |

The mechanical properties of the films prepared in Examples 7C to 12C and Comparative Examples 6C to 10C were measured in the following manner.

(Mechanical Properties)

The test specimens of No. 5 were prepared from the resulting film and a tensile test was conducted at a speed of 80 mm/min at 23°C to measure a tensile stress at yield, in accordance with JIS K7127.

[Example 7C]

100 parts by mass of a polypropylene resin (PrimePolypro F113G; manufactured by Prime Polymer Co., Ltd.) (a polypropylene homopolymer, MI=3.0 g/10 min (JIS K7210)) was mixed with 3 parts by mass of a polyethylene wax (Excerex 30200BT; manufactured by Mitsui Chemicals Inc., density=913 (kg/$m^3$), Mn=2,000, A value=9.3 (% by weight), B value=2.2 (% by weight), melt viscosity=300 (mPa·s), ethylene content=95 (mol %)). The resulting mixture was introduced into a single screw extruder having a screw diameter of φ20 mm and a T-die having a lip width of 240 mm, whose the rotation speed was set at 70 rpm and whose cylinder temperature and die temperature were set at 210°C, to prepare a film with a thickness of 0.1 mm. At the time of melt-kneading, the resin pressure was 7.5 MPa and the load electric power was 3.4 A. In addition, the prepared film had a tensile stress at yield of 35. 5 MPa and a haze of 34. 4%. Further, a film obtained after curing the prepared film in an air oven at 120°C for 24 hours had a haze of 36.6%. The results are shown in Table 7.

[Example 8C]

The melt-kneading was carried out in the same manner as in Example 7C except that the polyethylene wax was changed to a polyethylene wax (Excerex 48070BT.; manufactured by Mitsui Chemicals Inc., density=902 (kg/$m^3$), Mn=3,400, A value=4.7 (% by weight), B value=8.7 (% by weight), melt viscosity=1,350 (mPa·s), ethylene content=92 (mol %)). The results are shown in Table 7.

[Example 9C]

The melt-kneading was carried out in the same manner as in Example 7C except that the polyethylene wax was changed to a polyethylene wax (1) (density=897 (kg/$m^3$), Mn=800, A value=23.5 (% by weight), B value=0.01 (% by weight), melt viscosity=40 (mPa·s), ethylene content=90 (mol %)). The results are shown in Table 7.

[Example 10C]

The melt-kneading was carried out in the same manner as in Example 7C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s ) , ethylene content=96 (mol %)). The results are shown in Table 7.

[Example 11C]

The melt-kneading was carried out in the same manner as in Example 7C except that the additive amount of the polyethylene wax (Excerex 30200BT; manufactured by Mitsui Chemicals Inc.) was changed to 1 part by mass. The results are shown in Table 7.

[Example 12C]

The melt-kneading was carried out in the same manner as in Example 7C except that the additive amount of the polyethylene wax (Excerex 30200BT; manufactured by Mitsui Chemicals Inc.) was changed to 5 parts by mass. The results are shown in Table 7.

[Comparative Example 6C]

A polypropylene resin (PrimePolypro F113G; manufactured by Prime Polymer Co. , Ltd.) (a polypropylene homopolymer, MI=3. 0 g/10 min (JIS K7210)) was introduced into a single screw extruder having a screw diameter of φ20 mm and a T-die having a lip width of 240 mm, whose rotation speed was set at 70 rpm and whose cylinder temperature and die temperature were set at 210°C, to prepare a film with a thickness of 0.1 mm. At the time of melt-kneading, the

resin pressure was 10.5 MPa and the load electric power was 7.0 A. In addition, the prepared film had a tensile stress at yield of 35.8 MPa and a haze of 34.6%. Further, a film obtained after curing the prepared film in an air oven at 120°C for 24 hours had a haze of 39.0%. The results are shown in Table 7.

[Comparative Example 7C]

The melt-kneading was carried out in the same manner as in Example 7C except that the polyethylene wax was changed to a polyethylene wax (Excerex 10500; manufactured by Mitsui Chemicals Inc., density=960 (kg/$m^3$), Mn=700, Avalue=47.8 (% by weight), B value=0 (% by weight), melt viscosity=18 (mPa·s), ethylene content=100 (mol %)). The haze of the prepared sheet after the curing increased by 5% or more compared to that of when the polyethylene wax is not added (Comparative Example 6C), and thus the optical properties were deteriorated. The results are shown in Table 7.

[Comparative Example 8C]

The melt-kneading was carried out in the same manner as in Example 7C except that the polyethylene wax was changed to a polyethylene wax (Excerex 40800T; manufactured by Mitsui Chemicals Inc., density=980 (kg/$m^3$) Mn=2,400, A value=7.3, B value=4.2, melt viscosity=600 (mPa·s), ethylene content=100 (mol %)). The haze of the prepared sheet after the curing increased by 5% or more compared to that of when the polyethylene wax is not added (Comparative Example 6C), and thus the optical properties were deteriorated. The results are shown in Table 7.

[Comparative Example 9C]

The melt-kneading was carried out in the same manner as in Example 7C except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6.2 (% by weight), melt viscosity=700 (mPa·s), ethylene content=97 (mol %)). The haze of the prepared sheet after the curing increased by 5% or more compared to that of when the polyethylene wax is not added (Comparative Example 6C), and thus the optical properties were deteriorated. The results are shown in Table 7.

[Comparative Example 10C]

The melt-kneading was carried out in the same manner as in Example 7C except that the polyethylene wax was changed to a polyethylene wax (A-C6; manufactured by Honeywell International, Inc., density=913 (kg/$m^3$), Mn=1,800, A value=6. 5 (% by weight), B value=3.3 (% by weight), melt viscosity=420 (mPa·s)). The results are shown in Table 7.

[Table 7]

Table 7: Ti-die Molding Results

| Example/Comparative Example No. | | Example 7C | Example 8C | Example 9C | Example 10C | Example 11C | Example 12C | Comparative Example 6C | Comparative Example 7C | Comparative Example 8C | Comparative Example 9C | Comparative Example 10C |
|---|---|---|---|---|---|---|---|---|---|---|---|---|
| Polyethylene | Type | F113G | F113G | F113G | F113G | F113G | F113G | F113G | F113G | F113G | F113G | F113G |
| | Quantity | 100 | 100 | 100 | 100 | 100 | 100 | 100 | 100 | 100 | 100 | 100 |
| Polyethylene wax | Type | 30200BT | 48070BT | Polyethyl ene Wax (1) | Polyethyl ene Wax (2) | 30200BT | 30200BT | - | 10500 | 40800T | 420P | A-C6 |
| | Quantity | 3 | 3 | 3 | 3 | 1 | 5 | - | 3 | 3 | 3 | 3 |
| Resin Pressure | | 7.5 | 7.8 | 7.2 | 7.4 | 8.1 | 6.9 | 10.5 | 5.5 | 6.5 | 7.5 | 7.3 |
| Load Electric Power | | 3.4 | 3.6 | 3.2 | 3.5 | 5.0 | 3.0 | 7.0 | 3.1 | 3.3 | 3.5 | 3.5 |
| Tensile Stress at Yield | | 35.5 | 37.2 | 33.0 | 34.1 | 35.7 | 35.7 | 35.8 | 39.9 | 39.5 | 33.1 | 29.9 |
| Haze | Before curing | 34.4 | 30.1 | 33.8 | 37.1 | 34.6 | 33.1 | 34.6 | 45.1 | 42.7 | 39.0 | 35.1 |
| | After curing | 36.6 | 35.5 | 35.0 | 41.2 | 38.5 | 37.1 | 39.0 | 56.0 | 53.0 | 52.4 | 38.1 |

The mechanical properties of the sheets prepared in Examples 13C to 18C and Comparative Examples 11C to 15C were measured in the following manner.

(Mechanical Properties)

The test specimens of No. 4 specified in ASTM D638 were prepared and a tensile test was conducted at a speed of 50 mm/min at 23°C to measure a tensile stress at yield.

[Example 13C]

100 parts by mass of a polypropylene resin (PrimePolypro B221WA; manufactured by Prime Polymer Co., Ltd.) (a polypropylene random copolymer, MI=0.5 g/10 min (JIS K7210)) was mixed with 3 parts by mass of a polyethylene wax (Excerex 30200BT; manufactured by Mitsui Chemicals Inc., density=913 (kg/$m^3$), Mn=2, 000, A value=9. 3 (% by weight), B value=2.2 (% by weight), melt viscosity=300 (mPa·s) , ethylene content=95 (mol %)). The resulting mixuture was introduced into a single screw extruder having a screw diameter of φ65 mm and a T-die having a lip width of 600 mm, whose rotation speed was set at 70 rpm and whose cylinder temperature and die temperature were set at 230°C, to prepare a sheet with a thickness of 0.5 mm. At the time of melt-kneading, the resin pressure was 7.4 MPa and the load electric power was 45 A. In addition, the prepared sheet had a tensile stress at yield of 28.8 MPa and a haze of 47.5%. Further, a sheet obtained after curing the prepared sheet in an air oven at 120°C for 24 hours had a haze of 50.3%. The results are shown in Table 8.

[Example 14C]

The melt-kneading was carried out in the same manner as in Example 13C except that the polyethylene wax was changed to a polyethylene wax (Excerex 48070BT; manufactured by Mitsui Chemicals Inc., density=902 (kg/$m^3$) Mn=3,400, A value=4.7 (% by weight), B value=8.7 (% by weight), melt viscosity=1,350 (mPa·s), ethylene content=92 (mol %)). The results are shown in Table 8.

[Example 15C]

The melt-kneading was carried out in the same manner as in Example 13C except that the polyethylene wax was changed to a polyethylene wax (1) (density=897 (kg/$m^3$), Mn=800, A value=23.5 (% by weight), B value=0.01 (% by weight), melt viscosity=40 (mPa·s), ethylene content=90 (mol %)). The results are shown in Table 8.

[Example 16C]

The melt-kneading was carried out in the same manner as in Example 13C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s), ethylene content=96 (mol %)). The results are shown in Table 8.

[Example 17C]

The melt-kneading was carried out in the same manner as in Example 13C except that the additive amount of the polyethylene wax (Excerex 30200BT; manufactured by Mitsui Chemicals Inc.) was changed to 1 part by mass. The results are shown in Table 8.

[Example 18C]

The melt-kneading was carried out in the same manner as in Example 13C except that the additive amount of the polyethylene wax (Excerex 30200BT; manufactured by Mitsui Chemicals Inc.) was changed to 5 parts by mass. The results are shown in Table 8.

[Comparative Example 11C]

A polypropylene resin (PrimePolypro B221WA; manufactured by Prime Polymer Co., Ltd.)(a polypropylene random copolymer, MI=0.5 g/10 min (JIS K7210)) was introduced into a single screw extruder having a screw diameter of φ65 mm and a T-die having a lip width of 600 mm, whose cylinder temperature and die temperature were set at 230°C, to prepare a sheet with a thickness of 0.5 mm. At the time of melt-kneading, the resin pressure was 8.1 MPa and the

load electric power was 60 A. In addition, the prepared sheet had a tensile stress at yield of 29.7 MPa and a haze of 48.4%. Further, a sheet obtained after curing the prepared sheet in an air oven at 120°C for 24 hours had a haze of 51.6%. The results are shown in Table 8.

[Comparative Example 12C]

The melt-kneading was carried out in the same manner as in Example 13C except that the polyethylene wax was changed to a polyethylene wax (Excerex 10500; manufactured by Mitsui Chemicals Inc., density=960 (kg/$m^3$), Mn=700, A value=47.8 (% by weight), B value=0 (% by weight), melt viscosity=18 (mPa·s), ethylene content=100 (mol %)). The haze of the prepared sheet after the curing increased by 5% or more, compared to that of when the polyethylene wax is not added (Comparative Example 11C), and thus the optical properties were deteriorated. The results are shown in Table 8.

[Comparative Example 13C]

The melt-kneading was carried out in the same manner as in Example 13C except that the polyethylene wax was changed to a polyethylene wax (Excerex 40800T; manufactured by Mitsui Chemicals Inc., density=980 (kg/$m^3$), Mn=2,400, A value=7.3, B value=4.2, melt viscosity=600 (mPa·s), ethylene content=100 (mol %)). The results are shown in Table 8.

[Comparative Example 14C]

The melt-kneading was carried out in the same manner as in Example 13C except that the polyethylene wax was changed to a polyethylene wax (Hi-wax 420P; manufactured by Mitsui Chemicals Inc., density=930 (kg/$m^3$) Mn=2,000, A value=8.3 (% by weight), B value=6. 2 (% by weight), melt viscosity=700 (mPa·s), ethylene content=97 (mol %)). The results are shown in Table 8.

[Comparative Example 15C]

The melt-kneading was carried out in the same manner as in Example 13C except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 8.

[Table 8]

Table 8: Ti-die Molding Results

| Example/Comparative Example No. | | Example 13C | Example 14C | Example 15C | Example 16C | Example 17C | Example 18C | Comparative Example 11C | Comparative Example 12C | Comparative Example 13C | Comparative Example 14C | Comparative Example 15C |
|---|---|---|---|---|---|---|---|---|---|---|---|---|
| Polyethylene | Type | B221WA | B221WA | B221WA | B221WA | B221WA | B221WA | B221WA | B221WA | B221WA | B221WA | B221WA |
| | Quantity | 100 | 100 | 100 | 100 | 100 | 100 | 100 | 100 | 100 | 100 | 100 |
| Polyethylene wax | Type | 30200BT | 48070BT | Polyethyl ene Wax (1) | Polyethyl ene Wax (2) | 30200BT | 30200BT | - | 10500 | 40800T | 420P | A-C6 |
| | Quantity | 3 | 3 | 3 | 3 | 1 | 5 | - | 3 | 3 | 3 | 3 |
| Resin Pressure | | 7.4 | 7.5 | 7.3 | 7.5 | 8.0 | 6.9 | 8.1 | 7.0 | 7.2 | 7.4 | 7.2 |
| Load Electric Power | | 45 | 46 | 43 | 45 | 50 | 40 | 60 | 39 | 41 | 45 | 43 |
| Tensile Stress at Yield | | 28.8 | 29.4 | 29.0 | 28.5 | 30.0 | 29.0 | 29.7 | 30.1 | 30.5 | 27.5 | 25.9 |
| Haze | Before curing | 47.5 | 47.5 | 47.1 | 49.1 | 48.5 | 48.5 | 48.4 | 50.1 | 49.8 | 49.7 | 48.5 |
| | After curing | 50.3 | 48.3 | 49.5 | 51.2 | 49.1 | 49.9 | 51.6 | 57.3 | 55.1 | 56.1 | 52.1 |

The mechanical properties of the films prepared in Examples 19C to 24C and Comparative Examples 16C to 20C were measured in the following manner.

(Mechanical Properties)

The test specimens of No. 5 were prepared from the film obtained and a tensile test was conducted at a speed of 80 mm/min at 23°C to measure a tensile stress at yield, in accordance with JIS K7127.

[Example 19C]

100 parts by mass of a polypropylene resin (PrimePolypro F219DA; manufactured by Prime Polymer Co. , Ltd.) (a polypropylene random copolymer, MI=8.0 g/10 min (JIS K7210)) was mixed with 3 parts by mass of a polyethylene wax (Excerex 30200BT; manufactured by Mitsui Chemicals Inc., density=913 (kg/$m^3$), Mn=2, 000, A value=9. 3 (% by weight), B value=2.2 (% by weight), melt viscosity=300 (mPa·s), ethylene content=95 (mol %)). The resulting mixture was introduced into a single screw extruder having a screw diameter of φ20 mm and a T-die having a lip width of 240 mm, whose rotation speed was set at 70 rpm and whose cylinder temperature and die temperature were set at 210°C, to prepare a film with a thickness of 0.1 mm. At the time of melt-kneading, the resin pressure was 6.9 MPa and the load electric power was 3.2 A. In addition, the prepared film had a tensile stress at yield of 27.7 MPa and a haze of 31.5%. Further, a sheet obtained after curing the prepared sheet in an air oven at 120°C for 24 hours had a haze of 33.1%. The results are shown in Table 9.

[Example 20C]

The melt-kneading was carried out in the same manner as in Example 19C except that the polyethylene wax was changed to a polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s), ethylene content=92 (mol %)). The results are shown in Table 9.

[Example 21C]

The melt-kneading was carried out in the same manner as in Example 19C except that the polyethylene wax was changed to a polyethylene wax (1) (density=897 (kg/$m^3$), Mn=800, A value=23.5 (% by weight), B value=0.01 (% by weight), melt viscosity=40 (mPa·s), ethylene content=90 (mol %)). The results are shown in Table 9.

[Example 22C]

The melt-kneading was carried out in the same manner as in Example 19C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s), ethylene content=96 (mol %)). The results are shown in Table 9.

[Example 23C]

The melt-kneading was carried out in the same manner as in Example 19C except that the additive amount of the polyethylene wax (Excerex 30200BT; manufactured by Mitsui Chemicals Inc.) was changed to 1 part by mass. The results are shown in Table 9.

[Example 24C]

The melt-kneading was carried out in the same manner as in Example 19C except that the additive amount of the polyethylene wax (Excerex 30200BT; manufactured by Mitsui Chemicals Inc.) was changed to 5 parts by mass. The results are shown in Table 9.

[Comparative Example 16C]

A polypropylene resin (PrimePolypro F219DA; manufactured by Prime Polymer Co., Ltd.) (a polypropylene random copolymer, MI=8.0 g/10 min (JIS K7210)) was introduced into a single screw extruder having a screw diameter of φ20 mm and a T-die having a lip width of 240 mm, whose rotation speed was set at 70 rpm and whose cylinder temperature and die temperature were set at 210°C, to prepare a film with a thickness of 0.1 mm. At the time of melt-kneading, the resin pressure was 9.8 MPa and the load electric power was 6.6 A. In addition, the prepared sheet had a tensile stress at yield of 27.8 MPa and a haze of 30.5%. Further, a sheet obtained after curing the prepared sheet in an air oven at 120°C for 24 hours had a haze of 34.8%. The results are shown in Table 9.

[Comparative Example 17C]

The melt-kneading was carried out in the same manner as in Example 19C except that the polyethylene wax was changed to a polyethylene wax (Excerex 10500; manufactured by Mitsui Chemicals Inc., density=960 (kg/$m^3$), Mn=700, A value=47.8 (% by weight), B value=0 (% by weight), melt viscosity=18 (mPa·s), ethylene content=100 (mol %)). The haze of the prepared sheet after the curing increased by 5% or more, compared to that of when the polyethylene wax is not added (Comparative Example 16C), and thus the optical properties were deteriorated. The results are shown in Table 9.

[Comparative Example 18C]

The melt-kneading was carried out in the same manner as in Example 19C except that the polyethylene wax was changed to a polyethylene wax (Excerex 40800T; manufactured by Mitsui Chemicals Inc., density=980 (kg/$m^3$), Mn=2,400, A value=7.3, B value=4.2, melt viscosity=600 (mPa·s), ethylene content=100 (mol %)). The haze of the prepared sheet after the curing increased by 5% or more, compared to that when of the polyethylene wax is not added (Comparative Example 16C), and thus the optical properties were deteriorated. The results are shown in Table 9.

[Comparative Example 19C]

The melt-kneading was carried out in the same manner as in Example 19C except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6. 2 (% by weight), melt viscosity=700 (mPa·s), ethylene content=97 (mol %)). The haze of the prepared sheet after the curing increased by 5% or more, compared to that of when the polyethylene wax is not added (Comparative Example 16C), and thus the optical properties were deteriorated. The results are shown in Table 9.

[Comparative Example 20C]

The melt-kneading was carried out in the same manner as in Example 19C except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 9.

[Table 9]

| Table 9: Ti-die Molding Results | | | | | | | | | | | | |
|---|---|---|---|---|---|---|---|---|---|---|---|---|
| Example/Comparative Example No. | | Example 19C | Example 20C | Example 21C | Example 22C | Example 23C | Example 24C | Comparative Example 16C | Comparative Example 17C | Comparative Example 18C | Comparative Example 19C | Comparative Example 20C |
| Polyethylene | Type | F219DA | F219DA | F219DA | F219DA | F219DA | F219DA | F219DA | F219DA | F219DA | F219DA | F219DA |
| | Quantity | 100 | 100 | 100 | 100 | 100 | 100 | 100 | 100 | 100 | 100 | 100 |
| Polyethylene wax | Type | 30200BT | 48070BT | Polyethyl ene Wax (1) | Polyethyl ene Wax (2) | 30200BT | 30200BT | - | 10500 | 40800T | 420P | A-C6 |
| | Quantity | 3 | 3 | 3 | 3 | 1 | 5 | - | 3 | 3 | 3 | 3 |
| Resin Pressure | | 6.9 | 7.1 | 6.6 | 6.9 | 7.7 | 6.4 | 9.8 | 4.9 | 6.2 | 7.1 | 7.0 |
| Load Electric Power | | 3.2 | 3.3 | 3.0 | 3.2 | 4.7 | 2.8 | 6.6 | 2.6 | 2.7 | 3.2 | 3.1 |
| Tensile Stress at Yield | | 27.7 | 29.0 | 26.3 | 26.0 | 28.0 | 27.9 | 27.8 | 30.7 | 30.5 | 26.5 | 23.5’ |
| Haze | Before curing | 31.5 | 29.5 | 30.5 | 33.8 | 31.5 | 30.1 | 30.5 | 41.1 | 38.4 | 35.1 | 31.6 |
| | After curing | 33.1 | 32.8 | 31.4 | 35.1 | 35.8 | 33.5 | 34.8 | 53.1 | 47.5 | 48.1 | 35.1 |

The mechanical properties of the sheets prepared in Examples 25C to 30C and Comparative Examples 21C to 25C were measured in the following manner.

(Mechanical Properties)

The test specimens of No. 4 specified in ASTM D638 were prepared and a tensile test was conducted at a speed of 50 mm/min at 23°C to measure a tensile stress at yield.

[Example 25C]

100 parts by mass of a polypropylene resin (PrimePolypro B701WB; manufactured by Prime Polymer Co., Ltd.) (a polypropylene block copolymer, MI=0.5 g/10 min (JIS K7210)) was mixed with 3 parts by mass of a polyethylene wax (Excerex 30200BT; manufactured by Mitsui Chemicals Inc., density=913 (kg/$m^3$), Mn=2, 000, A value=9. 3 (% by weight), B value=2.2 (% by weight), melt viscosity=300 (mPa·s), ethylene content=95 (mol %)). The resulting mixture was introduced into a single screw extruder having a screw diameter of φ65 mm and a T-die having a lip width of 600 mm, whose rotation speed was set at 70 rpm and whose cylinder temperature and the die temperature were set at 230°C, to prepare a sheet with a thickness of 0.5 mm. At the time of melt-kneading, the resin pressure was 7.5 MPa and the load electric power was 44 A. In addition, the prepared sheet had a tensile stress at yield of 31.3 MPa and a haze of 60.5%. Further, a sheet obtained after curing the prepared sheet in an air oven at 120°C for 24 hours had a haze of 64.4%. The results are shown in Table 10.

[Example 26C]

The melt-kneading was carried out in the same manner as in Example 25C except that the polyethylene wax was changed to a polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s), ethylene content=92 (mol %)). The results are shown in Table 10.

[Example 27C]

The melt-kneading was carried out in the same manner as in Example 25C except that the polyethylene wax was changed to a polyethylene wax (1) (density=897 (kg/$m^3$), Mn=800, A value=23.5 (% by weight), B value=0.01 (% by weight), melt viscosity=40 (mPa·s), ethylene content=90 (mol %)). The results are shown in Table 10.

[Example 28C]

The melt-kneading was carried out in the same manner as in Example 25C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s), ethylene content=96 (mol %)). The results are shown in Table 10.

[Example 29C]

The melt-kneading was carried out in the same manner as in Example 25C except that the additive amount of the polyethylene wax (Excerex 30200BT; manufactured by Mitsui Chemicals Inc.) was changed to 1 part by mass. The results are shown in Table 10.

[Example 30C]

The melt-kneading was carried out in the same manner as in Example 25C except that the additive amount of the polyethylene wax (Excerex 30200BT; manufactured by Mitsui Chemicals Inc.) was changed to 5 parts by mass. The results are shown in Table 10.

[Comparative Example 21C]

A polypropylene resin (PrimePolypro B701WB; manufactured by Prime Polymer Co., Ltd.)(a polypropylene block copolymer, MI=0.5 g/10 min (JIS K7210)) was introduced into a single screw extruder having a screw diameter of φ65 mm and a T-die having a lip width of 600 mm, whose cylinder temperature and die temperature were set at 230°C, to prepare a sheet with a thickness of 0.5 mm. At the time of melt-kneading, the resin pressure was 8.2 MPa and the

load electric power was 63 A. In addition, the prepared sheet had a tensile stress at yield of 31.0 MPa and a haze of 61.8%. Further, a sheet obtained after curing the prepared sheet in an air oven at 120°C for 24 hours had a haze of 65.7%. The results are shown in Table 10.

[Comparative Example 22C]

The melt-kneading was carried out in the same manner as in Example 25C except that the polyethylene wax was changed to a polyethylene wax (Excerex 10500; manufactured by Mitsui Chemicals Inc., density=960 (kg/$m^3$), Mn=700, A value=47. 8 (% by weight), B value=0 (% by weight), melt viscosity=18 (mPa·s), ethylene content=100 (mol %)). The haze of the prepared sheet after the curing increased by 5% or more, compared to that of when the polyethylene wax is not added (Comparative Example 21C), and thus the optical properties were deteriorated. The results are shown in Table 10.

[Comparative Example 23C]

The melt-kneading was carried out in the same manner as in Example 25C except that the polyethylene wax was changed to a polyethylene wax (Excerex 40800T; manufactured by Mitsui Chemicals Inc., density=980 (kg/$m^3$), Mn=2,400, A value=7.3, B value=4.2, melt viscosity=600 (mPa·s), ethylene content=100 (mol %)). The haze of the prepared sheet after the curing increased by 5% or more, compared to that when of the polyethylene wax is not added (Comparative Example 21C), and thus the optical properties were deteriorated. The results are shown in Table 10.

[Comparative Example 24C]

The melt-kneading was carried out in the same manner as in Example 25C except that the polyethylene wax was changed to a polyethylene wax (Hi-wax 420P; manufactured by Mitsui Chemicals Inc., density=930 (kg/$m^3$), Mn=2,000, A value=8.3 (% by weight), Bvalue=6.2 (% by weight), melt viscosity=700 (mPa·s), ethylene content=97 (mol %)). The results are shown in Table 10.

[Comparative Example 25C]

The melt-kneading was carried out in the same manner as in Example 25C except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 10.

[Table 10]

| Table 10: Ti-die Molding Results | | | | | | | | | | | | |
|---|---|---|---|---|---|---|---|---|---|---|---|---|
| Example/Comparative Example No. | | Example 25C | Example 26C | Example 27C | Example 28C | Example 29C | Example 30C | Comparative Example 21C | Comparative Example 22C | Comparative Example 23C | Comparative Example 24C | Comparative Example 25C |
| Polyethylene | Type | B701HB | B701WB | B701WB | B701WB | B701HB | B701HB | B701WB | B701WB | B701WB | B701WB | B701WB |
| | Quantity | 100 | 100 | 100 | 100 | 100 | 100 | 100 | 100 | 100 | 100 | 100 |
| Polyethylene wax | Type | 30200BT | 48070BT | Polyethyl ene Wax (1) | Polyethyl ene Wax (2) | 30200BT | 30200BT | - | 10500 | 40800T | 420P | A-C6 |
| | Quantity | 3 | 3 | 3 | 3 | 1 | 5 | - | 3 | 3 | 3 | 3 |
| Resin Pressure | | 7.5 | 7.4 | 7.1 | 7.6 | 7.8 | 6.6 | 8.2 | 7.1 | 7.0 | 7.4 | 7.3 |
| Load Electric Power | | 44 | 45 | 43 | 42 | 48 | 40 | 63 | 39 | 41 | 48 | 44 |
| Tensile Stress at Yield | | 31.3 | 31.4 | 30.2 | 30.2 | 31.0 | 31.2 | 31.0 | 29.5 | 30.7 | 29.1 | 25.1 |
| Haze | Before curing | 60.5 | 61.3 | 60.1 | 63.5 | 59.6 | 61.8 | 61.8 | 64.1 | 63.9 | 62.8 | 61.4 |
| | After curing | 64.4 | 64.0 | 63.0 | 67.0 | 62.5 | 64.1 | 65.7 | 74.1 | 70.8 | 69.1 | 66.1 |

The properties of the sheets prepared in Examples 31C to 48C and Comparative Examples 26C to 40C were measured in the following manner.

(Productivity)

The torque (A) applied to the screw in T-die molding was evaluated.

(Mechanical Properties)

The test specimens of No. 4 specified in ASTM D638 were prepared and a tensile test was conducted at a speed of 50 mm/min at 23°C to measure a tensile stress at yield.

(Drawdown Properties)

The resulting sheet was vacuum molded under the conditions of the sheet surface temperature of 190°C and heating time of 20 seconds using a pressure and vacuum forming machine (manufactured by Asano Laboratories Co., Ltd.), whose heater temperature was set at 600°C.

The formability (drawdown) in vacuum molding was evaluated by visually observing the drooping degree of the sheet softened by heating in vacuum molding.

Good: The sheet did not droop excessively, and vacuum molding was therefore performed without problems
Poor: A sheet drooped excessively and contacted with the heater

(Appearance)

The gloss feeling of the surface of the molded article obtained was visually observed to be evaluated by comparing with that of a molded article made of polyethylene alone.

Good: The gloss feeling was not changed
Poor: The gloss feeling was deteriorated

[Example 31C]

100 parts by mass of a polyethylene resin (PrimePolypro E111G; manufactured by Prime Polymer Co., Ltd.) (a polypropylene homopolymer, MI=0.5 g/10 min (JIS K7210)) was mixed with 2 parts by mass of a polyethylene wax (Excerex 30200BT; manufactured by Mitsui Chemicals Inc., density=913 (kg/$m^3$), Mn=2,000, A value=9.3 (% by weight), B value=2.2 (% by weight), melt viscosity=300 (mPa·s), ethylene content=95 (mol %)). Subsequently, the cylinder temperature and the die temperature of a single screw extruder (manufactured by The Japan Steel Works, Ltd.) having a screw diameter of φ65 mm equipped with a T-die having a lip width of 600 mm were set at 230°C. The resulting mixture was added to the extruder and was melt-kneaded at a rotation speed of 70 rpm, and the melt-kneaded product was then extruded from the T-die. Thereafter, the extruded product was cooled by a cooling roll set at 60°C to prepare a sheet with a thickness of 0.5 mm and a width of 500 mm.

At the time of melt-kneading, the resin pressure was 7.9 MPa and the load electric power was 52 A. In addition, the extrusion was performed stably, and the resulting sheet had no thickness irregularity and was excellent in moldability. The resulting sheet had a tensile stress at yield of 37.5 MPa.

The resulting sheet was subjected to vacuum molding to evaluate the formability and the appearance at the time of vacuum molding. The results are shown in Table 11.

[Example 32C]

The T-die molding and vacuum molding tests were conducted in the same manner as in Example 31C except that the polyethylene wax was changed to a polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s), ethylene content=92 (mol %)). The results are shown in Table 11.

[Example 33C]

The T-die molding and vacuum molding tests were conducted in the same manner as in Example 31C except that the polyethylene wax was changed to a polyethylene wax (1) (density=897 (kg/$m^3$), Mn=800, A value=23.5 (% by weight), B value=0.01 (% by weight), melt viscosity=40 (mPa·s), ethylene content=90 (mol %)). The results are shown in Table 11.

[Example 34C]

The T-die molding and vacuum molding tests were conducted in the same manner as in Example 31C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s), ethylene content=96 (mol %)). The results are shown in Table 11.

[Example 35C]

The T-die molding and vacuum molding tests were conducted in the same manner as in Example 32C except that the additive amount of the polyethylene wax (Excerex 48070BT; manufactured by Mitsui Chemicals Inc.) was changed to 1 part by mass. The results are shown in Table 11.

[Example 36C]

The T-die molding and vacuum molding tests were conducted in the same manner as in Example 32C except that the additive amount of the polyethylene wax (Excerex 48070BT; manufactured by Mitsui Chemicals Inc.) was changed to 5 parts by mass. The results are shown in Table 11.

[Comparative Example 26C]

The cylinder temperature and the die temperature of a single screw extruder (manufactured by The Japan Steel Works, Ltd.) having a screw diameter of φ65 mm equipped with a T-die having a lip width of 600 mm were set at 230°C. A polyethylene resin (PrimePolypro E111G; manufactured by Prime Polymer Co., Ltd.) (a polypropylene homopolymer, MI=0.5 g/10 min (JIS K7210)) was added to the extruder and melt-kneaded at a screw rotation speed of 70 rpm, and the melt-kneaded product was extruded from the T-die. Thereafter, the extruded product was cooled by a cooling roll set at 60°C to prepare a sheet with a thickness of 0.5 mm and a width of 500 mm.

At the time of melt-kneading, the resin pressure was 8.5 MPa and the load electric power was 67 A. In addition, the extrusion was performed stably, and the resulting sheet had no thickness irregularity and was excellent in moldability. The resulting sheet had a tensile stress at yield of 37.2 MPa.

The resulting sheet was subjected to vacuum molding to evaluate the formability and the appearance at the time of vacuum molding. The results are shown in Table 11.

[Comparative Example 27C]

The T-die molding and vacuum molding tests were conducted in the same manner as in Example 31C except that the polyethylene wax was changed to a polyethylene wax (Excerex 10500; manufactured by Mitsui Chemicals Inc., density=960 (kg/$m^3$) Mn=700, A value=47.8 (% by weight), B value=0 (% by weight), melt viscosity=18 (mPa·s), ethylene content=100 (mol %)). The results are shown in Table 11.

[Comparative Example 28C]

The T-die molding and vacuum molding tests were conducted in the same manner as in Example 31C except that the polyethylene wax was changed to a polyethylene wax (Excerex 40800T; manufactured by Mitsui Chemicals Inc., density=980 (kg/$m^3$), Mn=2,400, A value=7.3, B value=4.2, melt viscosity=600 (mPa·s), ethylene content=100 (mol %)). The results are shown in Table 11.

[Comparative Example 29C]

The T-die molding and vacuum molding tests were conducted in the same manner as in Example 31C except that the polyethylene wax was changed to a polyethylene wax (Hi-wax 420P; manufactured by Mitsui Chemicals Inc.,

density=930 (kg/$m^3$), Mn=2,000, A value=8.3 (% by weight), B value=6.2 (% by weight), melt viscosity=700 (mPa·s), ethylene content=97 (mol %))). The results are shown in Table 11.

[Comparative Example 30C]

The T-die molding and vacuum molding tests were conducted in the same manner as in Example 31C except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 11.

[Table 11]

Table 11: Vacuum Molding Results

| Example/Comparative Example No. 31C | | Example 31C | Example 32C | Example 33C | Example 34C | Example 35C | Example 36C | Comparative Example 26C | Comparative Example 27C | Comparative Example 28C | Comparative Example 29C | Comparative Example 30C |
|---|---|---|---|---|---|---|---|---|---|---|---|---|
| Polyethylene | Type | E111G | E111G | E111G | E111G | E111G | E111G | E111G | E111G | E111G | E111G | E111G |
| | Quantity | 100 | 100 | 100 | 100 | 100 | 100 | 100 | 100 | 100 | 100 | 100 |
| Polyethylene wax | Type | 302008T | 48070BT | Polyethyl ene Wax (1) | Polyethyl ene Wax (2) | 480708T | 48070BT | - | 10500 | 40800T | 420P | A-C6 |
| | Quantity | 2 | 2 | 2 | 2 | 1 | 5 | - | 2 | 2 | 2 | 2 |
| Resin Pressure | | 7.9 | 7.9 | 7.6 | 7.7 | 8.1 | 7.3 | 8.5 | 7.4 | 7.9 | 7.8 | 7.8 |
| Load Electric Power | | 52 | 51 | 49 | 50 | 53 | 42 | 67 | 46 | 48 | 50 | 52 |
| Tensile Stress at Yield | | 37.5 | 36.9 | 36.8 | 37.5 | 37.0 | 35.7 | 37.2 | 36.9 | 37.5 | 33.7 | 34.7 |
| Drawdown Property | | Good | Good | Good | Good | Good | Good | Good | Poor | Poor | Poor | Poor |
| Appearance | | Good | Good | Good | Good | Good | Good | Good | Poor | Poor | Poor | Good |

[Example 37C]

100 parts by mass of a polypropylene resin (PrimePolypro B221WA; manufactured by Prime Polymer Co., Ltd.) (a polypropylene random copolymer, MI=0.5 g/10 min (JIS K7210)) was mixed with 2 parts by mass of a polyethylene wax (Excerex 30200BT; manufactured by Mitsui Chemicals Inc., density=913 (kg/$m^3$), Mn=2, 000, A value=9.3 (% by weight), B value=2.2 (% by weight), melt viscosity=300 (mPa·s), ethylene content=95 (mol %)). Subsequently, the cylinder temperature and the die temperature of a single screw extruder (manufactured by The Japan Steel Works, Ltd.) having a screw diameter of φ65 mm equipped with a T-die having a lip width of 600 mm were set at 230°C. The resulting mixture was added to the extruder and was melt-kneaded at a rotation speed of 70 rpm, and the melt-kneaded product was then extruded from the T-die. Thereafter, the extruded product was cooled by a cooling roll set at 60°C to prepare a sheet with a thickness of 0.5 mm and a width of 500 mm.

At the time of melt-kneading, the resin pressure was 7.8 MPa and the load electric power was 47 A. In addition, the extrusion was performed stably, and the resulting film had no thickness irregularity and was excellent in moldability. The resulting sheet had a tensile stress at yield of 30.6 MPa.

The resulting sheet was subjected to vacuum molding to evaluate the formability and the appearance at the time of vacuum molding. The results are shown in Table 12.

[Example 38C]

The T-die molding and vacuum molding tests were conducted in the same manner as in Example 37C except that the polyethylene wax was changed to a polyethylene wax (Excerex 48070BT; manufactured by Mitsui Chemicals Inc., density=902 (kg/$m^3$), Mn=3, 400, A value=4.7 (% by weight), B value=8.7 (% by weight), melt viscosity=1,350 (mPa·s), ethylene content=92 (mol %)). The results are shown in Table 12.

[Example 39C]

The T-die molding and vacuum molding tests were conducted in the same manner as in Example 37C except that the polyethylene wax was changed to a polyethylene wax (1) (density=897 (kg/$m^3$), Mn=800, A value=23. 5 (% by weight), Bvalue=0.01 (% by weight), melt viscosity=40 (mPa·s), ethylene content=90 (mol %)). The results are shown in Table 12.

[Example 40C]

The T-die molding and vacuum molding tests were conducted in the same manner as in Example 37C except that the polyethylene wax was changed to a polyethylene wax (2) (density=948 (kg/$m^3$), Mn=1,300, A value=19. 8 (% by weight), B value=0.3 (% by weight), melt viscosity=90 (mPa·s), ethylene content=96 (mol %)). The results are shown in Table 12.

[Example 41C]

The T-die molding and vacuum molding tests were conducted in the same manner as in Example 38C except that the additive amount of the polyethylene wax (Excerex 48070BT; manufactured by Mitsui Chemicals Inc.) was changed to 1 part by mass. The results are shown in Table 12.

[Example 42C]

The T-die molding and vacuum molding tests were conducted in the same manner as in Example 38C except that the additive amount of the polyethylene wax (Excerex 48070BT; manufactured by Mitsui Chemicals Inc.) was changed to 5 parts by mass. The results are shown in Table 12.

[Comparative Example 31C]

The cylinder temperature and the die temperature of a single screw extruder (manufactured by The Japan Steel Works, Ltd.) having a screw diameter of φ65 mm equipped with a T-die having a lip width of 600 mm were set at 230°C. A polyethylene resin (PrimePolypro B221WA; manufactured by Prime Polymer Co., Ltd.) (a polypropylene random copolymer, MI=0.5 g/10 min (JIS K7210)) was added to the extruder and was melt-kneaded at a screw rotation speed of 70 rpm, and the melt-kneaded product was then extruded from the T-die. Thereafter, the extruded product was cooled by a cooling roll set at 60°C to prepare a sheet with a thickness of 0.5 mm and a width of 500 mm.

The resin pressure at the time of melt-kneading was 8.4 MPa and the load electric power was 62 A. In addition, the extrusion was performed stably, and the resulting sheet had no thickness irregularity and was excellent in moldability. The resulting sheet had a tensile stress at yield of 30.7 MPa.

The resulting sheet was subjected to vacuum molding to evaluate the formability and the appearance at the time of vacuum molding. The results are shown in Table 12.

[Comparative Example 32C]

The T-die molding and vacuum molding tests were conducted in the same manner as in Example 38C except that the polyethylene wax was changed to a polyethylene wax (Excerex 10500; manufactured by Mitsui Chemicals Inc., density=960 (kg/$m^3$), Mn=700, A value=47.8 (% by weight), B value=0 (% by weight), melt viscosity=18 (mPa·s), ethylene content=100 (mol %)). The results are shown in Table 12.

[Comparative Example 33C]

The T-die molding and vacuum molding tests were conducted in the same manner as in Example 38C except that the polyethylene wax was changed to a polyethylene wax (Excerex 40800T; manufactured by Mitsui Chemicals Inc., density=980 (kg/$m^3$), Mn=2, 400, A value=7. 3, B value=4.2, melt viscosity=600 (mPa·s), ethylene content=100 (mol %)). The results are shown in Table 12.

[Comparative Example 34C]

The T-die molding and vacuum molding tests were conducted in the same manner as in Example 38C except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6.2 (% by weight), melt viscosity=700 (mPa·s), ethylene content=97 (mol %))). The results are shown in Table 12.

[Comparative Example 35C]

The T-die molding and vacuum molding tests were conducted in the same manner as in Example 38C except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 12.

[Table 12]

| Table 12: Vacuum Molding Results | | | | | | | | | | | | |
|---|---|---|---|---|---|---|---|---|---|---|---|---|
| Example/Comparative Example No. | | Example 37C | Example 38C | Example 39C | Example 40C | Example 41C | Example 42C | Comparative Example 31C | Comparative Example 32C | Comparative Example 33C | Comparative Example 34C | Comparative Example 35C |
| Polyethylene | Type | B221WA | B221WA | B221WA | B221WA | B221WA | 8221WA | B221WA | 8221WA | B221WA | B221WA | B221WA |
| | Quantity | 100 | 100 | 100 | 100 | 100 | 100 | 100 | 100 | 100 | 100 | 100 |
| Polyethylene wax | Type | 30200BT | 48070BT | Polyethyl ene Wax (1) | Polyethyl ene Wax (2) | 48070BT | 48070BT | - | 10500 | 40800T | 420P | A-C6 |
| | Quantity | 2 | 2 | 2 | 2 | 1 | 5 | - | 2 | 2 | 2 | 2 |
| Resin Pressure | | 7.8 | 7.7 | 7.5 | 7.8 | 7.8 | 6.8 | 8.4 | 7.2 | 7.3 | 7.7 | 7.5 |
| Load Electric Power | | 47 | 48 | 46 | 48 | 48 | 39 | 62 | 39 | 42 | 48 | 44 |
| Tensile Stress at Yield | | 30.6 | 30.5 | 29.8 | 30.8 | 29.8 | 30.3 | 30.7 | 29.6 | 30.3 | 27.4 | 25.8 |
| Drawdown Property | | Good | Good | Good | Good | Good | Good | Good | Poor | Poor | Poor | Poor |
| Appearance | | Good | Good | Good | Good | Good | Good | Good | Poor | Poor | Poor | Good |

[Example 43C]

100 parts by mass of a polypropylene resin (PrimePolypro B701WB; manufactured by Prime Polymer Co., Ltd.) (a polypropylene block copolymer, MI=0.5 g/10 min (JIS K7210)) was mixed with 2 parts by mass of a polyethylene wax (Excerex 30200BT; manufactured by Mitsui Chemicals Inc., density=913 (kg/$m^3$), Mn=2, 000, A value=9.3 (% by weight), B value=2.2 (% by weight), melt viscosity=300 (mPa·s), ethylene content=95 (mol %)). Subsequently, the cylinder temperature and the die temperature of a single screw extruder (manufactured by The Japan Steel Works, Ltd.) having a screw diameter of φ65 mm equipped with a T-die having a lip width of 600 mm were set at 230°C. The resulting mixture was added to the extruder and was melt-kneaded at a rotation speed of 70 rpm, and the melt-kneaded product was then extruded from the T-die. Thereafter, the extruded product was cooled by a cooling roll set at 60°C to prepare a sheet with a thickness of 0.5 mm and a width of 500 mm.

At the time of melt-kneading, the resin pressure was 7.8 MPa and the load electric power was 48 A. In addition, the extrusion was performed stably, and the resulting sheet had no thickness irregularity and was excellent in moldability. The resulting sheet had a tensile stress at yield of 31.5 MPa.

The resulting sheet was subjected to vacuum molding to evaluate the formability and the appearance at the time of vacuum molding. The results are shown in Table 13.

[Example 44C]

The T-die molding and vacuum molding tests were conducted in the same manner as in Example 43C except that the polyethylene wax was changed to a polyethylene wax (Excerex 48070BT; manufactured by Mitsui Chemicals Inc., density=902 (kg/$m^3$), Mn=3, 400, A value=4.7 (% by weight), B value=8.7 (% by weight), melt viscosity=1,350 (mPa·s), ethylene content=92 (mol %)). The results are shown in Table 13.

[Example 45C]

The T-die molding and vacuum molding tests were conducted in the same manner as in Example 43C except that the polyethylene wax was changed to a polyethylene wax (1) (density=897 (kg/$m^3$) , Mn=800, A value=23. 5 (% by weight), B value=0.01 (% by weight) , melt viscosity=40 (mPa·s), ethylene content=90 (mol %)). The results are shown in Table 13.

[Example 46C]

The T-die molding and vacuum molding tests were conducted in the same manner as in Example 43C except that the polyethylene wax was changed to a polyethylene wax (2) (density=948 (kg/$m^3$), Mn=1,300, A value=19.8 (% by weight), B value=0.3 (% by weight), melt viscosity=90 (mPa·s), ethylene content=96 (mol %)). The results are shown in Table 13.

[Example 47C]

The T-die molding and vacuum molding tests were conducted in the same manner as in Example 44C except that the additive amount of the polyethylene wax (Excerex 48070BT; manufactured by Mitsui Chemicals Inc.) was changed to 1 part by mass. The results are shown in Table 13.

[Example 48C]

The T-die molding and vacuum molding tests were conducted in the same manner as in Example 44C except that the additive amount of the polyethylene wax (Excerex 48070BT; manufactured by Mitsui Chemicals Inc.) was changed to 5 parts by mass. The results are shown in Table 13.

[Comparative Example 36C]

The cylinder temperature and the die temperature of a single screw extruder (manufactured by The Japan Steel Works, Ltd.) having a screw diameter of φ65 mm equipped with a T-die having a lip width of 600 mm were set at 230°C. A polypropylene resin (PrimePolypro B701WB; manufactured by Prime Polymer Co., Ltd.)(a polypropylene block copolymer, MI=0.5 g/10 min (JIS K7210)) was added to the extruder and was melt-kneaded at a screw rotation speed of 70 rpm, and the melt-kneaded product was then extruded from the T-die. Thereafter, the extruded product was cooled by a cooling roll set at 60°C to prepare a sheet with a thickness of 0.5 mm and a width of 500 mm.

At the time of melt-kneading, the resin pressure was 8.3 MPa and the load electric power was 65 A. In addition, the extrusion was performed stably, and the resulting sheet had no thickness irregularity and was excellent in moldability. The resulting sheet had a tensile stress at yield of 30.8 MPa.

The resulting sheet was subjected to vacuum molding to evaluate the formability and the appearance at the time of vacuum molding. The results are shown in Table 13.

[Comparative Example 37C]

The T-die molding and vacuum molding tests were conducted in the same manner as in Example 43C except that the polyethylene wax was changed to a polyethylene wax (Excerex 10500; manufactured by Mitsui Chemicals Inc., density=960 (kg/$m^3$), Mn=700, A value=47.8 (% by weight), B value=0 (% by weight), melt viscosity=18 (mPa·s), ethylene content=100 (mol %)). The results are shown in Table 13.

[Comparative Example 38C]

The T-die molding and vacuum molding tests were conducted in the same manner as in Example 43C except that the polyethylene wax was changed to a polyethylene wax (Excerex 40800T; manufactured by Mitsui Chemicals Inc., density=980 (kg/$m^3$), Mn=2, 400, A value=7.3, B value=4.2, melt viscosity=600 (mPa·s), ethylene content=100 (mol %)). The results are shown in Table 13.

[Comparative Example 39C]

The T-die molding and vacuum molding tests were conducted in the same manner as in Example 43C except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6.2 (% by weight), melt viscosity=700 (mPa·s), ethylene content=97 (mol %))). The results are shown in Table 13.

[Comparative Example 40C]

The T-die molding and vacuum molding tests were conducted in the same manner as in Example 43C except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 13.

[Table 13]

| Table 13: Vacuum Molding Results | | | | | | | | | | | | |
|---|---|---|---|---|---|---|---|---|---|---|---|---|
| Example/Comparative Example No. | | Example 43C | Example 44C | Example 45C | Example 46C | Example 47C | Example 48C | Comparative Example 36C | Comparative Example 37C | Comparative Example 38C | Comparative Example 39C | Comparative Example 40C |
| Polyethylene | Type | B701WB | B701WB | B701WB | B701WB | B701WB | B701WB | B701WB | B701WB | B701WB | B701WB | B701WB |
| | Quantity | 100 | 100 | 100 | 100 | 100 | 100 | 100 | 100 | 100 | 100 | 100 |
| Polyethylene wax | Type | 30200BT | 48070BT | Polyethyl ene Wax (1) | Polyethyl ene Wax (2) | 48070BT | 48070BT | - | 10500 | 40800T | 420P | A-C6 |
| | Quantity | 2 | 2 | 2 | 2 | 1 | 5 | - | 2 | 2 | 2 | 2 |
| Resin Pressure | | 7.8 | 7.8 | 7.4 | 7.8 | 7.9 | 6.7 | 8.3 | 7.3 | 7.2 | 7.7 | 7.6 |
| Load Electric Power | | 48 | 47 | 46 | 49 | 47 | 40 | 65 | 40 | 44 | 49 | 45 |
| Tensile Stress at Yield | | 31.5 | 31.2 | 30.5 | 30.9 | 30.8 | 31.3 | 30.8 | 29.9 | 30.5 | 27.6 | 25.8 |
| Drawdown Property | | Good | Good | Good | Good | Good | Good | Good | Poor | Poor | Poor | Poor |
| Appearance | | Good | Good | Good | Good | Good | Good | Good | Poor | Poor | Poor | Good |

(Examples in which Polyolefinic Resin is Resin Mixture of Polypropylene (2) and Olefinic Elastomer)

[Example 1D]

A mixture was prepared by mixing 80 parts by mass of a polypropylene resin (PrimePolypro F219DA; manufactured by Prime Polymer Co., Ltd., a polypropylene random polymer, density=910 (kg/$m^3$), MI=8.0 g/10 min), 20 parts by mass of an ethylene-α-olefin random copolymer [an olefinic elastomer] (TAFMER A1050; manufactured by Mitsui Chemicals Inc., density=860 (kg/$m^3$), MI=1.2 g/10 min (190°C, test load: 21.18 N) and 2 parts by weight of a polyethylene wax (Excerex 30200BT; manufactured by Mitsui Chemicals Inc., density=913 (kg/$m^3$), Mn=2, 000, A value=9. 3 (% by weight), B value=2.2 (% by weight), melt viscosity=300 (mPa·s), ethylene content=95 (mol %)). Subsequently, the cylinder temperature and the die temperature of a single screw extruder having a screw diameter of φ20 mm equipped with a T-die having a lip width of 240 mm were set at 200°C and 210°C, respectively. The resulting mixture was added to the extruder and was melt-kneaded at a screw rotation speed of 60 rpm, and the melt-kneaded product was then extruded from the T-die. Thereafter, the extruded product was cooled by a cooling roll to prepare a film with a thickness of 40 μm. At the time of melt-kneading, the resin pressure was 8.9 MPa and the load voltage was 7.4 A. In addition, the extrusion was performed stably, and the resulting film had no thickness irregularity and was excellent in moldability. The resulting film had a tensile stress at yield of 24.8 MPa and a haze of 25.2%. The results are shown in Table 14.

[Example 2D]

The T-die molding was conducted in the same manner as in Example 1D except that the polyethylene wax was changed to a metallocene polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s)). At the time of melt-kneading, the resin pressure was 9.2 MPa and the load voltage was 7.8 A. In addition, the extrusion was performed stably, and the resulting film had no thickness irregularity and was excellent in moldability. The resulting film had a tensile stress at yield of 25.2 MPa and a haze of 23. 6%. The results are shown in Table 14.

[Example 3D]

The T-die molding was conducted in the same manner as in Example 1D except that the polyethylene wax was changed to a polyethylene wax (1) (density=897 (kg/$m^3$), Mn=800, A value=23.5 (% by weight), B value=0.01 (% by weight), melt viscosity=40 (mPa·s)). At the time of melt-kneading, the resin pressure was 8.6 MPa and the load voltage was 7.2 A. In addition, the extrusion was performed stably, and the resulting film had no thickness irregularity and was excellent in moldability. The resulting film had a tensile stress at yield of 25.5 MPa and a haze of 22.7%. The results are shown in Table 14.

[Example 4D]

The T-die molding was conducted in the same manner as in Example 1D except that the polyethylene wax was changed to a polyethylene wax (3) (density=880 (kg/$m^3$), Mn=2, 500, A value=7. 0 (% by weight), B value=4.1 (% by weight), melt viscosity=600 (mPa·s)). At the time of melt-kneading, the resin pressure was 9.0 MPa and the load voltage was 7.5 A. In addition, the extrusion was performed stably, and the resulting film had no thickness irregularity and was excellent in moldability. The resulting film had a tensile stress at yield of 25.4 MPa and a haze of 22.1%. The results are shown in Table 14.

[Example 5D]

The T-die molding was conducted in the same manner as in Example 2D except that the additive amount of the metallocene polyethylene wax (Excerex 48070BT; manufactured by Mitsui Chemicals Inc.) was changed to 1 part by mass. At the time of melt-kneading, the resin pressure was 10.1 MPa and the load voltage was 7.9 A. In addition, the extrusion was performed stably, and the resulting film had no thickness irregularity and was excellent in moldability. The resulting film had a tensile stress at yield of 25.2 MPa and a haze of 24.1%. The results are shown in Table 14.

[Example 6D]

The T-die molding was conducted in the same manner as in Example 2D except that the additive amount of the metallocene polyethylene wax (Excerex 48070BT; manufactured by Mitsui Chemicals Inc.) was changed to 5 parts by mass. At the time of melt-kneading, the resin pressure was 8.1 MPa and the load voltage was 6.9 A. In addition, the

extrusion was performed stably, and the resulting film had no thickness irregularity and was excellent in moldability. The resulting film had a tensile stress at yield of 24.7 MPa and a haze of 24.1%. The results are shown in Table 14.

[Comparative Example 1D]

80 parts by mass of a polypropylene resin (PrimePolypro F219DA; manufactured by Prime Polymer Co., Ltd., a polypropylene random polymer, density=910 (kg/$m^3$), MI=8.0 g/10 min) was mixed with 20 parts by mass of an ethylene-α-olefin random copolymer [an olefinic elastomer] (TAFMER A1050; manufactured by Mitsui Chemicals Inc., density=860 (kg/$m^3$), MI=1.2 g/10 min (190°C, test load: 21.18 N). Subsequently, the cylinder temperature and the die temperature of a single screw extruder having a screw diameter of φ20 mm equipped with a T-die having a lip width of 240 mm were set at 200°C and 210°C, respectively. The resulting mixture was added to the extruder and was melt-kneaded at a screw rotation speed of 60 rpm, and the melt-kneaded product was extruded from the T-die. Thereafter, the extruded product was cooled by a cooling roll to prepare a film with a thickness of 40 μm. The results are shown in Table 14.

[Comparative Example 2D]

The T-die molding was conducted in the same manner as in Example 1D except that the polyethylene wax was changed to a polyethylene wax (4) (density=932 (kg/$m^3$), Mn=3, 000, A value=4. 6 (% by weight), B value=6.7 (% by weight), melt viscosity=1,000 (mPa·s)). The results are shown in Table 14. The tensile stress at yield decreases and the haze increases, compared to those of the polypropylene resin composition in Comparative Example 1D, to which the wax is not added.

[Comparative Example 3D]

The T-die molding was conducted in the same manner as in Example 1D except that the polyethylene wax was changed to a polyethylene wax (Hi-wax 420P; manufactured by Mitsui Chemicals Inc., density=930 (kg/$m^3$), Mn=2, 000, A value=8.3 (% by weight), B value=6.2 (% by weight), melt viscosity=700 (mPa·s)). The results are shown in Table 14. The tensile stress at yield decreases and the haze increases, compared to those of the polypropylene resin composition in Comparative Example 1D, to which the wax is not added.

[Comparative Example 4D]

The T-die molding was conducted in the same manner as in Example 1D except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 14. The tensile stress at yield decreases and the haze increases, compared to those of the polypropylene resin composition in Comparative Example 1D, to which the wax is not added.

[Table 14]

Table 14: T-die Molding Results

| Example/Comparative Example No. | | Example 1D | Example 2D | Example 3D | Example 4D | Example 5D | Example 6D | Comparative Example 1D | Comparative Example 2D | Comparative Example 3D | Comparative Example 4D |
|---|---|---|---|---|---|---|---|---|---|---|---|
| Polypropylene | Type | F219DA | F219DA | F219DA | F219DA | F219DA | F219DA | F219DA | F219DA | F219DA | F219DA |
| | Quantity | 80 | 80 | 80 | 80 | 80 | 80 | 80 | 80 | 80 | 80 |
| Elastomer | Type | A1050 | A1050 | A1050 | A1050 | A1050 | A1050 | A1050 | A1050 | A1050 | A1050 |
| | Quantity | 20 | 20 | 20 | 20 | 20 | 20 | 20 | 20 | 20 | 20 |
| Polyethylene Wax | Type | 30200BT | 48070BT | Polyethylene wax (1) | Polyethylene wax | 48070BT (3) | 48070BT | - | Polyethylene wax (4) | 420P | A-C6 |
| | Quantity | 2 | 2 | 2 | 2 | 1 | 5 | - | 2 | 2 | 2 |
| Resin Pressure | MPa | 8.9 | 9.2 | 8.6 | 9.0 | 10.1 | 8.1 | 10.8 | 9.3 | 9.3 | 10.1 |
| Load Electric Power | A | 7.4 | 7.8 | 7.2 | 7.5 | 7.9 | 6.9 | 8.3 | 7.6 | 7.6 | 7.9 |
| Tensile Stress at Yield | MPa | 24.8 | 25.2 | 25.5 | 25.4 | 25.2 | 24.7 | 25.3 | 22.1 | 20.8 | 22.4 |
| Haze | % | 25.2 | 23.6 | 22.7 | 22.1 | 24.1 | 24.1 | 24.4 | 25.1 | 28.1 | 25.3 |

[Example 7D]

A mixture was prepared by mixing 80 parts by mass of a polypropylene resin (PrimePolypro F219DA; manufactured by Prime Polymer Co., Ltd., a polypropylene random polymer, density=910 (kg/$m^3$), MI=8.0 g/10 min), 20 parts by mass of a propylene-α-olefin random copolymer [an olefinic elastomer] (TAFMER XM7070; manufactured by Mitsui Chemicals Inc., density=900 (kg/$m^3$), MI=7.0 g/10 min (230°C, test load: 21.18 N) and 2 parts by weight of a polyethylene wax (Excerex 30200BT; manufactured by Mitsui Chemicals Inc., density=913 (kg/$m^3$), Mn=2,000, A value=9.3 (% by weight), B value=2.2 (% by weight), melt viscosity=300 (mPa-s), ethylene content=95 (mol %)). Subsequently, the cylinder temperature and the die temperature of a single screw extruder having a screw diameter of φ20 mm equipped with a T-die having a lip width of 240 mm were set at 200°C and 210°C, respectively. The resulting mixture was added to the extruder and was melt-kneaded at a screw rotation speed of 60 rpm, and the melt-kneaded product was then extruded from the T-die. Thereafter, the extruded product was cooled by a cooling roll to prepare a film with a thickness of 40 μm. At the time of melt-kneading, the resin pressure was 7.0 MPa and the load voltage was 6.6 A. In addition, the extrusion was performed stably, and the resulting film had no thickness irregularity and was excellent in moldability. The resulting film had a tensile stress at yield of 21.9 MPa and a haze of 22.1%. The results are shown in Table 15.

[Example 8D]

The T-die molding was conducted in the same manner as in Example 7D except that the polyethylene wax was changed to a metallocene polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s)). At the time of melt-kneading, the resin pressure was 7.3 MPa and the load voltage was 7.0 A. In addition, the extrusion was performed stably, and the resulting film had no thickness irregularity and was excellent in moldability. The resulting film had a tensile stress at yield of 22.2 MPa and a haze of 20.6%. The results are shown in Table 15.

[Example 9D]

The T-die molding was conducted in the same manner as in Example 7D except that the polyethylene wax was changed to a polyethylene wax (1) (density=897 (kg/$m^3$), Mn=800, A value=23.5 (% by weight), B value=0.01 (% by weight), melt viscosity=40 (mPa·s)). At the time of melt-kneading, the resin pressure was 6.8 MPa and the load voltage was 6.2 A. In addition, the extrusion was performed stably, and the resulting film had no thickness irregularity and was excellent in moldability. The resulting film had a tensile stress at yield of 22.5 MPa and a haze of 20.4%. The results are shown in Table 15.

[Example 10D]

The T-die molding was conducted in the same manner as in Example 7D except that the polyethylene wax was changed to a polyethylene wax (3) (density=880 (kg/$m^3$), Mn=2, 500, A value=7. 0 (% by weight), B value=4.1 (% by weight), melt viscosity=600 (mPa·s)). At the time of melt-kneading, the resin pressure was 7.1 MPa and the load voltage was 6.7 A. In addition, the extrusion was performed stably, and the resulting film had no thickness irregularity and was excellent in moldability. The resulting film had a tensile stress at yield of 22.7 MPa and a haze of 19.7%. The results are shown in Table 15.

[Example 11D]

The T-die molding was conducted in the same manner as in Example 8D except that the additive amount of the metallocene polyethylene wax (Excerex 48070BT; manufactured by Mitsui Chemicals Inc.) was changed to 1 part by mass. At the time of melt-kneading, the resin pressure was 8.2 MPa and the load voltage was 7.3 A. In addition, the extrusion was performed stably, and the resulting film had no thickness irregularity and was excellent in moldability. The resulting film had a tensile stress at yield of 22.2 MPa and a haze of 21.1%. The results are shown in Table 15.

[Example 12D]

The T-die molding was conducted in the same manner as in Example 8D except that the additive amount of the metallocene polyethylene wax (Excerex 48070BT; manufactured by Mitsui Chemicals Inc.) was changed to 5 parts by mass. At the time of melt-kneading, the resin pressure was 6.3 MPa and the load voltage was 6.0 A. In addition, the extrusion was performed stably, and the resulting film had no thickness irregularity and was excellent in moldability. The resulting film had a tensile stress at yield of 21.7 MPa and a haze of 21.1%. The results are shown in Table 15.

[Comparative Example 5D]

80 parts by mass of a polypropylene resin (PrimePolypro F219DA; manufactured by Prime Polymer Co., Ltd., a polypropylene random polymer, density=910 (kg/$m^3$), MI=8. 0 g/10 min) was mixed with 20 parts by mass of a propylene-$\alpha$-olefin random copolymer [an olefinic elastomer] (TAFMER XM7070; manufactured by Mitsui Chemicals Inc., density=900 (kg/$m^3$), MI=7.0 g/10 min (230°C, test load: 21.18 N)). Subsequently, the cylinder temperature and the die temperature of a single screw extruder having a screw diameter of $\varphi$20 mm equipped with a T-die having a lip width of 240 mm were set at 200°C and 210°C, respectively. The resulting mixture was added to the extruder and was melt-kneaded at a screw rotation speed of 60 rpm, and the melt-kneaded product was then extruded from the T-die. Thereafter, the extruded product was cooled by a cooling roll to prepare a film with a thickness of 40 $\mu$m. The results are shown in Table 15.

[Comparative Example 6D]

The T-die molding was conducted in the same manner as in Example 7D except that the polyethylene wax was changed to a polyethylene wax (4) (density=932 (kg/$m^3$), Mn=3, 000, A value=4.6 (% by weight), B value=6.7 (% by weight), melt viscosity=1,000 (mPa·s)). The results are shown in Table 15. The tensile stress at yield decreases and the haze increases, compared to those of the polypropylene resin composition in Comparative Example 5D, to which the wax is not added.

[Comparative Example 7D]

The T-die molding was conducted in the same manner as in Example 7D except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6.2 (% by weight), melt viscosity=700 (mPa·s)). The results are shown in Table 15. The tensile stress at yield decreases and the haze increases, compared to those of the polypropylene resin composition in Comparative Example 5D, to which the wax is not added.

[Comparative Example 8D]

The T-die molding was conducted in the same manner as in Example 7D except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)). The results are shown in Table 15. The tensile stress at yield decreases and the haze increases, compared to those of the polypropylene resin composition in Comparative Example 5D, to which the wax is not added.

[Table 15]

Table 15: T-die Molding Results

| Example/Comparative Example No. | | Example 7D | Example 8D | Example 9D | Example 10D | Example 11D | Example 12D | Comparative Example 5D | Comparative Example 6D | Comparative Example 7D | Comparative Example 8D |
|---|---|---|---|---|---|---|---|---|---|---|---|
| Polypropylene | Type | F219DA | F219DA | F219DA | F219DA | F219DA | F219DA | F219DA | F219DA | F219DA | F219DA |
| | Quantity | 80 | 80 | 80 | 80 | 80 | 80 | 80 | 80 | 80 | 80 |
| Elastomer | Type | XM7070 | XM7070 | XM7070 | XM7070 | XM7070 | XM7070 | XM7070 | XM7070 | XM7070 | XM7070 |
| | Quantity | 20 | 20 | 20 | 20 | 20 | 20 | 20 | 20 | 20 | 20 |
| Polyethylene wax | Type | 30200BT | 48070BT | Polyethylene wax (1) | Polyethylene wax (3) | 48070BT | 48070BT | - | Polyethylene Wax (4) | 420P | A-C6 |
| | Quantity | 2 | 2 | 2 | 2 | 1 | 5 | - | 2 | 2 | 2 |
| Resin Pressure | MPa | 7.0 | 7.3 | 6.8 | 7.1 | 8.2 | 6.3 | 8.6 | 7.0 | 7.0 | 8.1 |
| Load Electric Power | A | 6.6 | 7.0 | 6.2 | 6.7 | 7.3 | 6.0 | 7.6 | 6.5 | 6.5 | 7.2 |
| Tensile Stress at Yield | MPa | 21.9 | 22.2 | 22.5 | 22.7 | 22.2 | 21.7 | 22.3 | 20.1 | 19.8 | 19.7 |
| Haze | % | 22.1 | 20.6 | 20.4 | 19.7 | 21.1 | 21.1 | 21.4 | 22.6 | 24.6 | 22.1 |

The properties of the sheets prepared in Examples 13D to 24D and Comparative Examples 10D to 16D were measured in the following manner.

(Productivity)

The productivity was evaluated by the resin pressure (MPa) and the load electric power (A) in T-die molding.

(Mechanical Properties)

The test specimens of No. 4 specified in ASTM D638 were prepared and a tensile test was conducted at a speed of 50 mm/min at 23°C to measure a tensile stress at yield.

(Drawdown Properties)

The resulting sheet was vacuum molded under the conditions of the sheet surface temperature of 190°C and heating time of 20 seconds using a pressure and vacuum forming machine (manufactured by Asano Laboratories Co., Ltd.), whose heater temperature was set at 600°C.

The formability (drawdown) in vacuum molding was evaluated by visually observing the drooping degree of a sheet softened by heat in vacuum molding.

Good: The sheet did not droop excessively and vacuum molding was therefore performed without problems
Poor: A sheet drooped excessively and contacted with the heater

(Appearance)

The gloss feeling of the surface of the resulting molded article was visually observed to be evaluated by comparing with that of a molded article made of polyethylene alone.

Good: The gloss feeling was not changed
Poor: The gloss feeling was deteriorated

[Example 13D]

A mixture was prepared by mixing 80 parts by mass of a polypropylene resin (PrimePolypro E111G; manufactured by Prime Polymer Co., Ltd., a polypropylene homopolymer, density=910 (kg/$m^3$), MI=0.5 g/10 min), 20 parts by mass of an ethylene-α-olefin random copolymer [an olefinic elastomer] (TAFMER A1050; manufactured by Mitsui Chemicals Inc., density=860 (kg/$m^3$), MI=1.2 g/10 min (190°C, test load: 21.18 N) and 2 parts by mass of a polyethylene wax (Excerex 30200BT; manufactured by Mitsui Chemicals Inc., density=913 (kg/$m^3$), Mn=2, 000, A value=9. 3 (% by weight), B value=2. 2 (% by weight), melt viscosity=300 (mPa·s), ethylene content=95 (mol %)). Subsequently, the cylinder temperature and the die temperature of a single screw extruder having a screw diameter of φ65 mm equipped with a T-die having a lip width of 600 mm were set at 210°C and 220°C, respectively. The resulting mixture was added to the extruder and was melt-kneaded at a rotation speed of 70 rpm, and the melt-kneaded product was then extruded from the T-die. Thereafter, the extruded product was cooled by a cooling roll to prepare a sheet with a thickness of 0.5 mm. At the time of melt-kneading, the resin pressure was 8.6 MPa and the load voltage was 56.1 A. In addition, the extrusion was performed stably, and the resulting film had no thickness irregularity and was excellent in moldability. The resulting sheet had a tensile stress at yield of 35.1 MPa.

Further, the resulting sheet was subjected to vacuum molding to evaluate the formability and the appearance at the time of vacuum molding. The results are shown in Table 16.

[Example 14D]

The T-die molding was conducted in the same manner as in Example 13D except that the polyethylene wax was changed to a metallocene polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s)). At the time of melt-kneading, the resin pressure was 8.8 MPa and the load voltage was 57.2 A. In addition, the extrusion was performed stably, and the resulting sheet had no thickness irregularity and was excellent in moldability. The resulting

sheet had a tensile stress at yield of 36.5 MPa.

Further, the resulting sheet was subjected to vacuum molding to evaluate the formability and the appearance at the time of vacuum molding. The results are shown in Table 16.

[Example 15D]

The T-die molding was conducted in the same manner as in Example 13D except that the polyethylene wax was changed to a polyethylene wax (1) (density=897 (kg/$m^3$), Mn=800, A value=23.5 (% by weight), B value=0.01 (% by weight), melt viscosity=40 (mPa·s)). At the time of melt-kneading, the resin pressure was 8.5 MPa and the load voltage was 54.9 A. In addition, the extrusion was performed stably, and the resulting sheet had no thickness irregularity and was excellent in moldability. The resulting sheet had a tensile stress at yield of 36.4 MPa.

Further, the resulting sheet was subjected to vacuum molding to evaluate the formability and the appearance at the time of vacuum molding. The results are shown in Table 16.

[Example 16D]

The T-die molding was conducted in the same manner as in Example 13D except that the polyethylene wax was changed to a polyethylene wax (3) (density=880 (kg/$m^3$), Mn=2, 500, A value=7.0 by weight), B value=4.1 (% by weight), melt viscosity=600 (mPa·s)). At the time of melt-kneading, the resin pressure was 8.7 MPa and the load voltage was 56.4 A. In addition, the extrusion was performed stably, and the resulting sheet had no thickness irregularity and was excellent in moldability. The resulting sheet had a tensile stress at yield of 36.8 MPa.

Further, the resulting sheet was subjected to vacuum molding to evaluate the formability and the appearance at the time of vacuum molding. The results are shown in Table 16.

[Example 17D]

The T-die molding was conducted in the same manner as in Example 14D except that the additive amount of the metallocene polyethylene wax (Excerex 48070BT; manufactured by Mitsui Chemicals Inc.) was changed to 1 part by mass. At the time of melt-kneading, the resin pressure was 9.0 MPa and the load voltage was 60.3 A. In addition, the extrusion was performed stably, and the resulting sheet had no thickness irregularity and was excellent in moldability. The resulting sheet had a tensile stress at yield of 36.2 MPa.

Further, the resulting sheet was subjected to vacuum molding to evaluate the formability and the appearance at the time of vacuum molding. The results are shown in Table 16.

[Example 18D]

The T-die molding was conducted in the same manner as in Example 14D except that the additive amount of the metallocene polyethylene wax (Excerex 48070BT; manufactured by Mitsui Chemicals Inc.) was changed to 5 parts by mass. At the time of melt-kneading, the resin pressure was 8.1 MPa and the load voltage was 52.2 A. In addition, the extrusion was performed stably, and the resulting sheet had no thickness irregularity and was excellent in moldability. The resulting sheet had a tensile stress at yield of 34.9 MPa.

Further, the resulting sheet was subjected to vacuum molding to evaluate the formability and the appearance at the time of vacuum molding. The results are shown in Table 16.

[Comparative Example 9D]

80 parts by mass of a polypropylene resin (PrimePolypro E111G; manufactured by Prime Polymer Co., Ltd., a polypropylene homopolymer, density=910 (kg/$m^3$), MI=0.5 g/10 min) was mixed with 20 parts by mass of an ethylene-$\alpha$-olefin random copolymer [an olefinic elastomer] (TAFMER A1050; manufactured by Mitsui Chemicals Inc., density=860 (kg/$m^3$), MI=1.2 g/10 min (190°C, test load: 21.18 N). Subsequently, the cylinder temperature and the die temperature of a single screw extruder having a screw diameter of φ65 mm equipped with a T-die having a lip width of 600 mm were set at 210°C and 220°C, respectively. The resulting mixture was added to the extruder and was melt-kneaded at a screw rotation speed of 70 rpm, and the melt-kneaded product was then extruded from the T-die. Thereafter, the extruded product was cooled by a cooling roll to prepare a sheet with a thickness of 0.5 $\mu$m. In addition, the resulting sheet was subjected to vacuum molding under the conditions. The results are shown in Table 16.

[Comparative Example 100]

The T-die molding was conducted in the same manner as in Example 13D except that the polyethylene wax was changed to a polyethylene wax (4) (density=932 (kg/$m^3$), Mn=3, 000, A value=4.6 (% by weight), B value=6.7 (% by weight), melt viscosity=1,000 (mPa·s)).

In addition, the resulting sheet was subjected to vacuum molding to evaluate the formability and the appearance at the time of vacuum molding. The results are shown in Table 16. The tensile stress at yield decreases and the haze increases, compared to those of the polypropylene resin composition in Comparative Example 9D, to which the wax is not added. Further, the drawdown property at the time of vacuum molding is impaired and the resulting molded article is poor in appearance.

[Comparative Example 11D]

The T-die molding was conducted in the same manner as in Example 13D except that the polyethylene wax was changed to a polyethylene wax (Hi-wax 420P; manufactured by Mitsui Chemicals Inc., density=930 (kg/$m^3$), Mn=2,000, A value=8.3 (% by weight), B value=6.2 (% by weight), melt viscosity=700 (mPa·s)).

In addition, the resulting sheet was subjected to vacuum molding to evaluate the formability and the appearance at the time of vacuum molding. The results are shown in Table 16. The tensile stress at yield decreases and the haze increases, compared to those of the polypropylene resin composition in Comparative Example 9D, to which the wax is not added. Further, the drawdown property at the time of vacuum molding is impaired and the resulting molded article is poor in appearance.

[Comparative Example 12D]

The T-die molding was conducted in the same manner as in Example 13D except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)).

In addition, the resulting sheet was subjected to vacuum molding to evaluate the formability and the appearance at the time of vacuum molding. The results are shown in Table 16. The tensile stress at yield decreases and the haze increases, compared to those of the polypropylene resin composition in Comparative Example 9D, to which the wax is not added. Further, the drawdown property at the time of vacuum molding is impaired.

[Table 16]

| Table 16: Vacuum Molding Results | | | | | | | | | | | |
|---|---|---|---|---|---|---|---|---|---|---|---|
| Example/Comparative Example No. | | Example 13D | Example 14D | Example 15D | Example 16D | Example 17D | Example 18D | Comparative Example 9D | Comparative Example 10D | Comparative Example 11D | Comparative Example 12D |
| Polypropylene | Type | E111G | E111G | E111G | E111G | E111G | E111G | E111G | E111G | E111G | E111G |
| | Quantity | 80 | 80 | 80 | 80 | 80 | 80 | 80 | 80 | 80 | 80 |
| Elastomer | Type | A1050 | A1050 | A1050 | A1050 | A1050 | A1050 | A1050 | A1050 | A1050 | A1050 |
| | Quantity | 20 | 20 | 20 | 20 | 20 | 20 | 20 | 20 | 20 | 20 |
| Polyethylene Wax | Type | 30200BT | 48070BT | Polyethylene Wax (1) | Polyethylene Wax (3) | 48070BT | 48070BT | - | Polyethylene Wax (4) | 420P | A-C6 |
| | Quantity | 2 | 2 | 2 | 2 | 1 | 5 | - | 2 | 2 | 2 |
| Resin Pressure | MPa | 8.6 | 8.8 | 8.5 | 8.7 | 9.0 | 8.1 | 9.4 | 8.6 | 8.5 | 8.9 |
| Load Electric Power | A | 56.1 | 57.2 | 54.9 | 56.4 | 60.3 | 52.2 | 73.7 . | 55.5 | 55.1 | 58.3 |
| Tensile Stress at Yield | MPa | 35.1 | 36.5 | 36.4 | 36.8 | 36.2 | 34.9 | 36.1 | 33.5 | 33.1 | 33.0 |
| Drawdown Property | | Good | Good | Good | Good | Good | Good | Good | Poor | Poor | Poor |
| Appearance | | Good | Good | Good | Good | Good | Good | Good | Poor | Poor | Good |

[Example 19D]

A mixture was prepared by mixing 80 parts by mass of a polypropylene resin (PrimePolypro E111G; manufactured by Prime Polymer Co., Ltd.)(a polypropylene homopolymer, density=910 (kg/$m^3$), MI=0.5 g/10 min), 20 parts by mass of a propylene-$\alpha$-olefin random copolymer [an olefinic elastomer] (TAFMERXM7070; manufactured by Mitsui Chemicals Inc., density=900 (kg/$m^3$), MI=7.0 g/10 min (230°C, test load: 21.18 N)) and 2 parts by mass of a polyethylene wax (Excerex 30200BT; manufactured by Mitsui Chemicals Inc., density=913 (kg/$m^3$), Mn=2, 000, A value=9. 3 (% by weight), B value=2.2 (% by weight), melt viscosity=300 (mPa·s), ethylene content=95 (mol %)). Subsequently, the cylinder temperature and the die temperature of a single screw extruder having a screw diameter of φ65 mm equipped with a T-die having a lip width of 600 mm were set at 210°C and 220°C, respectively. The resulting mixture was added to the extruder and was melt-kneaded at a screw rotation speed of 70 rpm, and the melt-kneaded product was then extruded from the T-die. Thereafter, the extruded product was cooled by a cooling roll to prepare a sheet with a thickness of 0.5 mm. At the time of melt-kneading, the resin pressure was 7.9 MPa and the load voltage was 52.2 A. In addition, the extrusion was performed stably, and the resulting sheet had no thickness irregularity and was excellent in moldability. The resulting film had a tensile stress at yield of 33.2 MPa.
Further, the resulting sheet was subjected to vacuum molding to evaluate the formability and the appearance at the time of vacuum molding. The results are shown in Table 17.

[Example 20D]

The T-die molding was conducted in the same manner as in Example 19D except that the polyethylene wax was changed to a metallocene polyethylene wax (Excerex 48070BT; manufactured by Mitsui Chemicals Inc., density=902 (kg/$m^3$), Mn=3,400, A value=4.7 (% by weight), B value=8.7 (% by weight), melt viscosity=1,350 (mPa·s)). At the time of melt-kneading, the resin pressure was 8.1 MPa and the load voltage was 53.6 A. In addition, the extrusion was performed stably, and the resulting sheet had no thickness irregularity and was excellent in moldability. The resulting sheet had a tensile stress at yield of 33.8 MPa.
Further, the resulting sheet was subjected to vacuum molding to evaluate the formability and the appearance at the time of vacuum molding. The results are shown in Table 17.

[Example 21D]

The T-die molding was conducted in the same manner as in Example 19D except that the polyethylene wax was changed to a polyethylene wax (1) (density=897 (kg/$m^3$), Mn=800, A value=23.5 (% by weight), B value=0.01 (% by weight), melt viscosity=40 (mPa·s)). At the time of melt-kneading, the resin pressure was 7.8 MPa and the load voltage was 50.5 A. In addition, the extrusion was performed stably, and the resulting sheet had no thickness irregularity and was excellent in moldability. The resulting sheet had a tensile stress at yield of 34.1 MPa.
Further, the resulting sheet was subjected to vacuum molding to evaluate the formability and the appearance at the time of vacuum molding. The results are shown in Table 17.

[Example 22D]

The T-die molding was conducted in the same manner as in Example 19D except that the polyethylene wax was changed to a polyethylene wax (3) (density=880 (kg/$m^3$), Mn=2, 500, A value=7.0 (% by weight), B value=4.1 (% by weight), melt viscosity=600 (mPa·s)). At the time of melt-kneading, the resin pressure was 8.0 MPa and the load voltage was 51.5 A. In addition, the extrusion was performed stably, and the resulting sheet had no thickness irregularity and was excellent in moldability. The resulting film had a tensile stress at yield of 34.8 MPa.
Further, the resulting sheet was subjected to vacuum molding to evaluate the formability and the appearance at the time of vacuum molding. The results are shown in Table 17.

[Example 23D]

The T-die molding was conducted in the same manner as in Example 20D except that the additive amount of the metallocene polyethylene wax (Excerex 48070BT; manufactured by Mitsui Chemicals Inc.) was changed to 1 part by mass. At the time of melt-kneading, the resin pressure was 8.3 MPa and the load voltage was 54.6 A. In addition, the extrusion was performed stably, and the resulting sheet had no thickness irregularity and was excellent in moldability. The resulting sheet had a tensile stress at yield of 33.3 MPa.
Further, the resulting sheet was subjected to vacuum molding to evaluate the formability and the appearance at the time of vacuum molding. The results are shown in Table 17.

[Example 24D]

The T-die molding was conducted in the same manner as in Example 20D except that the additive amount of the metallocene polyethylene wax (Excerex 48070BT; manufactured by Mitsui Chemicals Inc.) was changed to 5 parts by mass. At the time of melt-kneading, the resin pressure was 7.5 MPa and the load voltage was 48.3 A. In addition, the extrusion was performed stably, and the resulting sheet had no thickness irregularity and was excellent in moldability. The resulting sheet had a tensile stress at yield of 32.7 MPa.

Further, the resulting sheet was subjected to vacuum molding to evaluate the formability and the appearance at the time of vacuum molding. The results are shown in Table 17.

[Comparative Example 13D]

80 parts by mass of a polypropylene resin (PrimePolypro E111G; manufactured by Prime Polymer Co., Ltd., a polypropylene homopolymer, density=910 (kg/$m^3$), MI=0.5 g/10 min) was mixed with 20 parts by mass of a propylene-$\alpha$-olefin random copolymer [an olefinic elastomer](TAFMER XM7070; manufactured by Mitsui Chemicals Inc., density=900 (kg/$m^3$), MI=7.0 g/10 min (230°C, test load: 21.18 N)). Subsequently, the cylinder temperature and the die temperature of a single screw extruder having a screw diameter of φ65 mm equipped with a T-die having a lip width of 600 mm were set at 210°C and 220°C, respectively. The resulting mixture was added to the extruder and was melt-kneaded at a screw rotation speed of 70 rpm, and the melt-kneaded product was then extruded from the T-die. Thereafter, the extruded product was cooled by a cooling roll to prepare a sheet with a thickness of 0.5μm. In addition, the resulting sheet was subjected to vacuum molding under the above conditions. The results are shown in Table 17.

[Comparative Example 14D]

The T-die molding was conducted in the same manner as in Example 19D except that the polyethylene wax was changed to a polyethylene wax (4) (density=932 (kg/$m^3$), Mn=3, 000, A value=4.6 (% by weight), B value=6.7 (% by weight), melt viscosity=1,000 (mPa·s)).

In addition, the resulting sheet was subjected to vacuum molding to evaluate the formability and the appearance at the time of vacuum molding. The results are shown in Table 17. The tensile stress at yield decreases and the haze increases, compared to those of the polypropylene resin composition in Comparative Example 13D, to which the wax is not added. Further, the drawdown property at the time of vacuum molding is impaired and the resulting molded article is poor in appearance.

[Comparative Example 15D]

The T-die molding was conducted in the same manner as in Example 19D except that the polyethylene wax was changed to a polyethylene wax (Hi-wax 420P; manufactured by Mitsui Chemicals Inc., density=930 (kg/$m^3$), Mn=2, 000, A value=8. 3 (% by weight), B value=6.2 (% by weight), melt viscosity=700 (mPa·s)).

In addition, the resulting sheet was subjected to vacuum molding to evaluate the formability and the appearance at the time of vacuum molding. The results are shown in Table 17. The tensile stress at yield decreases and the haze increases, compared to those of the polypropylene resin composition in Comparative Example 13D, to which the wax is not added. Further, the drawdown property at the time of vacuum molding is impaired and the resulting molded article is poor in appearance.

[Comparative Example 16D]

The T-die molding was conducted in the same manner as in Example 19D except that the polyethylene wax was changed to a polyethylene wax (A-C6; manufactured by Honeywell International, Inc., density=913 (kg/$m^3$), Mn=1,800, A value=6.5 (% by weight), B value=3.3 (% by weight), melt viscosity=420 (mPa·s)).

In addition, the resulting sheet was subjected to vacuum molding to evaluate the formability and the appearance at the time of vacuum molding. The results are shown in Table 17. The tensile stress at yield decreases and the haze increases, compared to those of the polypropylene resin composition in Comparative Example 13D, to which the wax is not added. Further, the drawdown property at the time of vacuum molding is impaired.

[Table 17]

| Table 17: Vacuum Molding Results | | | | | | | | | | | |
|---|---|---|---|---|---|---|---|---|---|---|---|
| Example/Comparative Example No. | | Example 19D | Example 20D | Example 21D | Example 22D | Example 23D | Example 24D | Comparative Example 13D | Comparative Example 14D | Comparative Example 15D | Comparative Example 16D |
| Polypropylene | Type | E111G | E111G | E111G | E111G | E111G | E111G | E111G | EI11G | E111G | EIIIG |
| | Quantity | 80 | 80 | 80 | 80 | 80 | 80 | 80 | 80 | 80 | 80 |
| Elastomer | Type | XM7070 | XM7070 | XM7070 | XM7070 | XM7070 | XM7070 | XM7070 | XM7070 | XM7070 | XM7070 |
| | Quantity | 20 | 20 | 20 | 20 | 20 | 20 | 20 | 20 | 20 | 20 |
| Polyethylene Wax | Type | 30200BT | 48070BT | Polyethylene Wax (1) | Polyethylene Wax (3) | 48070BT | 48070BT | - | Polyethylene Wax (4) | 420P | A-C6 |
| | Quantity | 2 | 2 | 2 | 2 | 1 | 5 | - | 2 | 2 | 2 |
| Resin Pressure | MPa | 7.9 | 8.1 | 7.8 | 8.0 | 8.3 | 7.5 | 8.8 | 7.8 | 7.9 | 8.4 |
| Load Electric Power | A | 52.2 | 53.6 | 50.5 | 51.5 | 54.6 | 48.3 | 69.0 | 50.2 | 51.5 | 54.1 |
| Tensile Stress at Yield | MPa | 33.2 | 33.8 | 34.1 | 34.8 | 33.3 | 32.7 | 33.5 | 31.8 | 31.5 | 31.2 |
| Drawdown Property | | Good | Good | Good | Good | Good | Good | Good | Poor | Poor | Poor |
| Appearance | | Good | Good | Good | Good | Good | Good | Good | Poor | Poor | Good |

## Claims

1. A process for producing a molded article by T-die molding a mixture comprising a polyolefinic resin and a polyethylene wax, the polyethylene wax having a density of 880 to 980 (kg/$m^3$) as measured by a density gradient tube method in accordance with JIS K7112 and a number average molecular weight (Mn) of 500 to 4,000 in terms of polyethylene as determined by gel permeation chromatography (GPC) and satisfying the relationship shown by the following expression (I):

$$B \leq 0.0075 \times K \ldots (I)$$

wherein B is a content ratio (% by weight) of components having a molecular weight of 20,000 or more in terms of polyethylene in the polyethylene wax as determined by gel permeation chromatography and K is a melt viscosity (mPa·s) of the polyethylene wax at 140°C.

2. The process for producing a molded article by T-die molding according to claim 1, wherein the polyethylene wax further satisfies the relationship shown by the following expression (II):

$$A \leq 230 \times K^{(-0.537)} \ldots (II)$$

wherein A is a content ratio (% by weight) of components having a molecular weight of 1,000 or less in terms of polyethylene in the polyethylene wax as determined by gel permeation chromatography and K is a melt viscosity (mPa·s) of the polyethylene wax at 140°C.

3. The process for producing a molded article by T-die molding according to claim 1 or 2, wherein the polyolefinic resin is polyethylene having a density of 900 (kg/$m^3$) or more to less than 940 (kg/$m^3$) as measured by a density gradient tube method in accordance with JIS K7112 and an MI of 0.01 to 100 g/10 min as measured at 190°C under a test load of 21.18 N in accordance with JIS K7210.

4. The process for producing a molded article by T-die molding according to claim 1 or 2, wherein the polyolefinic resin is polyethylene having a density of 940 to 980 (kg/$m^3$) as measured by a density gradient tube method in accordance with JIS K7112 and an MI of 0.01 to 100 g/10 min as measured at 190°C under a test load of 21.18 N in accordance with JIS K7210, and the polyethylene wax has a number average molecular weight (Mn) of 500 to 3,000 in terms of polyethylene as determined by gel permeation chromatography (GPC).

5. The process for producing a molded article by T-die molding according to claim 1 or 2, wherein the polyolefinic resin is polypropylene having an MI of 0.01 to 100 g/10 min as measured at 230°C under a test load of 21.18 N in accordance with JIS K7210, and the polyethylene wax has a density of 890 to 950 (kg/$m^3$) as measured by a density gradient tube method in accordance with JIS K7112 and a number average molecular weight (Mn) of 700 to 4,000 in terms of polyethylene as determined by gel permeation chromatography (GPC).

6. The process for producing a molded article by T-die molding according to claim 1 or 2, wherein the polyolefinic resin is a resin mixture comprising 55 to 95% by weight of polypropylene and 5 to 45% by weight of an olefinic elastomer based on the total 100% by weight of the polypropylene and the olefinic elastomer, and the polyethylene wax has a density of 880 to 920 (kg/$m^3$) as measured by a density gradient tube method in accordance with JIS K7112.

7. The process for producing a molded article by T-die molding according to any of claims 1 to 6, wherein a mixture comprising 0.01 to 10 parts by weight of the polyethylene wax per 100 parts by weight of the polyolefinic resin is used.

8. A process for producing a secondary molded article by vacuum molding using a molded article obtained from the production process according to any of claims 1 to 7.

**Patentansprüche**

1. Verfahren zum Herstellen eines Formteils durch T-Düsenformen einer Mischung, umfassend ein polyolefinisches Harz und ein Polyethylenwachs, wobei das Polyethylenwachs eine Dichte von 880 bis 980 (kg/m$^3$), gemessen durch ein Dichtegradientenrohrverfahren gemäß JIS K7112, und ein zahlengemitteltes Molekulargewicht (Mn) von 500 bis 4.000 in Bezug auf Polyethylen, gemessen durch Gelpermeationschromatografie (GPC), aufweist und der durch den folgenden Ausdruck (I) dargestellten Beziehung entspricht:

$$B \leq 0{,}0075 \times K \quad \ldots \quad (I)$$

wobei B ein Verhältnis (in Gew.%) des Gehalts an Komponenten mit einem Molekulargewicht von 20.000 oder mehr hinsichtlich Polyethylen in dem Polyethylenwachs, gemessen durch Gelpermeationschromatografie, ist und K eine Schmelzviskosität (mPa·s) des Polyethylenwachs bei 140°C ist.

2. Verfahren zum Herstellen eines Formteils durch T-Düsenformen gemäß Anspruch 1, worin das Polyethylenwachs ferner die durch den folgenden Ausdruck (II) dargestellte Beziehung erfüllt:

$$A \leq 230 \times K^{(-0{,}537)} \quad \ldots \quad (II)$$

worin A ein Verhältnis (in Gew.%) des Gehalts an Komponenten mit einem Molekulargewicht von 1.000 oder weniger hinsichtlich Polyethylen in dem Polyethylenwachs, gemessen durch Gelpermeationschromatografie, ist und K eine Schmelzviskosität (mPa·s) des Polyethylenwachs bei 140°C ist.

3. Verfahren zur Herstellen eines Formteils durch T-Düsenformen gemäß Anspruch 1 oder 2, wobei das polyolefinische Harz Polyethylen mit einer Dichte von 900 (kg/m$^3$) oder mehr bis weniger als 940 (kg/m$^3$), durch ein Dichtegradientenrohrverfahren gemäß JIS K7112, ist und einen MI von 0,01 bis 100 g/10 min, gemessen bei 190°C unter einer Last von 21,18 N gemäß JIS K7210, aufweist.

4. Verfahren zur Herstellen eines Formteils durch T-Düsenformen gemäß Anspruch 1 oder 2, wobei das polyolefinische Harz Polyethylen mit einer Dichte von 940 bis 980 (kg/m$^3$), gemessen durch ein Dichtegradientenrohrverfahren gemäß JIS K7112, ist und einen MI von 0,01 bis 100 g/10 min, gemessen bei 190°C unter einer Last von 21,18 N gemäß JIS K7210, aufweist und das Polyethylenwachs ein zahlengemitteltes Molekulargewicht (Mn) von 500 bis 3.000 hinsichtlich Polyethylen, gemessen durch Gelpermeationschromatografie (GPC), aufweist.

5. Verfahren zur Herstellen eines Formteils durch T-Düsenformen gemäß Anspruch 1 oder 2, wobei das Polyolefinharz Polyethylen mit einem MI von 0,01 bis 100 g/10 min, gemessen bei 230°C unter einer Last von 21,18 N gemäß JIS K7210, ist und das Polyethylenwachs eine Dichte von 890 bis 950 (kg/m$^3$), gemessen durch ein Dichtegradientenrohrverfahren gemäß JIS K7112, und ein zahlengemitteltes Molekulargewicht (Mn) von 700 bis 4.000 hinsichtlich Polyethylen, gemessen durch Gelpermeationschromatografie (GPC) aufweist.

6. Verfahren zur Herstellen eines Formteils durch T-Düsenformen gemäß Anspruch 1 oder 2, wobei das Polyolefinharz eine Harzmischung umfassend 55 bis 95 Gew.% Polypropylen und 5 bis 45 Gew.% eines olefinischen Elastomers auf Basis von 100 Gew.% des Polypropylens und des olefinischen Elastomers ist und das Polyethylenwachs eine Dichte von 880 bis 920 (kg/m$^3$), gemessen durch Dichtegradientenrohrverfahren gemäß JIS K7112, aufweist.

7. Verfahren zur Herstellen eines Formteils durch T-Düsenformen gemäß Anspruch 1 bis 6, wobei eine Mischung umfassend 0,01 bis 10 Gew.-Teile des Polyethylenwachses pro 100 Gew.-Teilen des polyolefinischen Harzes verwendet wird.

8. Verfahren zum herstellen eines Sekundärformteils durch Vakuumformen unter Verwendung eines Formteils, das durch das Herstellungsverfahren gemäß einem der Ansprüche 1 bis 7 erhalten worden ist.

**Revendications**

1. Processus pour produire un article moulé par moulage en matrice en T d'un mélange comprenant une résine polyoléfinique et une cire de polyéthylène, la cire de polyéthylène ayant une densité de 880 à 980 (kg/$m^3$) telle que mesurée par un procédé à tube à gradient de densité selon JIS K7112 et une masse moléculaire moyenne en nombre (Mn) de 500 à 4 000 en terme de polyéthylène telle que déterminée par chromatographie par perméation de gel (GPC) et satisfaisant à la relation représentée par l'expression suivante (I) :

$$B \leq 0,0075 \times K \quad \ldots \text{(I)}$$

dans laquelle B est un rapport de teneur (% en poids) de composants ayant une masse moléculaire de 20 000 ou plus en terme de polyéthylène dans la cire de polyéthylène telle que déterminée par chromatographie par perméation de gel et K est une viscosité à l'état fondu (mPa·s) de la cire de polyéthylène à 140 °C.

2. Processus pour produire un article moulé par moulage en matrice en T selon la revendication 1, dans lequel la cire de polyéthylène satisfait en outre à la relation représentée par l'expression suivante (II) :

$$A \leq 230 \times K^{(-0,537)} \quad \ldots \text{(II)}$$

dans laquelle A est un rapport de teneur (% en poids) de composants ayant une masse moléculaire de 1 000 ou moins en terme de polyéthylène dans la cire de polyéthylène telle que déterminée par chromatographie par perméation de gel et K est une viscosité à l'état fondu (mPa·s) de la cire de polyéthylène à 140 °C.

3. Processus pour produire un article moulé par moulage en matrice en T selon la revendication 1 ou 2, dans lequel la résine polyoléfinique est un polyéthylène ayant une densité de 900 (kg/$m^3$) ou plus jusqu'à moins de 940 (kg/$m^3$) telle que mesurée par un procédé à tube à gradient de densité selon JIS K7112 et un indice de fluage MI de 0,01 à 100 g/10 minutes tel que mesuré à 190 °C sous une charge de test de 21,18 N selon JIS K7210.

4. Processus pour produire un article moulé par moulage en matrice en T selon la revendication 1 ou 2, dans lequel la résine polyoléfinique est un polyéthylène ayant une densité de 940 à 980 (kg/$m^3$) telle que mesurée par un procédé à tube à gradient de densité selon JIS K7112 et un MI de 0,01 à 100 g/10 minutes tel que mesuré à 190 °C sous une charge de test de 21,18 N selon JIS K7210, et la cire de polyéthylène a une masse moléculaire moyenne en nombre (Mn) de 500 à 3 000 en terme de polyéthylène telle que déterminée par chromatographie par perméation de gel (GPC).

5. Processus pour produire un article moulé par moulage en matrice en T selon la revendication 1 ou 2, dans lequel la résine polyoléfinique est un polypropylène ayant un MI de 0,01 à 100 g/10 minutes tel que mesuré à 230 °C sous une charge de test de 21,18 N selon JIS K7210, et la cire de polyéthylène a une densité de 890 à 950 (kg/$m^3$) telle que mesurée par un procédé à tube à gradient de densité selon JIS K7112 et une masse moléculaire moyenne en nombre (Mn) de 700 à 4 000 en terme de polyéthylène telle que déterminée par chromatographie par perméation de gel (GPC).

6. Processus pour produire un article moulé par moulage en matrice en T selon la revendication 1 ou 2, dans lequel la résine polyoléfinique est un mélange résineux comprenant 55 à 95 % en poids de polypropylène et 5 à 45 % en poids d'un élastomère oléfinique sur base d'un total de 100 % en poids du polypropylène et de l'élastomère oléfinique, et la cire de polyéthylène a une densité de 880 à 920 (kg/$m^3$) telle que mesurée par un procédé à tube à gradient de densité selon JIS K7112.

7. Processus pour produire un article moulé par moulage en matrice en T selon l'une quelconque des revendications 1 à 6, dans lequel un mélange comprenant 0,01 à 10 parties en poids de la cire de polyéthylène par 100 parties en poids de la résine polyoléfinique est utilisé.

8. Processus pour produire un article moulé secondaire par moulage sous vide en utilisant un article moulé obtenu à partir du processus de production selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H05199380492 B
- JP 2003528948 A
- JP H04268307 B
- JP 2004175707 A
- WO 2001027124 A
- WO 2004029062 A
- WO 2004083265 A
- JP H0278687 B
- JP H02167305 B
- JP H0224701 B
- JP H03103407 B
- US 4960878 A
- US 5041584 A
- JP H01501950 B
- JP H01502036 B
- JP H03179005 B
- JP H03179006 B
- JP H03207703 B
- JP H03207704 B
- US P5321106 A
- JP 2004051676 A